(19) Europäisches Patentamt
European Patent Office
Office européen des brevets

(11) Veröffentlichungsnummer: **0 382 111 B1**

(12) # EUROPÄISCHE PATENTSCHRIFT

(45) Veröffentlichungstag der Patentschrift: **08.06.94**

(51) Int. Cl.$^5$: **C09B 62/503**, D06P 1/384

(21) Anmeldenummer: **90102066.9**

(22) Anmeldetag: **02.02.90**

(54) **Kupferkomplex-Formazanverbindungen, Verfahren zu ihrer Herstellung und ihre Verwendung als Farbstoffe.**

(30) Priorität: **06.02.89 DE 3903455**

(43) Veröffentlichungstag der Anmeldung:
**16.08.90 Patentblatt 90/33**

(45) Bekanntmachung des Hinweises auf die Patenterteilung:
**08.06.94 Patentblatt 94/23**

(84) Benannte Vertragsstaaten:
**AT BE CH DE ES FR GB IT LI NL**

(56) Entgegenhaltungen:
**EP-A- 0 280 139**
**WO-A-88/05065**

**Patent Abstracts Of Japan, unexamined applications, C Field, Band 12, nr. 47, 12 February 1988. The Patent Office Japanese Government, Seite 39 C 475. *Kokai-Nr. 62-192 467 (Sumitomo Chem. CO. LTD.).**

(73) Patentinhaber: **HOECHST AKTIENGESELLSCHAFT**

**D-65926 Frankfurt(DE)**

(72) Erfinder: **Schwaiger, Günther, Dr.**
**Johannesallee 41**
**D-6230 Frankfurt am Main 80(DE)**
Erfinder: **Springer, Hartmut, Dr.**
**Am Erdbeerstein 27**
**D-6240 Königstein / Taunus(DE)**

**EP 0 382 111 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung liegt auf dem technischen Gebiet der faserreaktiven Farbstoffe.

Aus der japanischen Patentanmeldungs-Veröffentlichung Sho-62-192467 und der PCT-Patentanmeldungs-Veröffentlichung Nr. WO 88/05065 sind Kupferkomplex-Formazanverbindungen mit faserreaktiven Farbstoffeigenschaften bekannt, die einen 1,3,5-Triazin-2-yl-amino-Rest besitzen, dessen 4- und 6-Stellungen durch Aminogruppierungen substituiert sind. Des weiteren beschreibt die US-Patentschrift 3 758 470 Kupferkomplex-Formazanverbindungen mit Farbstoffeigenschaften, die einen 4-Chlor-1,3,5-triazin-2-yl-amino-Restenthalten, dessen 6-Stellung durch die Cyanamidgruppe substituiert ist.

Mit der vorliegenden Erfindung wurden nunmehr neue Kupferkomplex-Formazanverbindungen gefunden, die der allgemeinen Formel (1)

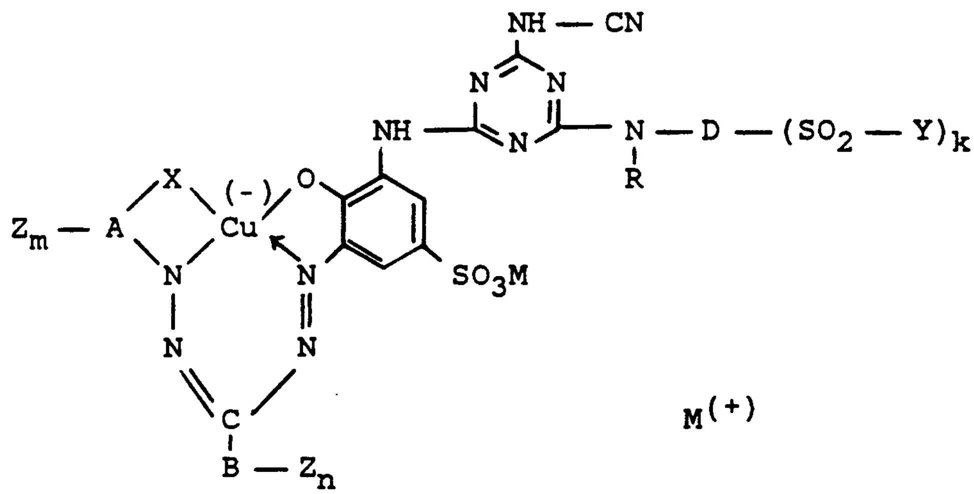

(1)

entsprechen, in welcher bedeuten:

A ist ein Benzol- oder Naphthalinring, bevorzugt ein Benzolring, die beide durch Substituenten aus der Gruppe Halogen, wie Chlor und Brom, Nitro, Alkyl von 1 bis 5 C-Atomen, wie Methyl und Ethyl, Alkoxy von 1 bis 4 C-Atomen, wie Methoxy und Ethoxy, Alkylsulfonyl von 1 bis 4 C-Atomen, wie Methylsulfonyl und Ethylsulfonyl, Phenylsulfonyl, Sulfamoyl, N-Monoalkyl- und N,N-Dialkylsulfamoyl mit jeweils 1 bis 4 C-Atomen im Alkyl substituiert sein können;

B ist eine geradkettige oder verzweigt-kettige Alkylengruppe von 1 bis 8 C-Atomen, bevorzugt von 1 bis 4 C-Atomen, oder eine geradkettige oder verzweigtkettige Alkenylengruppe von 2 bis 8 C-Atomen, bevorzugt von 2 bis 4 C-Atomen, wobei diese Alkylen- und Alkenylengruppen noch durch einen Phenylrest substituiert sein können und dieser Phenylrest durch Substituenten aus der Gruppe Methyl, Ethyl, Methoxy, Ethoxy, Fluor, Brom, Chlor und Sulfamoyl substituiert sein kann, oder ist ein Alkylen-phenylen-Rest mit 1 bis 4 C-Atomen im Alkylenteil oder ein Alkenylen-phenylen-Rest mit 2 bis 4 C-Atomen im Alkenylenteil, wobei der Phenylenrest durch Substituenten aus der Gruppe Methyl, Ethyl, Methoxy, Ethoxy, Fluor, Chlor, Brom und Sulfamoyl substituiert sein kann, oder ist ein Phenylen- oder Naphthylenrest, bevorzugt ein Phenylenrest, die beide durch Substituenten aus der Gruppe Hydroxy, Nitro, Halogen, wie Chlor und Brom, Alkyl von 1 bis 5 C-Atomen, wie Methyl und Ethyl, Alkoxy von 1 bis 4 C-Atomen, wie Methoxy und Ethoxy, und Carbalkoxy mit 1 bis 4 C-Atomen im Alkylrest, wie Carbomethoxy und Carbethoxy, substituiert sein können, oder ist der bivalente Rest des Furans, Thiophens, Pyrrols, Imidazols, Indols, Pyrazols, Pyridins, Pyrimidins, Chinolins und Benzimidazols, oder

-B-Z bedeuten zusammen ein Wasserstoffatom;

Z ist eine wasserlöslich machende Gruppe, wie eine Carboxygruppe und vorzugsweise eine Sulfogruppe, als ein zu den obengenannten Substituenten von A und B zusätzlicher Substituent an A und B, der an ein aromatisches Kohlenstoffatom oder ein aliphatisches Kohlenstoffatom von A oder B oder an ein aliphatisches Kohlenstoffatom eines Substituenten, wie einer Methylgruppe, von A gebunden ist;

k ist die Zahl 1 oder 2, vorzugsweise 1;

m ist die Zahl Null, 1 oder 2 (wobei im Falle m gleich Null die Gruppe Z ein Wasserstoffatom

bedeutet);

n ist die Zahl Null, 1 oder 2 (wobei im Falle n gleich Null die Gruppe Z ein Wasserstoffatom bedeutet);

die Summe von (m + n) ist gleich 1 bis 4, vorzugsweise 1 oder 2, insbesondere 1;

sofern Z im Molekül zwei- oder dreimal enthalten ist, kann es innerhalb der angegebenen Bedeutung verschiedene Bedeutungen besitzen;

X ist ein Sauerstoffatom oder die Carbonyloxygruppe der Formel -CO-O- , wobei die Gruppe X und das N-Atom in ortho-Stellung zueinander an den aromatischen Kern von A gebunden sind;

R ist ein Wasserstoffatom oder eine unsubstituierte oder substituierte Alkylgruppe von 1 bis 4 C-Atomen;

D ist ein Phenylenrest, der substituiert sein kann, oder ein Naphthylenrest, der substituiert sein kann, oder ist ein Alkylenrest von 1 bis 8 C-Atomen, vorzugsweise von 2 bis 6 C-Atomen, insbesondere von 2 bis 4 C-Atomen, oder ist ein Alkylenrest von 2 bis 8 C-Atomen, vorzugsweise von 3 bis 6 C-Atomen, der durch 1 oder mehrere, vorzugsweise 1 oder 2, Heterogruppen, wie Gruppen der Formeln -NH- , $-N(R^1)-$ mit $R^1$ der nachstehend angegebenen Bedeutung, -O- , -S- , $-SO_2-$ , -CO- , $-SO_2-NH-$ , $-NH-SO_2-$ , -CO-NH- oder -NH-CO-unterbrochen und/oder durch 1 oder 2 Substituenten aus der Gruppe Hydroxy, Sulfo, Carboxy, Sulfato, Phosphato und Alkanoyloxy von 2 bis 5 C-Atomen substituiert ist, oder ist ein Rest der allgemeinen Formel (2a), (2b), (2c), (2d), (2e), (2f), (2g) oder (2h)

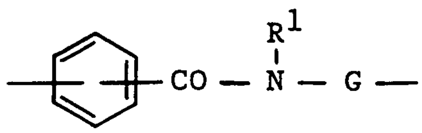

(2a)

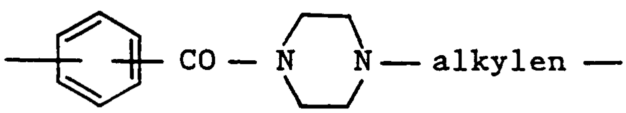

(2b)

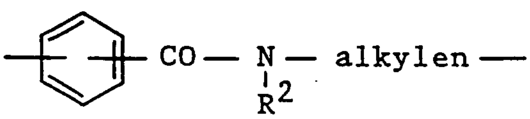

(2c)

— arylen — alkylen — (2d)

— alkylen — arylen — (2e)

— arylen — alkylen — arylen — (2f)

— alkylen — arylen — alkylen — (2g)

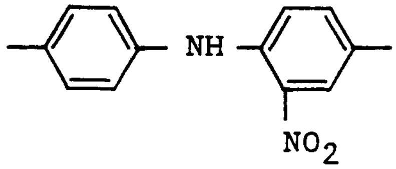

(2h)

in welchen

$R^1$ Wasserstoff oder Alkyl von 1 bis 4 C-Atomen, wie Methyl und Ethyl, ist,

$R^2$ Wasserstoff oder Alkyl von 1 bis 4 C-Atomen, wie Methyl und Ethyl, ist, das durch eine Gruppe der allgemeinen Formel $-SO_2-Y$ mit Y einer der später angegebenen Bedeutungen oder Carboxy,

Sulfato, Methoxy, Ethoxy oder Chlor substituiert sein kann, oder ist Phenyl, das durch 1 oder 2 Substituenten aus der Gruppe Methyl, Methoxy, Ethoxy, Sulfo, Carboxy und Chlor substituiert sein kann,

G ein Phenylrest ist, der durch 1 oder 2 Substituenten aus der Gruppe Chlor, Alkyl von 1 bis 4 C-Atomen, wie Methyl, Alkoxy von 1 bis 4 C-Atomen, wie Methoxy und Ethoxy, Hydroxy, Sulfo und Carboxy substituiert sein kann,

arylen ein Phenylenrest ist, der durch 1 oder 2 Substituenten aus der Gruppe Chlor, Brom, Nitro, Alkoxy von 1 bis 4 C-Atomen, wie Methoxy und Ethoxy, Alkyl von 1 bis 4 C-Atomen, wie Methyl und Ethyl, Carboxy und Sulfo substituiert sein kann, oder ein Naphthylenrest ist, der durch 1 oder 2 Sulfogruppen substituiert sein kann,

alkylen ein Alkylenrest von 1 bis 8 C-Atomen, vorzugsweise von 1 bis 3 C-Atomen, ist oder ein Alkylenrest von 2 bis 8 C-Atomen, vorzugsweise von 3 bis 6 C-Atomen, ist, der durch 1 oder mehrere, vorzugsweise 1 oder 2, Heterogruppen, wie Gruppen der Formeln -NH- , $-N(R^1)-$ mit $R^1$ der nachstehend angegebenen Bedeutung, -O- , -S- , $-SO_2-$ , -CO- , $-SO_2-NH-$ , $-NH-SO_2-$ , -CO-NH- oder -NH-CO- unterbrochen sein kann und/oder durch 1 oder 2 Substituenten aus der Gruppe Hydroxy, Sulfo, Carboxy, Sulfato, Phosphato und Alkanoyloxy von 2 bis 5 C-Atomen substituiert sein kann, und

die Alkylen- und Arylen-Anteile in den Resten der allgemeinen Formeln (2d) bis (2g) jeweils durch eine der obengenannten Heterogruppen voneinander getrennt sein können;

Y ist die Vinylgruppe oder eine Ethylgruppe, die in β-Stellung durch einen alkalisch eliminierbaren Substituenten substituiert ist;

M ist ein Wasserstoffatom oder ein Alkalimetall, wie Natrium, Kalium und Lithium, oder das Äquivalent eines Erdalkalimetalls, wie des Calciums, vorzugsweise ein Wasserstoffatom oder ein Alkalimetall.

Substituenten in einer für R stehenden substituierten Alkylgruppe von 1 bis 4 C-Atomen sind beispielsweise Hydroxy-, Carboxy-, Sulfato-, Phosphato-, Sulfo- und Cyangruppen sowie Alkoxygruppen von 1 bis 4 C-Atomen oder Alkoxyalkoxygruppen mit Alkyl- und Alkylenresten von jeweils 1 bis 4 C-Atomen oder eine Gruppe der allgemeinen Formel $-SO_2-Y$ mit Y einer der obengenannten Bedeutungen.

Substituenten im Phenylenrest D sind beispielsweise Hydroxy, Nitro, Chlor, Brom, Fluor, Alkoxy von 1 bis 4 C-Atomen, wie Methoxy und Ethoxy, Alkyl von 1 bis 4 C-Atomen, wie Methyl und Ethyl, Sulfo, Carboxy, β-Sulfatoethyl-thio, Alkylamino und Dialkylamino mit jeweils 1 bis 4 C-Atomen im Alkylrest, wobei eines oder beide der Alkylgruppen, vorzugsweise hiervon Ethylgruppen, durch Hydroxy, Sulfo, Carboxy, Sulfato, Phosphato, Alkoxy von 1 bis 4 C-Atomen, wie Ethoxy, Alkoxyalkoxy mit jeweils 1 bis 4 C-Atomen, vorzugsweise 2 C-Atomen, im Alkyl- bzw. Alkylenrest, Hydroxy-alkoxy mit 1 bis 4, vorzugsweise 2, C-Atomen im Alkylenrest, Sulfato-alkoxy mit 1 bis 4, vorzugsweise 2, C-Atomen im Alkylenrest und Succinylamido der Formel $-NH-CO-CH_2-CH_2-COOM$ mit M der obengenannten Bedeutung substituiert sein kann; vorzugsweise ist der Phenylenrest D nicht oder durch eine Methyl-, Methoxy- oder Sulfogruppe oder durch eine Gruppe der nachstehend angegebenen allgemeinen Formel (2A) substituiert.

Von den genannten Alkylamino- und Dialkylaminogruppen sind bevorzugt diejenigen entsprechend der allgemeinen Formel (2A)

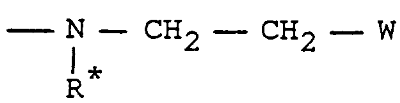

(2A)

in welcher

R* für ein Wasserstoffatom oder eine Methyl- oder Ethylgruppe steht und

W die Sulfo-, Sulfato-, β-Sulfatoethoxy- oder Succinylamido-Gruppe ist.

Ist D ein Naphthylenrest, so ist dieser bevorzugt in 2-Stellung an die Gruppe -N(R)- gebunden und kann durch eine Sulfogruppe substituiert sein.

Bevorzugt ist B der Phenylrest, der gegebenenfalls durch Z und/oder Chlor, Methyl, Methoxy oder Carboxy substituiert sein kann.

Mittels Alkali unter Bildung der Vinylgruppe im Rest Y eliminierbare β-Substituenten des Ethylrestes sind beispielsweise ein Halogenatom, wie Chlor- oder Bromatom, eine Alkanoyloxygruppe von 2 bis 5 C-Atomen, wie Acetyloxygruppe, eine Aroyloxygruppe, wie die Benzoyloxy- oder Sulfobenzoyloxy-Gruppe, eine Arylsulfonyloxygruppe, wie die p-Methyl-phenylsulfonyloxy-Gruppe, eine niedere Dialkylaminogruppe,

wie die Dimethylamino oder Diethylaminogruppe, eine Phosphatogruppe, eine Thiosulfatogruppe und eine Sulfatogruppe. Bevorzugt ist Y die Vinylgruppe oder die β-Chlorethyl-Gruppe und insbesondere die β-Sulfatoethyl-Gruppe.

Ein Rest Y ist somit beispielsweise die Vinylgruppe oder eine β-Chlorethyl- oder β-Bromethyl-Gruppe oder eine β-Alkanoyloxy-ethyl-Gruppe mit einem Alkanoylrest von 2 bis 5 C-Atomen oder eine β-Benzoyloxy-ethyl- oder β-Sulfobenzyloxy-ethyl- oder β-(p-Methyl-phenylsulfonyloxy)-ethyl- oder eine β-Dialkylamino-ethyl-Gruppe mit Alkylresten von 1 bis 4 C-Atomen oder eine β-Phosphatoethyl- oder β-Thiosulfatoethyl- oder β-Sulfatoethyl-Gruppe.

Die Substituenten "Sulfo", "Carboxy", "Phosphato", "Thiosulfato" und "Sulfato" schließen sowohl deren Säureform als auch deren Salzform ein. Demgemäß bedeuten Sulfogruppen Gruppen entsprechend der allgemeinen Formel $-SO_3M$ , Carboxygruppen Gruppen entsprechend der allgemeinen Formel -COOM , Phosphatogruppen Gruppen entsprechend der allgemeinen Formel $-OPO_3M_2$ , Thiosulfatogruppen Gruppen entsprechend der allgemeinen Formel $-S-SO_3M$ und Sulfatogruppen Gruppen entsprechend der allgemeinen Formel $-OSO_3M$ , jeweils mit M der obengenannten Bedeutung.

Die erfindungsgemäßen Verbindungen der allgemeinen Formel (1) können sowohl in saurer Form als auch in Form ihrer Salze, insbesondere der obengenannten Alkali- und Erdalkalimetallsalze, vorliegen. Sie finden, bevorzugt in Form der Alkalimetallsalze, Verwendung zum Färben (einschließlich des Bedruckens) von hydroxygruppen- und/oder carbonamidgruppen-haltigen Materialien, insbesondere Fasermaterialien.

Von den erfindungsgemäßen Kupferkomplex-Formazanverbindungen können diejenigen hervorgehoben werden, die den allgemeinen Formeln (1a) und (1b) entsprechen:

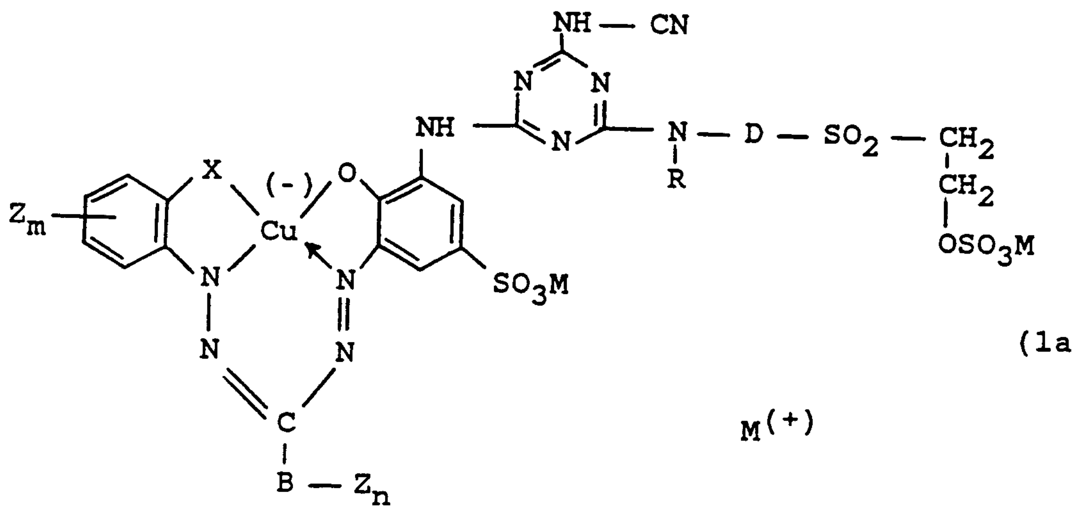

(1a)

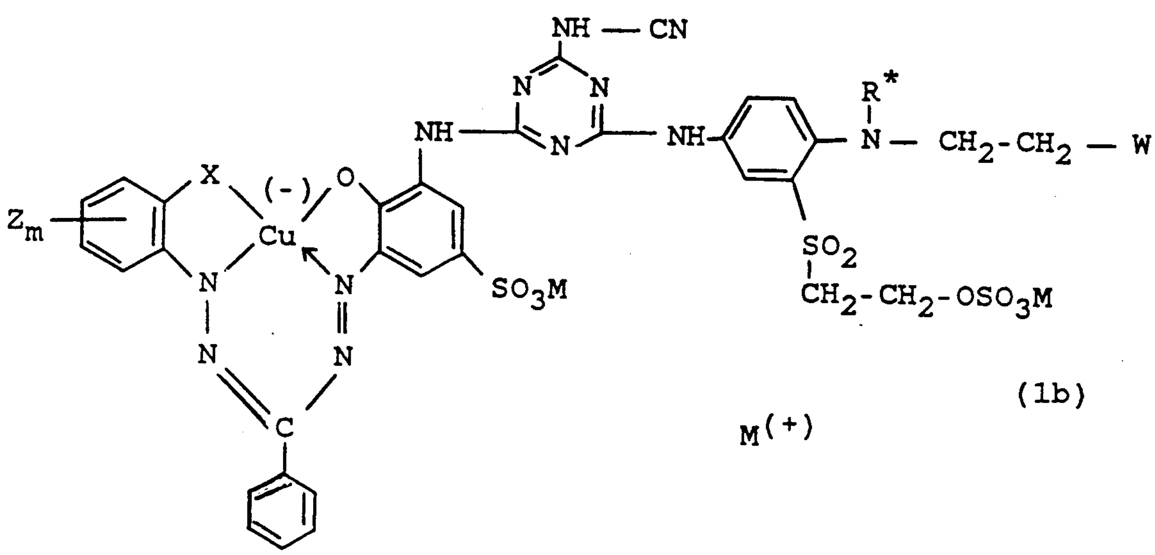

(1b)

in welchen bedeuten:

X ist ein Sauerstoffatom oder bevorzugt die Carbonyloxygruppe;

B ist ein Benzolring, der durch Chlor, Methyl, Methoxy oder Ethoxy substituiert sein kann, bevorzugt durch keine dieser Substituenten substituiert ist;

Z ist eine Sulfogruppe;

m ist die Zahl 1 oder 2, bevorzugt 1;

n ist die Zahl Null oder 1, bevorzugt Null;

die Summe von (m + n) ist 1 oder 2;

R ist ein Wasserstoffatom oder eine Alkylgruppe von 1 bis 4 C-Atomen, wie die Methylgruppe;

D ist der meta- oder para-Phenylen-Rest, bevorzugt meta-Phenylen-Rest;

R* ist ein Wasserstoffatom oder die Methylgruppe;

W ist die Sulfato- oder Sulfogruppe oder die β-Sulfatoethoxy-Gruppe oder die Succinylamido-Gruppe;

M ist ein Wasserstoffatom oder ein Alkalimetall.

Bevorzugt sind hiervon insbesondere diejenigen, die der allgemeinen Formel (1c)

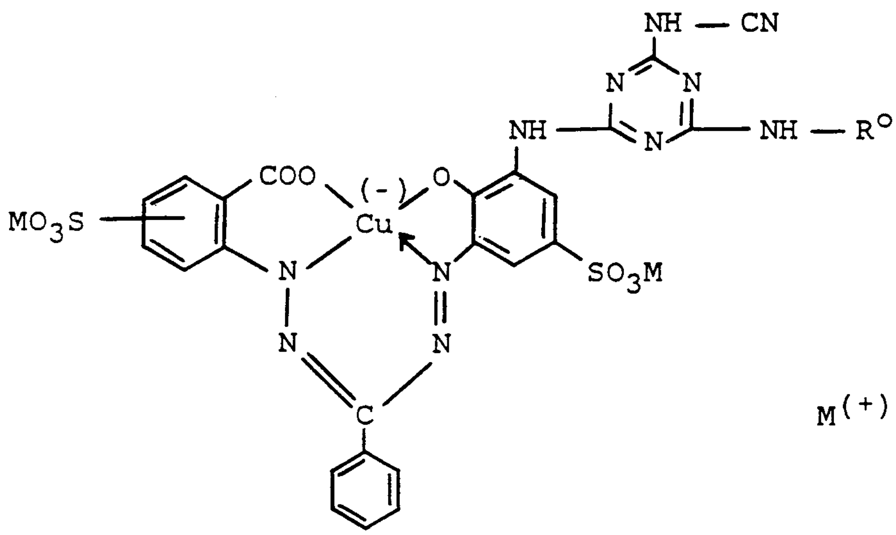

(1c)

entsprechen, in welcher

M ein Wasserstoffatom oder bevorzugt ein Alkalimetall ist,

R° die 4-(β-Sulfatoethylsulfonyl)-phenyl-, die 2-Chlor-5-(β-sulfatoethylsulfonyl)-phenyl-, die 2-Methoxy-5-(β-sulfatoethylsulfonyl)-phenyl-, die 4-Chlor-3-(β-sulfatoethylsulfonyl)-phenyl-, die 4-Methoxy-3-(β-sulfatoethylsulfonyl)-phenyl- oder insbesondere bevorzugt die 3-(β-sulfatoethylsulfonyl)-phenyl-Gruppe bedeutet und

die Sulfogruppe $-SO_3M$ bevorzugt in para-Stellung zur Carbonyloxygruppe steht.

Die vorliegende Erfindung betrifft weiterhin Verfahren zur Herstellung der Kupferkomplex-Formazanverbindungen der allgemeinen Formel (1), die dadurch gekennzeichnet sind, daß man, sofern D ein gegebenenfalls substituierter Phenylen- oder Naphthylenrest oder ein Rest der allgemeinen Formel (2a), (2b), (2c), (2d), (2f) oder (2h) ist, eine Dihalogen-triazinylamino-Kupferformazanverbindung der allgemeinen Formel (3)

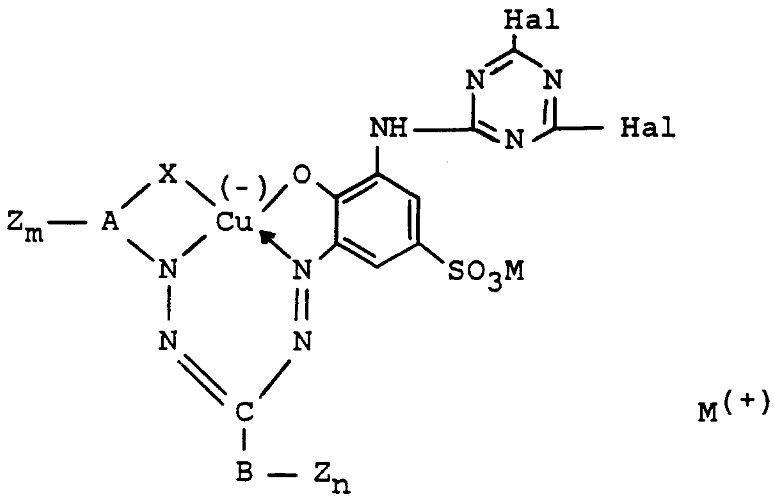

(3)

in welcher Z, m, n, A, B, X und M die obengenannten Bedeutungen haben und Hal für ein Halogenatom, wie Fluoratom oder bevorzugt Chloratom, steht, mit Cyanamid oder dessen Alkalimetallsalz, wie Natriumcyanamid,und mit einer aromatischen Aminoverbindung der allgemeinen Formel (4)

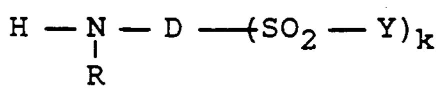

(4)

in welcher R, k und Y die obengenannten Bedeutungen haben und D die eben genannte Bedeutung besitzt, umsetzt, oder daß man eine Verbindung der allgemeinen Formel (5)

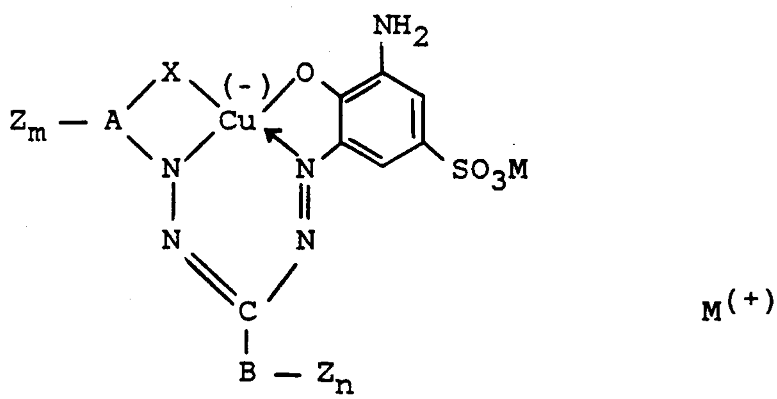

(5)

in welcher Z, m, n, A, B, X und M die obengenannten Bedeutungen haben, mit einer Dihalogentriazinylamino-Verbindung der allgemeinen Formel (6)

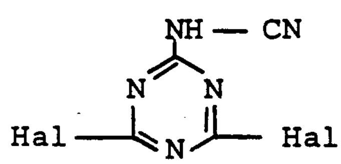

(6)

in welcher Hal die obengenannte Bedeutung besitzt, umsetzt und die so erhaltene Kupferformazanverbindung der allgemeinen Formel (7)

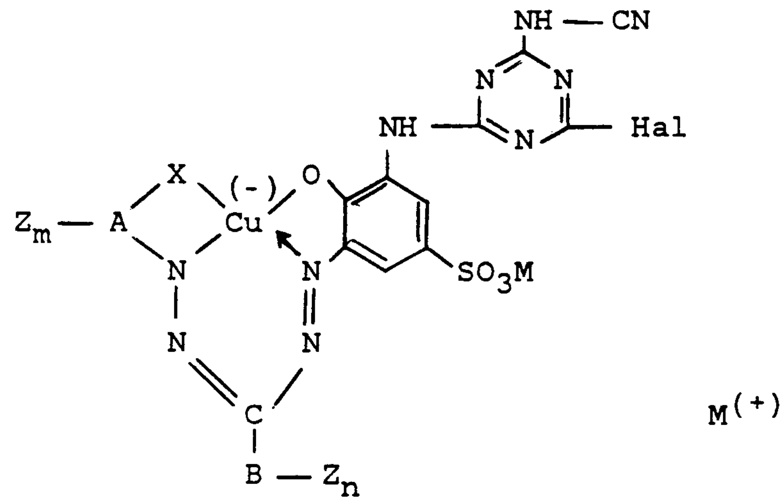

(7)

in welcher Z, m, n, A, B, X, M und Hal die obengenannten Bedeutungen haben, mit einer Aminoverbindung der allgemeinen Formel (4) mit D der eben genannten Definition umsetzt,oder daß man, sofern D eine der für Formel (1) angegebenen Bedeutungen besitzt, eine Verbindung der allgemeinen Formel (5) mit einer Verbindung der allgemeinen Formel (6A)

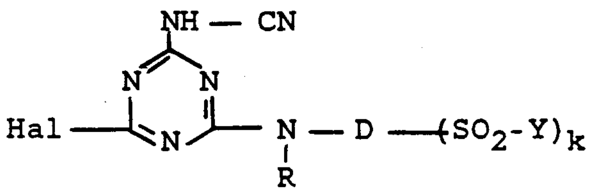

(6A)

in welcher Hal, R, D, Y und k die für Formel (1) genannten Bedeutungen haben, umsetzt.

Die Amino-Kupferformazan-Ausgangsverbindungen der allgemeinen Formel (5) und deren Dihalogen-triazinyl-Derivate der allgemeinen Formel (3) sind bekannt, beispielsweise aus der Europäischen Patentanmeldungs-Veröffentlichung Nr. 0 280 139 A und den darin auf Seite 10 angegebenen anderen Literaturstellen und können analog den dort angegebenen Angaben hergestellt werden.

Die erfindungsgemäßen Umsetzungen erfolgen in der Regel in wäßrigem Medium bei einem pH-Wert zwischen 2 und 12, vorzugsweise zwischen 3 und 10, und bei einer Reaktionstemperatur zwischen 0 °C und 80 °C. Bevorzugt führt man die erfindungsgemäße Umsetzung der Verbindungen der allgemeinen Formel (3) zuerst mit Cyanamid, vorzugsweise in Form dessen Natriumsalzes, als Reaktionspartner mit der geringeren Reaktivität durch und setzt anschließend die gebildete Verbindung (7) mit dem Amin (4) um.

Die Kondensationsreaktion des Dihalogen-triazinyl-amino-Kupferformazans der allgemeinen Formel (3) mit dem Cyanamid bzw. dessen Alkalimetallsalz kann gemäß den Angaben der US-PS 3 758 470 erfolgen, bspw. im Falle von Hal gleich Chlor bei einem pH-Wert von 7 bis 12, insbesondere 9 bis 11, und bei einer Temperatur zwischen 0 und 60 °C, bevorzugt zwischen 40 und 50 °C. Die zweite Kondensationsreaktion, nämlich die des Monohalogen-cyanamido-triazinylamino-Kupferformazans der allgemeinen Formel (7) mit dem Amin der Formel (4), erfolgt bevorzugt bei einem pH-Wert von 2 bis 5, insbesondere 3 bis 4, und bei einer Temperatur zwischen 40 und 80 °C, bevorzugt zwischen 60 und 70 °C.

Die Umsetzung des Trihalogen-s-triazins mit Cyanamid bzw. dessen Alkalisalz kann ebenso nach den Angaben der US-Patentschrift 3 758 470 erfolgen; beispielsweise führt man die Umsetzung im Falle des Cyanurchlorids bei einem pH-Wert von 9 bis 10 und bei einer Temperatur zwischen -5 °C und +10 °C durch. Die Kondensationsreaktion zwischen dem Dihalogen-cyanamido-s-triazin der allgemeinen Formel (6) und der Aminoverbindung der allgemeinen Formel (4) kann bei einer Temperatur zwischen 10 und 80 °C, bevorzugt zwischen 20 und 60 °C, und bei einem pH-Wert zwischen 2 und 8, bevorzugt zwischen 4 und 5, im Falle von D gleich Alkylen oder einem Rest der Formel (2e) oder (2g), bevorzugt bei einem pH-Wert zwischen 6 und 8, durchgeführt werden. Die Umsetzung zwischen der Verbindung der allgemeinen Formel

(6A) und der Verbindung der allgemeinen Formel (5) erfolgt bei einer Temperatur zwischen 40 und 80 °C, bevorzugt zwischen 50 und 60 °C, und bei einem pH-Wert zwischen 2 und 6, bevorzugt zwischen 3 und 5.

Ausgangsverbindungen, die bevorzugt zur Herstellung der Ausgangs-Kupferformazan-Verbindungen der allgemeinen Formel (5) eingesetzt werden, sind:
Arylamine mit der Arylkomponente A, die zunächst in Arylhydrazine und anschließend mit einer Aldehydkomponente in deren Arylhydrazon übergeführt werden, beispielsweise 2-Amino-phenol, 4-Methyl-2-amino-phenol, 5-Methyl-2-amino-phenol, 4-Sulfo-2-amino-phenol, 5-Sulfo-2-amino-phenol, 4-Sulfo-6-carboxy-2-amino-phenol, 4-Methoxy-2-amino-phenol, 5-Methylsulfonyl-2-amino-phenol, 4-(N-Methyl-sulfamoyl)-2-amino-phenol, 4-(N,N-Dimethyl-sulfamoyl)-2-amino-phenol, 5-Nitro-2-amino-phenol, 4-Brom-2-amino-phenol, 4,6-Disulfo-2-amino-phenol, 6-Nitro-4-sulfo-2-amino-phenol, 4-Nitro-6-sulfo-2-amino-phenol, 4-Acetylamino-6-sulfo-2-amino-phenol, 4-Chlor-6-sulfo-2-amino-phenol, 6-Chlor-4-sulfo-2-amino-phenol, 4-Methylsulfonyl-2-amino-phenol, 4-Butylsulfonyl-2-amino-phenol, 4-Ethylsulfonyl-2-amino-phenol, 4-Sulfamoyl-2-amino-phenol, 1-Amino-2-hydroxy-naphthalin-4,6-disulfonsäure, 1-Amino-2-hydroxy-6-nitro-naphthalin-4-sulfonsäure, 1-Amino-2-hydroxy-6-chlor-naphthalin-4-sulfonsäure, 4-Methyl-6-sulfo-2-amino-phenol, 2-Amino-benzoesäure, 4-Sulfo-2-amino-benzoesäure, 5-Sulfo-2-amino-benzoesäure, 5-Nitro-2-amino-benzoesäure, 4-Chlor-2-amino-benzoesäure, 5-Chlor-2-amino benzoesäure, 4-Methoxy-2-amino-benzoesäure und 2,5-Dicarboxy-anilin, bevorzugt hiervon 4-Sulfo-2-amino-phenol, 5-Sulfo-2-amino-phenol, 5-Sulfo-2-amino-benzoesäure und insbesondere 4-Sulfo-2-amino-benzoesäure.

Aldehydkomponenten entsprechend der allgemeinen Formel $Z_n$-B-CHO sind beispielsweise Benzaldehyd, 2-Methyl-benzaldehyd, 3-Methyl-benzaldehyd, 4-Methyl-benzaldehyd, 3-Sulfo-4-methyl-benzaldehyd, 2-Methoxy-benzaldehyd, 3-Methoxybenzaldehyd, 4-Methoxy-benzaldehyd, 4-Methoxy-3-chlor-benzaldehyd, 2-Nitro-benzaldehyd, 3-Nitro-benzaldehyd, 2-Hydroxy-benzaldehyd, 2-Chlor-benzaldehyd, 4-Chlor-benzaldehyd, 2,4-Dichlor-benzaldehyd, 5-Sulfo-2-chlor-benzaldehyd, 2-Sulfo-benzaldehyd, 3-Sulfo-benzaldehyd, 4-Sulfo-benzaldehyd, 2,4-Disulfo-benzaldehyd, 2-Acetylamino-benzaldehyd, 4-Acetylamino-benzaldehyd, 3-Aminobenzaldehyd, 2-Sulfo-4-nitro-benzaldehyd, 2-Nitro-3-methyl-benzaldehyd, 6-Nitro-3-methyl-benzaldehyd, 2-Chlor-6-nitro-benzaldehyd, 1-Naphthaldehyd, 2-Naphthaldehyd, Furan-2-aldehyd, Thiophen-2-aldehyd, Pyrrol-2-aldehyd, Imidazol-2-aldehyd, Pyrazol-5-aldehyd, Pyridin-2-aldehyd, Pyridin-3-aldehyd, Pyridin-4-aldehyd, Pyrimidin-5-aldehyd, Chinolin-4-aldehyd, Benzimidazol-2-aldehyd, Acetaldehyd, Propionaldehyd, n-Butyraldehyd, Oenanthaldehyd, Acrylaldehyd, Crotonaldehyd, Phenacetaldehyd und Zimtaldehyd, hiervon bevorzugt Benzaldehyd.

Ausgangsamine entsprechend der allgemeinen Formel (4) sind ebenfalls zahlreich aus der Literatur, insbesondere Patentliteratur, bekannt, u. a. aus der Europäischen Patentanmeldungs-Veröffentlichung Nr. 0 280 139 und der anfangs genannten japanischen Patentanmeldungs-Veröffentlichung Sho-62-192 467. Solche Aminoverbindungen sind insbesondere solche, die den allgemeinen Formeln (4a) und (4b)

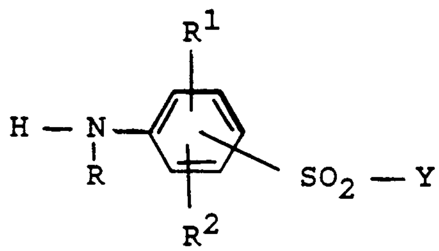

(4a)

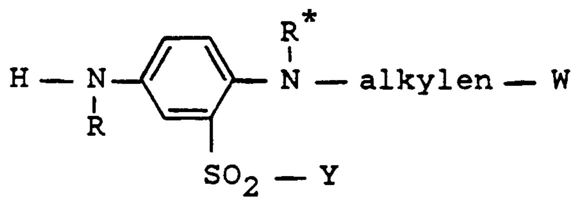

(4b)

entsprechen, worin bedeuten:

R hat in Formel (4a) eine der obengenannten Bedeutungen und ist bevorzugt ein Wasserstoffatom und stellt in Formel (4b) ein Wasserstoffatom oder eine Alkylgruppe von 1 bis 4 C-Atomen, wie Ethyl- und insbesondere Methylgruppe, dar;

$R^1$ ist ein Wasserstoffatom oder ein Chlor- oder Bromatom oder eine Nitrogruppe oder eine

Alkylgruppe von 1 bis 4 C-Atomen, wie die Ethyl- und inbesondere Methylgruppe, oder eine Alkoxygruppe von 1 bis 4 C-Atomen, wie die Ethoxy- oder Methoxygruppe, oder eine Carboxy- oder Sulfogruppe;

$R^2$ ist ein Wasserstoffatom oder ein Chloratom oder eine Alkylgruppe von 1 bis 4 C-Atomen, wie die Ethyl- und insbesondere Methylgruppe, eine Alkoxygruppe von 1 bis 4 C-Atomen, wie die Ethoxy- oder Methoxygruppe, oder eine Sulfogruppe;

R* ist ein Wasserstoffatom oder eine Alkylgruppe von 1 bis 4 C-Atomen, wie die Ethyl- oder Methylgruppe;

alkylen ist eine Alkylengruppe von 2 bis 4 C-Atomen, bevorzugt die Ethylengruppe;

W ist die Sulfo-, Sulfato-, β-Sulfatoethoxy- oder Succinylamido-Gruppe.

Aminoverbindungen entsprechend der allgemeinen Formel (4) sind beispielsweise 2-(β-Sulfatoethylsulfonyl)-anilin, 3-(β-Sulfatoethylsulfonyl)-anilin, 4-(β-Sulfatoethylsulfonyl)-anilin, 4-(β-Thiosulfatoethylsulfonyl)-anilin, 4-(β-Phosphatoethylsulfonyl)-anilin, 3-(β-Thiosulfatoethylsulfonyl)-anilin, 3-(β-Phosphatoethylsulfonyl)-anilin, 4-(β-Chlorethylsulfonyl)-anilin, 4-Vinylsulfonyl-anilin, 3-Vinylsulfonyl-anilin, 4-Methyl-3-(β-sulfatoethylsulfonyl)-anilin, 2,5-Dimethoxy-4-(β-sulfatoethylsulfonyl)-anilin, 2-Methoxy-4-(β-sulfatoethylsulfonyl)-anilin, 2-Chlor-4-(β-sulfatoethylsulfonyl)-anilin, 2-Methoxy-5-(β-sulfatoethylsulfonyl)-anilin, 8-(β-Sulfatoethylsulfonyl)-2-amino-naphthalin, 8-(β-Sulfatoethylsulfonyl)-6-sulfo-2-amino-naphthalin, 2,5-Dimethoxy-4-vinylsulfonyl-anilin, 2-Methoxy-5-methyl-4-(β-sulfatoethylsulfonyl)-anilin, 4-(β-Sulfatoethylsulfonyl)-2-amino-naphthalin, 5-(β-Sulfatoethylsulfonyl)-2-amino-naphthalin, 6-(β-Sulfatoethylsulfonyl)-2-amino-naphthalin, 7-(β-Sulfatoethylsulfonyl)-2-amino-naphthalin, 2-Brom-4-(β-sulfatoethylsulfonyl)-anilin, 6-(β-Sulfatoethylsulfonyl)-8-sulfo-2-amino-naphthalin, 8-(β-Phosphatoethylsulfonyl)-6-sulfo-2-amino-naphthalin, 6-Sulfo-8-vinylsulfonyl-2-amino-naphthalin, 2-Methoxy-5-methyl-4-(β-chlorethylsulfonyl)-anilin, 2-Nitro-4-(β-sulfatoethylsulfonyl)-anilin, 2-Sulfo-4-(β-sulfatoethylsulfonyl)-anilin, 2-Sulfo-5-(β-sulfatoethylsulfonyl)-anilin, 2-Methoxy-5-chlor-4-(β-sulfatoethylsulfonyl)-anilin, 2-Methoxy-5-chlor-4-vinylsulfonyl-anilin, 2-Ethoxy-5-chlor-4-(β-sulfatoethylsulfonyl)-anilin, 6-(β-Sulfatoethylsulfonyl)-1-sulfo-2-amino-naphthalin, 5-Chlor-2-(β-sulfatoethylsulfonyl)-anilin, 5-Sulfo-2-(β-sulfatoethylsulfonyl)-anilin, 5-Chlor-2-(β-thiosulfatoethylsulfonyl)-anilin, 5-Sulfo-2-(β-thiosulfatoethylsulfonyl)-anilin, 2-(β-Phosphatoethylsulfonyl)-anilin, 5-Chlor-2-(β-phosphatoethylsulfonyl)-anilin, 5-Sulfo-2-(β-phosphatoethylsulfonyl)-anilin, 5-Chlor-2-vinylsulfonyl-anilin, 5-Sulfo-2-vinylsulfonyl-anilin, 2-(β-Chlorethylsulfonyl)-anilin, 5-Chlor-2-(β-chlorethylsulfonyl)-anilin, 5-Sulfo-2-(β-chlorethylsulfonyl)-anilin, 6,8-Di-(β-sulfatoethylsulfonyl)-2-amino-naphthalin, 2,6-Dichlor-4-(β-sulfatoethylsulfonyl)-anilin, 2,4-Disulfo-5-vinyl-sulfonylanilin, 2-Hydroxy-5-(β-sulfatoethylsulfonyl)-anilin, 2-Hydroxy-4-(β-sulfatoethylsulfonyl)-anilin, 3-Sulfo-2-hydroxy-5-(β-sulfatoethylsulfonyl)-anilin, 2-Carboxy-5-(β-sulfatoethylsulfonyl)-anilin, 2-Chlor-5-(β-sulfatoethylsulfonyl)-anilin, 4-Chlor-3-(β-sulfatoethylsulfonyl)-anilin, 4-Sulfo-3-(β-sulfatoethylsulfonyl)-anilin, 3,4-Di-(β-sulfatoethylsulfonyl)-anilin, 2,5-Di-(β-sulfatoethylsulfonyl)-anilin, 2,4-Di-(β-sulfatoethylsulfonyl)-anilin, 3-(β-Sulfatoethylsulfonyl)-4-N-(β-sulfatoethyl)-amino-anilin, 3-(β-Thiosulfatoethylsulfonyl)-4-N-(β-thiosulfatoethyl)-amino-anilin, 3-(β-Phosphatoethylsulfonyl)-4-N-(β-phosphatoethyl)-amino-anilin, 3-(β-Sulfatoethylsulfonyl)-4-N-(γ-sulfato-n-propyl)-amino-anilin, 3-(β-Sulfatoethylsulfonyl)-N-(ω-sulfato-n-hexyl)-amino-anilin, 3-(β-Sulfatoethylsulfonyl)-4-(β-sulfatoethyl)-thio-anilin, 3-(β-Sulfatoethylsulfonyl)-N-(β-sulfoethyl)-amino-anilin, 3-(β-Sulfatoethylsulfonyl)-4-[N-methyl-N-(β-sulfoethyl)]-amino-anilin, 3-(β-Sulfatoethylsulfonyl)-4-[N-methyl-N-(β-sulfatoethyl)]-amino-anilin, 3-(β-Sulfatoethylsulfonyl)-4-[β-(β′-sulfato-ethoxy)-ethyl]-amino-anilin, 3-(β-Sulfatoethylsulfonyl)-4-N-(α,β-disulfato-n-propyl)-amino-anilin, 3-(β-Sulfatoethylsulfonyl)-4-N-(carboxymethyl)-amino-anilin, 3-(β-Sulfatoethylsulfonyl)-4-N-(β-carboxyethyl)-amino-anilin, 3-(β-Sulfatoethylsulfonyl)-4-N-[β-(β′-sulfatoethyl-amino)-ethyl]-amino-anilin, 3-(β-Sulfatoethylsulfonyl)-4-N-{β-[N′-methyl-N′-(β′-sulfatoethyl)-amino]-ethyl}-amino-anilin, 3-(β-Sulfatoethylsulfonyl)-4-N-[β-(β′-carboxy-propionylamido)-ethyl]-amino-anilin, 3-(β-Sulfatoethylsulfonyl)-4-N-[β-(sulfo-acetamido)-ethyl]-amino-anilin und 3-(β-Sulfatoethylsulfonyl)-4-N-[β-(4′-sulfo-phenyl)-ethyl]-amino-anilin, des weiteren 4-[N-(3′-β-Sulfatoethylsulfonyl-phenyl)-carbamoyl]-anilin, 3-[N-(4′-β-Sulfatoethylsulfonyl-phenyl)-carbamoyl]-anilin, 3-[N-(3′-β-Sulfatoethylsulfonyl-phenyl)-carbamoyl]-anilin, N-Ethyl-4-[N′-(3′-vinylsulfonyl-phenyl)-carbamoyl]-anilin, N-Methyl-4-[N′-(3′-β-sulfatoethylsulfonyl-phenyl)-carbamoyl]-anilin, 4-[N-Ethyl-N-(4′-β-sulfatoethylsulfonyl-phenyl)-carbamoyl]-anilin, 4-[N-(6′-Sulfo-8′-β-sulfatoethylsulfonyl-naphth-2′-yl)-carbamoyl]-anilin, 3-[(β-Sulfatoethylsulfonyl)-methyl]-anilin, 4-Sulfo-3-[(β-Sulfatoethylsulfonyl)-methyl]-anilin, 4-[(β-Sulfatoethylsulfonyl)-methyl]-anilin, 3-[β-(β′-Chlorethylsulfonyl)-ethyl]-carbamoyl-anilin, 3-[β-(β′-Chlorethylsulfonyl)-ethyl]-carbamoyl-6-chlor-anilin, 3-[β-(β′-Chlorethylsulfonyl)-ethyl]-carbamoyl-6-methyl-anilin, 3-[β-(β′-Chlorethylsulfonyl)-ethyl]-carbamoyl-6-methoxy-anilin, 3-{β-[β′-(β″-Chlorethylsulfonyl)-ethoxy]-ethyl}-carbamoyl-anilin, 3-[γ-(β′-Chlorethylsulfonyl)-propyl]-carbamoyl-anilin, 3-Bis-[β-(β′-chlorethylsulfonyl)-ethyl]-carbamoyl-anilin, 3-Bis-[γ-(β′-chlorethylsulfonyl)-propyl]-carbamoyl-anilin, N-Ethyl-3-[N′-β-(β′-chlorethylsulfonyl)-ethyl]-carbamoyl-anilin, N-Isopropyl-3-[N′-β-(β′-chlorethylsulfonyl)-ethyl]-carbamoyl-anilin, N-Isopropyl-3-[N′-γ-(β′-chlorethylsulfonyl)-propyl]-carbamoyl-anilin, 4-[β-(β′-Chlorethylsulfonyl)-ethyl]-carbamoyl-anilin, 4-{β-[β′-(β″-Chlorethlsulfonyl)-ethoxy]-ethyl}-carbamoyl-anilin, 4-[γ-(β′-Chlorethylsulfonyl)-propyl]-car-

bamoyl-anilin, 4-Bis-[β-(β′-chlorethylsulfonyl)-ethyl]-carbamoyl-anilin, 4-Bis-[γ-(β′-chlorethylsulfonyl)-propyl]-carbamoyl-anilin, N-Ethyl-4-[β-(β′-chlorethylsulfonyl)-ethyl]-carbamoyl-anilin, N-Isopropyl-4-[γ-(β′-chlorethylsulfonyl)-propyl]-carbamoyl-anilin, 4-[β-(Vinylsulfonyl)-ethyl]-carbamoyl-anilin, 4-Bis-[β-(vinylsulfonyl)-ethyl]-carbamoyl-anilin, 4-[δ-(β′-Chlorethylsulfonyl)-butyl]-carbamoyl-anilin, 2-Chlor-5-bis-[β-(β′-chlorethylsulfonyl)-ethyl]-carbamoyl-anilin, 2-Methyl-5-bis-[β-(β′-chlorethylsulfonyl)-ethyl]-carbamoyl-anilin, 2-Methoxy-5-bis-[γ-(β′-chlorethylsulfonyl)-propyl]-carbamoyl-anilin, 3-[δ-(β′-Chlorethylsulfonyl)-butyl]-carbamoyl-anilin, 3-{β-[β′-(β″-Chlorethylsulfonyl)-ethoxy]-ethyl}-carbamoyl-anilin, 2-Hydroxy-5-[β-(β′-chlorethylsulfonyl)-ethyl]-carbamoyl-anilin und 2-Methoxy-5-bis-[β-(β′-chlorethylsulfonyl)-ethyl]-carbamoyl-anilin, 2-Sulfo-5-[β-(β′-Chlorethylsulfonyl)-ethyl]-carbamoyl-anilin und 2-Sulfo-5-[β-(β′-Sulfatoethylsulfonyl)-ethyl]-carbamoyl-anilin sowie die entsprechenden Sulfatoderivate dieser letztgenannten Verbindungen, in welchen die β-Chlorethylsulfonyl-Gruppe durch die β-Sulfatoethylsulfonyl-Gruppe ersetzt ist, und des weiteren die Vinylsulfonyl-Derivate dieser letztgenannten Verbindungen, in welchen die β-Chlorethylsulfonyl-Gruppe durch die Vinylsulfonylgruppe ersetzt ist, weiterhin 1-(3-Amino-4-methoxy-benzoyl)-N′-(γ-vinylsulfonyl)-propyl)-piperazin, 2-Methoxy-5-[N,N-bis-(β-vinylsulfonyl-ethyl)-carbamoyl]-anilin, 1-N-(3′-Amino-4′-methyl-benzoyl)-4-N′-(β-vinylsulfonyl)-ethyl-piperazin, 2-Sulfo-5-bis-[β-(β′-sulfatoethylsulfonyl)-ethyl]-carbamoyl-anilin, 2-Methoxy-5-bis-[β-(vinylsulfonyl)-ethyl]-carbamoyl-anilin, 2-Methoxy-5-[β-(vinylsulfonyl)-ethyl]-carbamoyl-anilin, 1-N-(4′-Amino-3′-sulfo-benzoyl)-4-N′-γ-(vinylsulfonyl)-propyl-piperazin, 2-Sulfo-5-[β-(β′-vinylsulfonyl-ethyl)-amino-ethyl]-carbamoyl-anilin, 2-Methyl-5-[β-(β′-sulfatoethylsulfonyl)-ethyl]-carbamoyl-anilin, 2-Sulfo-4-bis-[β-(β′-chlorethylsulfonyl)-ethyl]-carbamoyl-anilin, 1-N-(4′-Amino-3′-sulfo-benzoyl)-4-N′-β-(vinylsulfonyl)-ethyl-piperazin, 2-Sulfo-4-{[β-(β′-vinylsulfonyl-ethyl)-amino]-ethyl}-carbamoyl-anilin, 3,5-Bis-[(β-vinylsulfonyl-ethyl)-carbamoyl]-anilin und 2-Sulfo-4-[β-(β′-vinylsulfonyl-ethoxy)-ethyl]-carbamoyl-anilin, hiervon insbesondere bevorzugt 3-[β-(β′-Sulfatoethylsulfonyl)-ethyl]-carbamoyl-anilin, 4-[β-(β′-Sulfatoethylsulfonyl)-ethyl]-carbamoyl-anilin, 3-[γ-(β′-Sulfatoethylsulfonyl)-propyl]-carbamoyl-anilin und 4-[γ-(β′-Sulfatoethylsulfonyl)-propyl]-carbamoyl-anilin, weiterhin β-[4-(β′-Sulfatoethylsulfonyl)-phenyl]-ethylamin, β-[2-Sulfo-4-(β′-sulfatoethylsulfonyl)-phenyl]-ethylamin, β-(β′-Chlorethylsulfonyl)-ethylamin, β-(β′-Sulfatoethylsulfonyl)-ethylamin, β-(Vinylsulfonyl)-ethylamin, γ-(β′-Chlorethylsulfonyl)-propylamin, γ-(β′-Sulfatoethylsulfonyl)-propylamin, γ-(β′-Bromethylsulfonyl)-propylamin, γ-(Vinylsulfonyl)-propylamin, 1-Methyl-1-(β-sulfatoethylsulfonyl)-1-ethylamin, δ-(β′-Sulfatoethylsulfonyl)-butylamin, 2-Methyl-2-(β-chlorethylsulfonyl)-1-propylamin, ω-(β′-Chlorethylsulfonyl)-pentylamin, β-(β′-Chlorethylsulfonyl)-n-hexylamin, N-Methyl-N-[β-(β′-chlorethylsulfonyl)-ethyl]-amin, N-Ethyl-N-[β-(β′-chlorethylsulfonyl)-ethyl]-amin, N-n-propyl-N-[β-(β′-chlorethylsulfonyl)-ethyl]-amin, N-n-Butyl-N-[β-(β′-chlorethylsulfonyl)-ethyl]-amin, N-Carboxymethyl-N-[β-(β′-bromethylsulfonyl)-ethyl]-amin, N-Sulfatomethyl-N-[β-(β′-chlorethylsulfonyl)-ethyl]-amin, N-(β-Carboxyethyl)-N-[γ′-(β″-chlorethylsulfonyl)-propyl]-amin, N-(β-Sulfatoethyl)-N-[γ′-(β″-chlorethylsulfonyl)-propyl]-amin, N-(β-Sulfatoethyl)-N-[δ′-(β″-chlorethylsulfonyl)-butyl]-amin, N-(β-Ethoxyethyl)-N-[δ′-(β″-chlorethylsulfonyl)-butyl]-amin, N-(γ-Chlorpropyl)-N-[β′-(β″-chlorethylsulfonyl)-ethyl]-amin, N-Phenyl-N-[β-(β′-chlorethylsulfonyl)-ethyl]-amin, N-(4-Chlorphenyl)-N-[β-(β′-chlorethylsulfonyl)-ethyl]-amin, N-(2-Methylphenyl)-N-[β-(β′-chlorethylsulfonyl)-ethyl]-amin, N-(4-Methoxyphenyl)-N-[β-(β′-chlorethylsulfonyl)-ethyl]-amin, N-(3-Sulfophenyl)-N-[β-(β′-chlorethylsulfonyl)-ethyl]-amin, N-(4-Sulfophenyl)-N-[β-(β′-chlorethylsulfonyl)-ethyl]-amin, Bis-[β-(β′-chlorethylsulfonyl)-ethyl]-amin, Bis-[β-(β′-bromethylsulfonyl)-ethyl]-amin, Bis-[γ-(β′-chlorethylsulfonyl)-propyl]-amin, Bis-[δ-(β′-chlorethylsulfonyl)-butyl]-amin, Bis-(β-vinylsulfonyl-ethyl)-amin, N-(β-Cyanoethyl)-N-[γ′-(β″-chlorethylsulfonyl)-propyl]-amin, β-[β′-(β″-Chlorethylsulfonyl)-ethylamino]-ethylamin, β-[β′-(β″-Sulfatoethylsulfonyl)-ethylamino]-ethylamin, β-[β′-(β″-Chlorethylsulfonyl)-ethoxy]-ethylamin, β-[β′-(β″-Sulfatoethylsulfonyl)-ethoxy]-ethylamin, 4-[β-(β′-Chlorethylsulfonyl)-ethyl]-piperazin, 4-[γ-(β′-Chlorethylsulfonyl)-propyl]-piperazin, 4-[β-(β′-Sulfatoethylsulfonyl)-ethyl]-piperazin, 4-[γ-(β′-Sulfatoethylsulfonyl)-propyl]-piperazin, 4-{N-[β-(4′-β′-Sulfatoethylsulfonyl-phenyl)-ethyl]-amidocarbonyl-methoxy}-anilin, 4-{N-[3′- oder -4′-(β-Sulfatoethylsulfonyl)-phenyl]-amidocarbonyl-methoxy}-anilin, 4-[γ-(β′-Sulfatoethylsulfonyl)-propoxy]-anilin, 2,5-Bis-[(β-sulfatoethylsulfonyl)-methyl]-anilin, 3- oder 4-{N-[γ-(β′-Sulfatoethylsulfonyl)-propyl-amidocarbonyl]}-anilin, 3,5-Bis-{N-[γ-(β′-sulfatoethylsulfonyl)-propyl-amidocarbonyl]}-anilin, 3-Sulfo-4-{[N-γ-(β′-sulfatoethylsulfonyl)-propylamidocarbonyl]-methoxy}-anilin und 4-{[N-γ-(β′-Sulfatoethylsulfonyl)-propyl-amidocarbonyl]-methoxy}-anilin.

Die Abscheidung der erfindungsgemäß hergestellten Kupferkomplex-Formazanverbindungen der allgemeinen Formel (1) aus ihren Syntheseansätzen erfolgt nach allgemein bekannten Methoden entweder durch Ausfällen aus dem Reaktionsmedium mittels einem Elektrolytsalz, wie beispielsweise Natriumchlorid oder Kaliumchlorid, oder durch Eindampfen der Reaktionslösung, beispielsweise durch Sprühtrocknung, wobei dieser Reaktionslösung eine Puffersubstanz und/oder ein Lösungsvermittler zugefügt werden kann. Die neuen Verbindungen (1) haben faserreaktive Eigenschaften und besitzen sehr gute Farbstoffeigenschaften. Sie können deshalb zum Färben von hydroxy- und/oder carbonamidgruppenhaltigem Material, beispielsweise in Form von Flächengebilden, wie Folien und Papier, wie auch Leder, oder in der Masse, wie Polyamid und Polyurethan, insbesondere jedoch von Materialien in Faserform, verwendet werden. Ebenso können die

bei der Synthese der erfindungsgemäßen Verbindungen anfallende Lösungen, gegebenenfalls nach Zusatz einer Puffersubstanz und/oder eines Lösungsvermittlers und gegebenenfalls nach Konzentrierung der Lösung direkt als Flüssigpräparation der färberischen Verwendung zugeführt werden.

Gegenstand der vorliegenden Erfindung ist deshalb auch die Verwendung der erfindungsgemäßen Verbindungen der allgemeinen Formel (1) zum Färben (einschließlich der Massefärbung und des Bedrukkens) dieser Materialien bzw. Verfahren zum Färben solcher Materialien in an und für sich üblicher Verfahrensweise, bei welchen eine Verbindung der allgemeinen Formel (1) als Farbmittel eingesetzt wird. Bevorzugt kommen die Materialien in Form von Fasermaterialien zur Anwendung, insbesondere in Form von Textilfasern.

Hydroxygruppenhaltige Materialien sind natürliche oder synthetische hydroxygruppenhaltige Materialien, wie beispielsweise Cellulosefasermaterialien oder deren Regeneratprodukte und Polyvinylalkohole. Cellulosefasermaterialien sind vorzugsweise Baumwolle, aber auch andere Pflanzenfasern, wie Leinen, Hanf, Jute und Ramiefasern; regenerierte Cellulosefasern sind beispielsweise Zellwolle und Viskosekunstseide.

Carbonamidgruppenhaltige Materialien sind beispielsweise synthetische und natürliche Polyamide und Polyurethane, insbesondere in Form der Fasern, beispielsweise Wolle und andere Tierhaare, Seide, Leder, Polyamid-6,6, Polyamid-6, Polyamid-11 und Polyamid-4.

Die erfindungsgemäßen Verbindungen der Formel (1) lassen sich auf den genannten Substraten, insbesondere auf den genannten Fasermaterialien, nach den für wasserlösliche Farbstoffe, insbesondere für faserreaktive Farbstoffe bekannten Anwendungstechniken applizieren und fixieren.

So erhält man mit ihnen auf Cellulosefasern nach den Ausziehverfahren aus langer Flotte unter Verwendung von verschiedensten säurebindenden Mitteln und gegebenenfalls neutralen Salzen, wie beispielsweise Natriumchlorid oder Natriumsulfat, sehr gute Farbausbeuten. Man färbt bei Temperaturen zwischen 40 und 100 °C, gegebenenfalls bei Temperaturen bis zu 120 °C unter Druck, gegebenenfalls in Gegenwart von üblichen Färbereihilfsmitteln, in wäßrigem Bad. Man kann dabei so vorgehen, daß man das Material in das warme Bad einbringt und dieses allmählich auf die gewünschte Färbetemperatur erwärmt und den Färbeprozeß bei dieser Temperatur zu Ende führt. Die das Ausziehen des Farbstoffes beschleunigenden Neutralsalze können dem Bade gewünschtenfalls auch erst nach Erreichen der eigentlichen Färbetemperatur zugesetzt werden.

Nach dem Klotzverfahren werden auf Cellulosefasern ebenfalls gute Farbausbeuten erhalten, wobei durch Verweilen bei Raumtemperatur oder erhöhter Temperatur, beispielsweise bis zu etwa 60 °C, durch Dämpfen oder mit Trockenhitze in üblicher Weise fixiert werden kann.

Ebenfalls nach den üblichen Druckverfahren für Cellulosefasern, die einphasig, beispielsweise in Anwesenheit von Natriumbicarbonat oder anderer säurebindender Mittel in der die Verbindung der Formel (1) enthaltenden Druckpaste und anschließendes Dämpfen des bedruckten Materials bei 101 bis 103 °C, oder zweiphasig, beispielsweise durch Bedrucken mit einer neutralen oder schwach sauren, die Verbindung der Formel (1) enthaltenden Druckfarbe und Fixierung durch Hindurchführen durch ein heißes elektrolythaltiges alkalisches Bad oder durch Überklotzen mit einer alkalischen elektrolythaltigen Klotzflotte und anschließendem Verweilen dieses behandelten Materials oder anschließendem Dämpfen oder anschließender Behandlung mit Trockenhitze, durchgeführt werden können, erhält man farbstarke Drucke mit gutem Stand der Konturen und einem klaren Weißfond. Der Ausfall der Drucke ist von wechselnden Fixierbedingungen nur wenig abhängig. Sowohl in der Färberei als auch in der Druckerei sind die mit den erfindungsgemäßen Verbindungen erhaltenen Fixiergrade sehr hoch.

Bei der Fixierung mittels Trockenhitze nach den üblichen Thermofixierverfahren verwendet man Heißluft von 120 bis 200 °C. Bei der Fixierung mittels Heißdampf kann neben dem üblichen Wasserdampf von 101 bis 103 °C auch überhitzter Dampf und Druckdampf von Temperaturen bis zu 160 °C eingesetzt werden.

Die säurebindenden und die Fixierung der Farbstoffe auf Cellulosefasern bewirkenden Mittel sind beispielsweise wasserlösliche basische Salze der Alkalimetalle oder Erdalkalimetalle von anorganischen oder organischen Säuren oder Verbindungen, die in der Hitze Alkali freisetzen, und insbesondere die Alkalimetallhydroxide und Alkalimetallsalze von schwachen bis mittelstarken anorganischen oder organischen Säuren, wobei von den Alkaliverbindungen vorzugsweise die Natrium- und Kaliumverbindungen gemeint sind. Solche säurebindenden Mittel sind beispielsweise Natriumhydroxid, Kaliumhydroxid, Natriumcarbonat, Natriumbicarbonat, Kaliumcarbonat, Natriumformiat, Natriumdihydrogenphosphat, Dinatriumhydrogenphosphat, Natrium-trichloracetat, Wasserglas und Trinatriumphosphat.

Durch die Behandlung der erfindungsgemäßen Verbindungen mit den säurebindenden Mitteln, gegebenenfalls unter Wärmeeinwirkung, werden die erfindungsgemäßen Verbindungen (Farbstoffe) chemisch an die Cellulosefaser gebunden; die Cellulosefärbungen zeigen nach der üblichen Nachbehandlung durch Spülen zur Entfernung von nicht fixierten Farbstoffanteilen ausgezeichnete Naßechtheiten.

Für das coloristische Verhalten der erfindungsgemäßen Verbindungen ist besonders hervorzuheben, daß sie sich durch gute Stabilität in Druckpasten und Klotzflotten, auch in Anwesenheit von Alkali, durch ein sehr gutes Ziehvermögen aus langer Flotte, durch guten Farbaufbau nach den üblichen Färbe- und Druckverfahren, durch eine gleiche Farbtiefe beim Färben auf Baumwolle und Regeneratcellulosefasern, durch ein egales Warenbild der mit ihnen hergestellten Färbungen und Drucke und ebenfalls durch einen gleichmäßigen Ausfall der Färbungen aus langer Flotte bei Zugabe verschiedener Mengen an Elektrolyten auszeichnen.

Die Färbungen auf Polyurethanfasern und Polyamidfasern werden üblicherweise aus saurem Milieu ausgeführt. So kann man beispielsweise dem Färbebad Essigsäure und/oder Ammoniumsulfat und/oder Essigsäure und Ammoniumacetat oder Natriumacetat zufügen, um den gewünschten pH-Wert zu erhalten. Zwecks Erreichung einer brauchbaren Egalität der Färbung empfiehlt sich ein Zusatz an üblichen Egalisierhilfsmitteln, wie beispielsweise auf Basis eines Umsetzungsproduktes von Cyanurchlorid mit der dreifach molaren Menge einer Aminobenzolsulfonsäure und/oder einer Aminonaphthalinsulfonsäure oder auf Basis eines Umsetzungsproduktes von beispielsweise Stearylamin mit Ethylenoxid. In der Regel wird das zu färbende Material bei einer Temperatur von etwa 40°C in das zuerst schwach alkalisch eingestellte Bad eingebracht, dort einige Zeit darin bewegt, das Färbebad dann auf einen schwach sauren, vorzugsweise schwach essigsauren, pH-Wert eingestellt und die eigentliche Färbung bei einer Temperatur zwischen 60 und 98°C durchgeführt. Die Färbungen können aber auch bei Siedetemperatur oder bei Temperaturen bis zu 120°C (unter Druck) ausgeführt werden.

Die mit den erfindungsgemäßen Verbindungen hergestellten Färbungen und Drucke zeichnen sich durch reine, blaue Farbtöne aus. Insbesondere die Färbungen und Drucke auf Cellulosefasermaterialien besitzen eine hohe Farbstärke sowie gute bis sehr gute Gebrauchs- und Fabrikationsechtheiten, wie gute bis sehr gute Licht-, Schweißlicht-, Naßlicht- und Reibechtheit und vorzügliche Naßechtheiten, wie Wasch-, Chlorbadewasser-, Chlorbleich-, Meerwasser-, Walk-, Alkali-, Säurelager-, Peroxid- und Schweißechtheiten, weiterhin eine gute Bügel- und eine gute Trockenreinigungsechtheit und gute Stabilität des Komplexes gegen Eisen. Nicht fixierte Anteile an Farbstoff lassen sich leicht und vollständig wieder aus dem Fasermaterial auswaschen, was eine wesentliche Voraussetzung für die guten Naßechtheiten der erhältlichen Färbungen ist. Desweiteren sind die Färbungen gegen die üblichen Kunstharzappreturen stabil. Die erfindungsgemäßen Verbindungen (Farbstoffe) erreichen teils den üblichen Anthrachinonstandard bezüglich der Reinheit des Farbtones und haben darüber hinaus den Vorteil der sehr viel leichteren Ätzbarkeit gegenüber den erwähnten Anthrachinonfarbstoffen.

Die nachstehenden Beispiele dienen zur Erläuterung der Erfindung. Die darin genannten Teile sind Gewichtsteile, die Prozentangaben stellen Gewichtsprozente dar, sofern nicht anders vermerkt. Gewichtsteile beziehen sich zu Volumenteilen wie Kilogramm zu Liter.
Die in den Beispielen formelmäßig beschriebenen Verbindungen sind in Form der freien Säuren angegeben; im allgemeinen werden sie in Form ihrer Alkalimetallsalze hergestellt und isoliert und in Form ihrer Salze zum Färben verwendet. Ebenso können die in den nachfolgenden Beispielen, insbesondere Tabellenbeispielen, in Form der freien Säure genannten Ausgangsverbindungen und Komponenten als solche oder in Form ihrer Salze, vorzugsweise Alkalimetallsalze, in die Synthese eingesetzt werden.

Die für die erfindungsgemäßen Verbindungen angegebenen Absorptionsmaxima ($\lambda_{max}$) im sichtbaren Bereich wurden anhand derer Alkalimetallsalze in wäßriger Lösung ermittelt. In den Tabellenbeispielen sind die $\lambda_{max}$-Werte bei der Farbtonangabe in Klammern gesetzt; die Wellenlängenangabe bezieht sich auf nm.

**Beispiel 1**

a) Eine wäßrige, neutrale Lösung des Natriumsalzes von 32,0 Teilen des Hydrazons aus 2-Carboxy-5-sulfophenylhydrazin und Benzaldehyd in etwa 160 Teilen Wasser gibt man unter Rühren bei 5 bis 15°C mit einer durch übliche Diazotierung erhaltenen wäßrigen Lösung des Diazoniumsalzes aus 24,6 Teilen 6-Acetylamino-4-sulfo-2-aminophenol zusammen, gibt sodann 25,0 Teile Kupfersulfat-pentahydrat hinzu und hält einen pH-Wert von 5 mittels Natriumcarbonat. Man rührt den Reaktionsansatz bei 15 bis 25°C noch nach, bis keine Diazoniumverbindung mehr nachweisbar ist.

b) In der unter a) synthetisierten Kupferkomplex-Formazanverbindung wird die Acetylaminogruppe zur Aminogruppe direkt in der Syntheselösung nach Zugabe einer 6- bis 10-fach molaren Menge einer konzentrierten wäßrigen Natronlauge bei einer Temperatur zwischen 90 und 100°C während 5 bis 10 Stunden hydrolysiert (die Acetylamino-Kupferformazanverbindung kann auch zuvor aus der Syntheselösung mittels Natriumchlorid ausgesalzen und isoliert und sodann in etwa 3 %iger wäßriger Natronlauge hydrolysiert werden). Die erhaltene aminogruppenhaltige Kupferkomplex-Formazanverbindung kann nach Rückstellung des pH auf einen Wert von etwa 4 durch Aussalzen mit Natriumchlorid isoliert werden.

c) Die unter b) erhaltene Formazanverbindung wird mit Cyanurchlorid umgesetzt. Zweckmäßig geht man hierzu von einer Lösung von b) mit dem pH-Wert von 4 aus, indem man die Lösung unter gutem Rühren bei einer Temperatur von 0 bis 5°C und einem pH-Wert zwischen 3 und 4, der mittels einer wäßrigen Natriumcarbonatlösung eingehalten wird, mit 16,6 Teilen Cyanurchlorid zur 2,4-Dichlor-s-triazin-6-yl-amino-Kupferkomplexformazanverbindung innerhalb von 3 bis 4 Stunden umsetzt.

d) Zu der Syntheselösung von c) gibt man eine wäßrige Lösung von 4,0 Teilen Cyanamid in etwa 100 Teilen Wasser hinzu, erwärmt auf 40 bis 50°C und hält mittels einer wäßrigen Natriumhydroxidlösung einen pH-Wert von 9 bis 10 ein, bis nach etwa 3 bis 4 Stunden die Umsetzung beendet ist. Die erhaltene Syntheselösung wird sodann bei 40 bis 50°C geklärt und die synthetisierte Monochlortriazinverbindung, entweder nach Zwischenisolierung aus dem Filtrat durch Zugabe von Natriumchlorid oder Kaliumchlorid oder direkt in dieser Lösung, mit 28 Teilen 3-(β-Sulfatoethylsulfonyl)-anilin während 5 bis 10 Stunden bei einem pH-Wert zwischen 3 und 4 und einer Temperatur zwischen 60 und 80°C zur erfindungsgemäßen Kupferkomplex-Formazanverbindung umgesetzt.

Nach einer Klärfiltration wird die erfindungsgemäße Verbindung aus dem Filtrat mittels Natriumchlorid oder Kaliumchlorid ausgesalzen oder durch Eindampfen oder Sprühtrocknung isoliert. Es wird das Alkalimetallsalz (Natrium- oder Kaliumsalz) der Verbindung der Formel

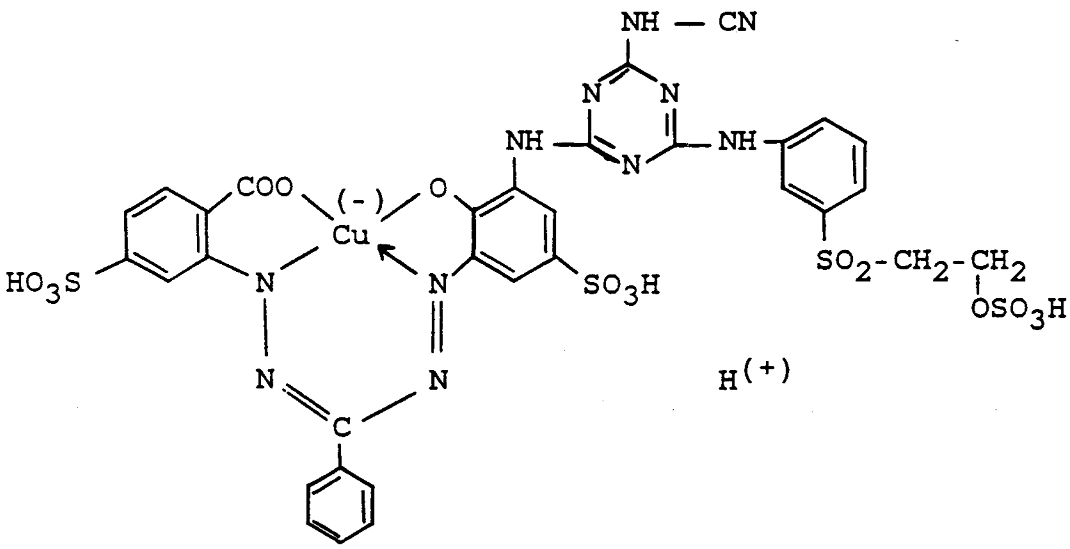

($\lambda_{max}$ = 609 nm)

als elektrolytsalzhaltiges dunkles Pulver erhalten. Die erfindungsgemäße Verbindung zeigt sehr gute Farbstoffeigenschaften und färbt die in der Beschreibung genannten Materialien in blauen Farbtönen mit schwach rotstichiger Nuance. Insbesondere Cellulosefasermaterialien, wie Baumwolle und ebenso regenerierte Cellulosefasermaterialien, werden gemäß den in der Technik für faserreaktive Farbstoffe üblichen Applikations- und Fixiermethoden, so beispielsweise aus wäßriger, langer Flotte bei 40° bis 80°C in Gegenwart eines säurebindenden Mittels in farbstarken Tönen gefärbt. Auch bei den Klotz-Kaltverweil-Verfahren werden sehr hohe Farbausbeuten erhalten. Nach der üblichen Nachbehandlung, beispielsweise durch 10-minütiges Seifen und Spülen mit Wasser, zeichnen sich die erfindungsgemäß erhaltenen Färbungen durch sehr gute Lichtechtheiten in trockenen sowie in mit Trinkwasser oder einer alkalischen oder sauren Schweißlösung befeuchtetem Zustand und durch gute Naßechtheiten, wie Wasch-, Chlorbadewasser-, Chlorbleich-, Alkali-, Schweiß- und Peroxid-Echtheiten, aus. Des weiteren zeigen sie eine gute Säurelagerstabilität, und die Färbungen sind gut ätzbar. Besonders bemerkenswert sind das sehr hohe Aufbauvermögen und die hohen Fixierraten im Auszieh- und Klotzverfahren.

**Beispiel 2**

a) Man suspendiert 18,4 Teile Cyanurchlorid, gegebenenfalls unter Zugabe eines nicht-ionischen Hilfsmittels, in einem Gemisch aus 50 Teilen Wasser und 50 Teilen Eis, gibt sodann unter Einhaltung einer Temperatur von 0 bis 5°C und eines pH-Wertes von 8 bis 10 eine wäßrige Lösung von 4,5 Teilen Cyanamid in 100 Teilen Wasser hinzu und rührt noch einige Zeit nach, bis kein freies Cyanurchlorid

mehr nachweisbar ist.

b) Zu der nach a) erhaltenen und gegebenenfalls geklärten Lösung des Monokondensationsproduktes gibt man eine gemäß Beispiel 1a) bis b) hergestellte wäßrige, auf einen pH-Wert von 5 eingestellte Lösung der Amino-Kupferkomplex-formazanverbindung, erwärmt den Ansatz auf 30 bis 40 °C und hält ihn bei dieser Temperatur bei einem pH-Wert von 5 bis 7 mittels wäßriger 10 %iger Natriumcarbonatlösung, bis die Kondensationsreaktion der Dichlortriazinylaminoverbindung mit der Aminogruppe der Kupferkomplex-Formazanverbindung beendet ist.

Die erhaltene Monochlortriazinverbindung ist mit der des Beispieles 1d) identisch und kann analog den Angaben des vorherigen Beispieles durch weitere Umsetzung mit 3-(β-Sulfatoethylsulfonyl)-anilin zur erfindungsgemäßen Kupferkomplex-Formazanverbindung des Beispieles 1 umgesetzt werden. Die so erhaltene erfindungsgemäße Formazanverbindung besitzt die gleichen guten Farbstoffeigenschaften.

**Beispiele 3 bis 60**

In den nachfolgenden Tabellenbeispielen sind weitere erfindungsgemäße Kupferkomplexformazanverbindungen mit Hilfe der allgemeinen Formel (A)

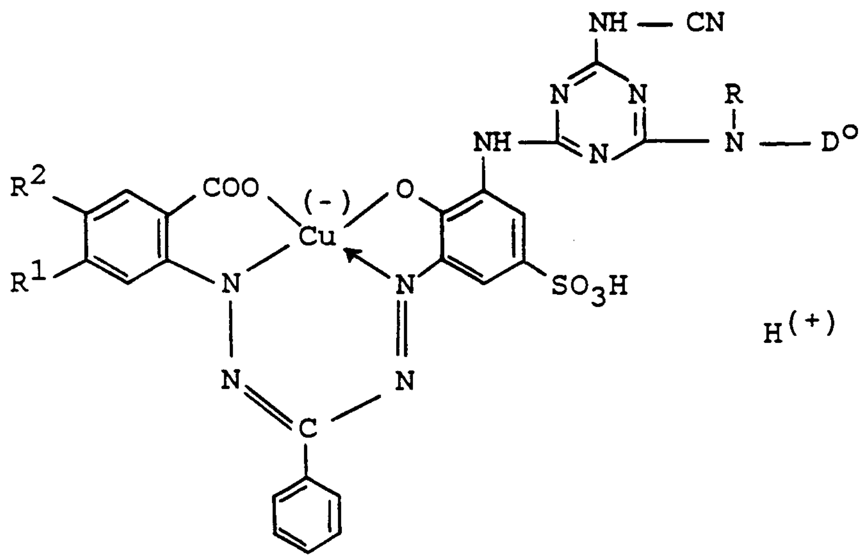

(A)

beschrieben. Sie lassen sich in erfindungsgemäßer Weise, beispielsweise analog den Ausführungsbeispielen 1, 2 und 61, mit Hilfe der aus Formel (A) und den aus dem jeweiligen Tabellenbeispiel ersichtlichen Komponenten (Cyanurchlorid, 2-Carboxy-5-sulfo- oder -4-sulfo-phenylhydrazin, Benzaldehyd, dem Diazoniumsalz des 6-Acetylamino-4-sulfo-2-aminophenols und einer Anilinverbindung entsprechend der allgemeinen Formel HRN-D° mit D° und R der in dem jeweiligen Tabellenbeispiel angegebenen Bedeutungen herstellen. Sie besitzen ebenfalls sehr gute faserreaktive Farbstoffeigenschaften und liefern nach den für faserreaktive Farbstoffe üblichen Färbe- und Druckverfahren, insbesondere auf Cellulosefasermaterialien, farbstarke echte Färbungen und Drucke mit dem in dem jeweiligen Tabellenbeispiel angegebenen Farbton auf Baumwolle.

| Bsp. | Verbindungen entsprechend Formel (A) | | | | Farbton |
|---|---|---|---|---|---|
| | $R^1$ | $R^2$ | Rest R | Rest $D^o$ | ($\lambda_{max}$) |
| 3 | Sulfo | Wasserstoff | Methyl | 3-(β-Sulfatoethylsulfonyl)-phenyl | blau (610) |
| 4 | Sulfo | Wasserstoff | Ethyl | dito | blau (610) |
| 5 | Sulfo | Wasserstoff | Hydroxymethyl | dito | blau (610) |
| 6 | Sulfo | Wasserstoff | Wasserstoff | 4-(β-Sulfatoethylsulfonyl)-phenyl | blau (610) |
| 7 | Sulfo | Wasserstoff | Methyl | dito | blau (610) |
| 8 | Sulfo | Wasserstoff | Ethyl | dito | blau (610) |
| 9 | Sulfo | Wasserstoff | Wasserstoff | 2-Methoxy-5-(β-sulfatoethylsulfonyl)-phenyl | blau (610) |
| 10 | Sulfo | Wasserstoff | Wasserstoff | 4-Methoxy-3-(β-sulfatoethylsulfonyl)-phenyl | blau (610) |
| 11 | Sulfo | Wasserstoff | Wasserstoff | 4-Methyl-3-(β-sulfatoethylsulfonyl)-phenyl | blau (610) |
| 12 | Sulfo | Wasserstoff | Wasserstoff | 4-(β-Sulfatoethyl-thio)-3-(β'-sulfatoethylsulfonyl)-phenyl | blau (610) |
| 13 | Sulfo | Wasserstoff | Wasserstoff | 4-[N-Methyl-N-(β-sulfatoethyl)]-amino-3-(β'-sulfatoethylsulfonyl)-phenyl | blau (610) |

| Bsp. | Verbindungen entsprechend Formel (A) $R^1$ | $R^2$ | Rest R | Rest $D^o$ | Farbton ($\lambda_{max}$) |
|---|---|---|---|---|---|
| 14 | Sulfo | Wasserstoff | Wasserstoff | 1-Sulfo-6-(β-sulfatoethylsulfonyl)-naphth-2-yl | blau (610) |
| 15 | Sulfo | Wasserstoff | Wasserstoff | 2-Methyl-5-methoxy-4-(β-sulfatoethylsulfonyl)-phenyl | blau (610) |
| 16 | Sulfo | Wasserstoff | β-Chlorethyl | 3-Chlor-5-(β-phosphatoethylsulfonyl)-phenyl | blau (610) |
| 17 | Sulfo | Wasserstoff | n-Propyl | 4,6-Di-(β-sulfatoethylsulfonyl)-naphth-1-yl | blau (610) |
| 18 | Sulfo | Wasserstoff | Wasserstoff | 4-(β-Thiosulfatoethylsulfonyl)-phenyl | blau (610) |
| 19 | Sulfo | Wasserstoff | β-Methoxyethyl | 3-(β-Sulfatoethylsulfonyl)-phenyl | blau (610) |
| 20 | Sulfo | Wasserstoff | Wasserstoff | 2,5-Dimethoxy-4-(β-sulfatoethylsulfonyl)-phenyl | blau (610) |
| 21 | Sulfo | Wasserstoff | Wasserstoff | 3-Vinylsulfonyl-phenyl | blau (610) |
| 22 | Sulfo | Wasserstoff | Wasserstoff | 3-Chlor-5-(β-phosphatoethylsulfonyl)-phenyl | blau (610) |
| 23 | Sulfo | Wasserstoff | Wasserstoff | 2-(β-Sulfatoethylsulfonyl)-phenyl | blau (610) |
| 24 | Sulfo | Wasserstoff | Hydroxymethyl | 6-Sulfo-1-(β-chlorethylsulfonyl)-naphth-1-yl | blau (610) |

| Bsp. | Verbindungen entsprechend Formel (A) | | | | Farbton |
|---|---|---|---|---|---|
| | $R^1$ | $R^2$ | Rest R | Rest $D^o$ | ($\lambda_{max}$) |
| 25 | Sulfo | Wasserstoff | β-Methoxyethyl | 3-(β-Sulfatoethylsulfonyl)-phenyl | blau (610) |
| 26 | Sulfo | Wasserstoff | Wasserstoff | 4-Vinylsulfonyl-phenyl | blau (610) |
| 27 | Sulfo | Wasserstoff | Wasserstoff | 4-(β-Acetyloxyethylsulfonyl)-phenyl | blau (610) |
| 28 | Sulfo | Wasserstoff | Hydroxymethyl | 2-Methoxy-5-(β-sulfatoethylsulfonyl)-phenyl | blau (610) |
| 29 | Sulfo | Wasserstoff | Wasserstoff | 4-(β-Sulfatoethylamino)-3-(β'-sulfatoethylsulfonyl)-phenyl | blau (610) |
| 30 | Sulfo | Wasserstoff | Wasserstoff | 4-(β-Sulfoethylamino)-3-(β'-sulfatoethylsulfonyl)-phenyl | blau (610) |
| 31 | Sulfo | Wasserstoff | Wasserstoff | 4-[N-Methyl-N-(β-sulfoethylsulfonyl)]amino-3-(β'-sulfatoethylsulfonyl)-phenyl | blau (610) |
| 32 | Sulfo | Wasserstoff | Wasserstoff | 4-[β-(Succinylamido)-ethyl]-amino-3-[β'-sulfatoethylsulfonyl)-phenyl | blau (610) |
| 33 | Sulfo | Wasserstoff | Wasserstoff | 4-[β-(β'-Sulfatoethoxy)-ethyl]-amino-3-(β''-sulfatoethylsulfonyl)-phenyl | blau (610) |
| 34 | Sulfo | Wasserstoff | Wasserstoff | 4-Chlor-3-(β'-sulfatoethylsulfonyl)-phenyl | blau (610) |
| 35 | Wasserstoff | Sulfo | Wasserstoff | 4-(β-Sulfatoethylsulfonyl)-phenyl | blau (616) |

| Bsp. | Verbindungen entsprechend Formel (A) $R^1$ | $R^2$ | Rest R | Rest $D^o$ | Farbton ($\lambda_{max}$) |
|---|---|---|---|---|---|
| 36 | Wasserstoff | Sulfo | Wasserstoff | 3-(β-Sulfatoethylsulfonyl)-phenyl | blau (616) |
| 37 | Wasserstoff | Sulfo | Wasserstoff | 2-Methoxy-5-(β-sulfatoethylsulfonyl)-phenyl | blau (616) |
| 38 | Wasserstoff | Sulfo | Wasserstoff | 1-Sulfo-6-(β-sulfatoethylsulfonyl)-naphth-2-yl | blau (616) |
| 39 | Wasserstoff | Sulfo | Wasserstoff | 4-(β-Sulfatoethylamino)-3-(β'-sulfatoethylsulfonyl)-phenyl | blau (616) |
| 40 | Sulfo | Wasserstoff | Wasserstoff | 3,4-Di-(β-sulfatoethylsulfonyl)-phenyl | blau (610) |
| 41 | Sulfo | Wasserstoff | Wasserstoff | 2-Carboxy-5-(β-sulfatoethylsulfonyl)-phenyl | (610) |
| 42 | Sulfo | Wasserstoff | Wasserstoff | 2-Chlor-5-(β-sulfatoethylsulfonyl)-phenyl | blau (610) |
| 43 | Sulfo | Wasserstoff | Wasserstoff | 4-N-(3'-β-Sulfatoethylsulfonylphenyl)-carbamoyl-phenyl | blau (610) |
| 44 | Sulfo | Wasserstoff | Wasserstoff | 3-N-[β-(β'-Sulfatoethylsulfonyl)-ethyl]-carbamoyl-phenyl | blau (610) |
| 45 | Sulfo | Wasserstoff | Wasserstoff | 3-{Bis-N,N-[β-(β'-sulfatoethylsulfonyl)-ethyl]}-carbamoyl-phenyl | blau (610) |

| Bsp. | Verbindungen entsprechend Formel (A) | | | | Farbton |
|---|---|---|---|---|---|
| | $R^1$ | $R^2$ | Rest R | Rest D° | ($\lambda_{max}$) |
| 46 | Sulfo | Wasserstoff | Wasserstoff | 3-(ß-Sulfatoethylsulfonyl)-methyl-phenyl | blau (610) |
| 47 | Sulfo | Wasserstoff | Wasserstoff | 4-[2'-Nitro-4'-(ß-sulfatoethylsulfonyl)-phenylamino]-phenyl | grünst. blau (612) |
| 48 | Sulfo | Wasserstoff | Wasserstoff | γ-(ß'-Sulfatoethylsulfonyl)-propyl | blau (608) |
| 49 | Sulfo | Wasserstoff | Wasserstoff | γ-(ß'-Chlorethylsulfonyl)-propyl | blau (608) |
| 50 | Sulfo | Wasserstoff | Wasserstoff | γ-(Vinylsulfonyl)-propyl | blau (608) |
| 51 | Sulfo | Wasserstoff | Wasserstoff | ß-(ß'-Sulfatoethylsulfonyl)-ethyl | blau (608) |
| 52 | Sulfo | Wasserstoff | Wasserstoff | ß-(ß'-Chlorethylsulfonyl)-ethyl | blau (608) |
| 53 | Sulfo | Wasserstoff | Wasserstoff | ß-(Vinylsulfonyl)-ethyl | blau (608) |
| 54 | Sulfo | Wasserstoff | Wasserstoff | ß-[ß'-(Vinylsulfonyl)-ethoxy]-ethyl | blau (608) |
| 55 | Sulfo | Wasserstoff | Wasserstoff | ß-[4-(ß'-Sulfatoethylsulfonyl)-phenyl]-ethyl | blau (608) |
| 56 | Sulfo | Wasserstoff | Wasserstoff | 4-(ß-Sulfatoethylsulfonyl)-benzyl | blau (608) |

| Bsp. | Verbindungen entsprechend Formel (A) $R^1$ | $R^2$ | Rest R | Rest D° | Farbton ($\lambda_{max}$) |
|---|---|---|---|---|---|
| 57 | Sulfo | Wasserstoff | β-(β'-Chlorethylsulfonyl)-ethyl | β-(β'-Chlorethylsulfonyl)-ethyl | blau (608) |
| 58 | Sulfo | Wasserstoff | Methyl | dito | blau (608) |
| 59 | Sulfo | Wasserstoff | β-(Vinylsulfonyl)-ethyl | β-(Vinylsulfonyl)-ethyl | blau (608) |
| 60 | Wasserstoff | Sulfo | Wasserstoff | γ-(β'-Sulfatoethylsulfonyl)-propyl | blau (616) |

**Beispiel 61**

a) Man suspendiert 18,4 Teile Cyanurchlorid, gegebenenfalls unter Zugabe eines nicht-ionischen Hilfsmittels, in einem Gemisch aus 100 Teilen Wasser und 100 Teilen Eis, gibt sodann unter Einhaltung einer

Temperatur von 0 bis 5 °C und eines pH-Wertes von 9 bis 10 4,5 Teile Cyanamid hinzu und rührt etwa eine Stunde nach, bis kein freies Cyanurchlorid mehr nachweisbar ist. Anschließend stellt man den Ansatz auf einen pH-Wert von 6.

b) Zu der nach a) erhaltenen und gegebenenfalls geklärten Lösung des Monokondensationsprodukts gibt man eine Lösung von 28 Teilen 3-(β-Sulfatoethylsulfonyl)-anilin in 200 Teilen Wasser und heizt den Ansatz auf eine Temperatur von 40 bis 60 °C unter Einhaltung eines pH-Wertes von 5. Sodann gibt man eine gemäß dem vorherigen Beispiel 1a) bis 1b) hergestellte wäßrige, auf einen pH-Wert von 5 eingestellte Lösung der Amino-Kupferkomplexformazan-Verbindung und hält den pH-Wert bei 3,5 bis 5 während 4 Stunden.

Die so erhaltene erfindungsgemäße Formazanverbindung besitzt die gleichen guten Farbstoffeigenschaften wie die gemäß Beispiel 1d) erhaltene Kupferkomplex-Formazanverbindung.

**Beispiel 62**

Man verfährt zur Herstellung eines erfindungsgemäßen Kupferkomplex-Formazanverbindung analog der Verfahrensweise des Beispiels 1, geht jedoch anstelle des im Beispiel 1a) eingesetzten Hydrazons von der äquivalenten Menge des Hydrazons aus 2-Hydroxy-5-sulfo-phenylhydrazin und Benzaldehyd aus.

Man erhält das Alkalimetallsalz (Natrium- oder Kaliumsalz) der Verbindung der Formel

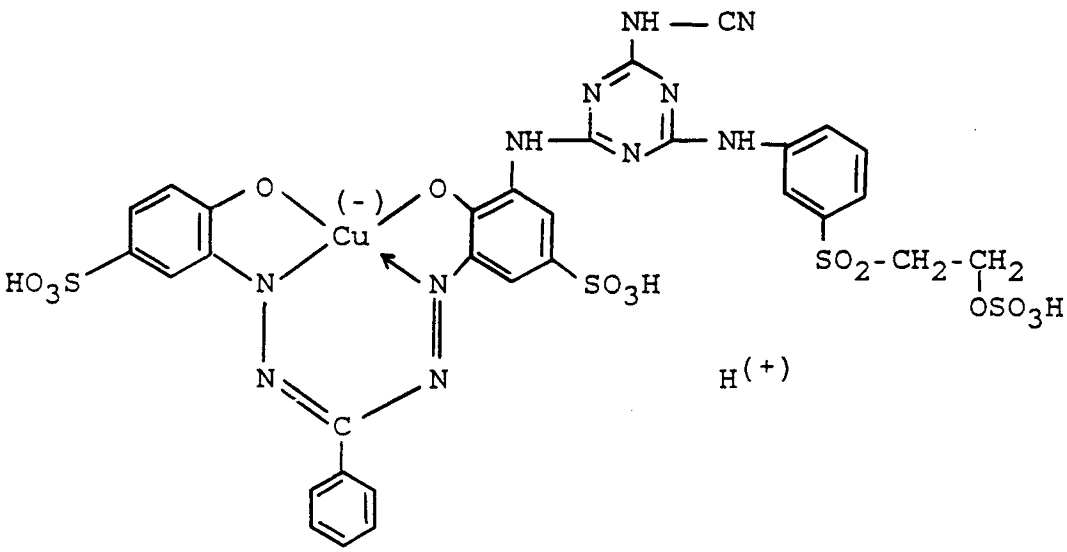

($\lambda_{max}$ = 620 nm)

als elektrolytsalzhaltiges dunkles Pulver. Die erfindungsgemäße Verbindung zeigt ebenfalls sehr gute faserreaktive Farbstoffeigenschaften und färbt die in der Beschreibung genannten Materialien, insbesondere Cellulosefasermaterialien, in farbstarken blauen Farbtönen mit guten Echtheitseigenschaften.

**Patentansprüche**

**Patentansprüche für folgende Vertragsstaaten : DE, GB, FR, IT, NL, CH, LI, BE, AT**

1. Eine Kupferkomplex-Formazanverbindung entsprechend der allgemeinen Formel (1)

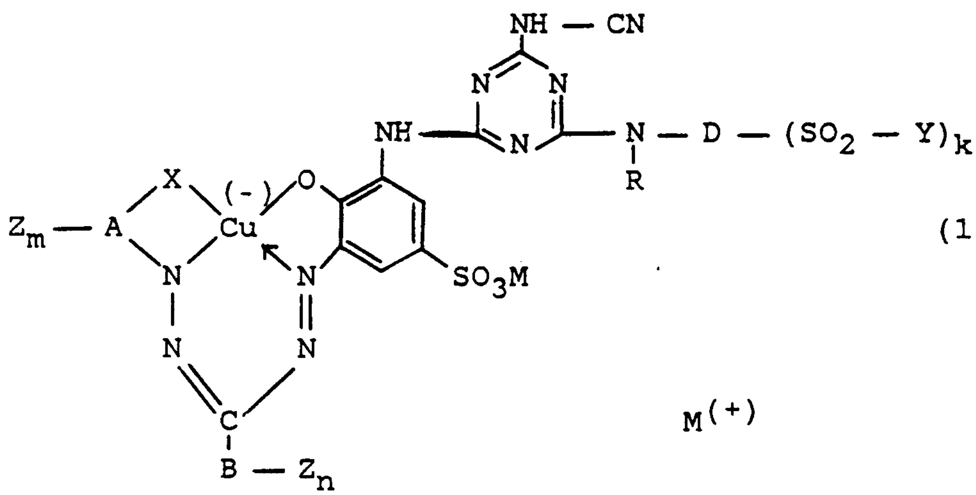

(1)

in welcher bedeuten:

A ist ein Benzol- oder Naphthalinring, die beide durch Substituenten aus der Gruppe Halogen, Nitro, Alkyl von 1 bis 5 C-Atomen, Alkoxy von 1 bis 4 C-Atomen, Alkylsulfonyl von 1 bis 4 C-Atomen, Phenylsulfonyl, Sulfamoyl, N-Monoalkyl- und N,N-Dialkylsulfamoyl mit jeweils 1 bis 4 C-Atomen im Alkyl substituiert sein können;

B ist eine geradkettige oder verzweigt-kettige Alkylengruppe von 1 bis 8 C-Atomen, bevorzugt von 1 bis 4 C-Atomen, oder eine geradkettige oder verzweigtkettige Alkenylengruppe von 2 bis 8 C-Atomen, bevorzugt von 2 bis 4 C-Atomen, wobei diese Alkylen- und Alkenylengruppen noch durch einen Phenylrest substituiert sein können und dieser Phenylrest durch Substituenten aus der Gruppe Methyl, Ethyl, Methoxy, Ethoxy, Fluor, Brom, Chlor und Sulfamoyl substituiert sein kann, oder ist ein Alkylenphenylen-Rest mit 1 bis 4 C-Atomen im Alkylenteil oder ein Alkenylen-phenylen-Rest mit 2 bis 4 C-Atomen; im Alkenylenteil, wobei der Phenylenrest durch Substituenten aus der Gruppe Methyl, Ethyl, Methoxy, Ethoxy, Fluor, Chlor, Brom und Sulfamoyl substituiert sein kann, oder ist ein Phenylen- oder Naphthylenrest, bevorzugt ein Phenylenrest, die beide durch Substituenten aus der Gruppe Hydroxy, Nitro, Halogen, Alkyl von 1 bis 5 C-Atomen, Alkoxy von 1 bis 4 C-Atomen und Carbalkoxy mit 1 bis 4 C-Atomen im Alkylrest substituiert sein können, oder ist der bivalente Rest des Furans, Thiophens, Pyrrols, Imidazols, Indols, Pyrazols, Pyridins, Pyrimidins, Chinolins und Benzimidazols, oder

-B-Z bedeuten zusammen ein Wasserstoffatom;

Z ist eine wasserlöslich machende Gruppe, vorzugsweise eine Sulfogruppe, als ein zu den obengenannten Substituenten von A und B zusätzlicher Substituent an A und B, der an ein aromatisches Kohlenstoffatom oder ein aliphatisches Kohlenstoffatom von A oder B oder an ein aliphatisches Kohlenstoffatom eines Substituenten von A gebunden ist;

k ist die Zahl 1 oder 2, vorzugsweise 1;

m ist die Zahl Null, 1 oder 2 (wobei im Falle m gleich Null die Gruppe Z ein Wasserstoffatom bedeutet);

n ist die Zahl Null, 1 oder 2 (wobei im Falle n gleich Null die Gruppe Z ein Wasserstoffatom bedeutet);

die Summe von (m + n) ist gleich 1 bis 4;

sofern Z im Molekül zwei- oder dreimal enthalten ist, kann es innerhalb der angegebenen Bedeutung verschiedene Bedeutungen besitzen;

X ist ein Sauerstoffatom oder die Carbonyloxygruppe der Formel -CO-O- , wobei die Gruppe X und das N-Atom in ortho-Stellung zueinander an den aromatischen Kern von A gebunden sind;

R ist ein Wasserstoffatom oder eine unsubstituierte oder substituierte Alkylgruppe von 1 bis 4 C-Atomen;

D ist ein Phenylenrest, der substituiert sein kann, oder ein Naphthylenrest, der substituiert sein kann, oder ist ein Alkylenrest von 1 bis 8 C-Atomen oder ein Alkylenrest von 2 bis 8 C-Atomen, der durch 1 oder mehrere Heterogruppen unterbrochen und/oder durch 1 oder 2 Substituenten aus der Gruppe Hydroxy, Sulfo, Carboxy, Sulfato, Phosphato und Alkanoyloxy von 2 bis 5 C-Atomen ist, oder ist ein Rest der allgemeinen Formel (2a), (2b), (2c), (2d), (2e), (2f), (2g) oder (2h)

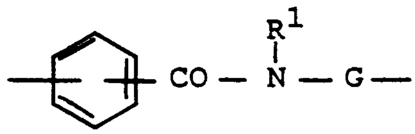 (2a)

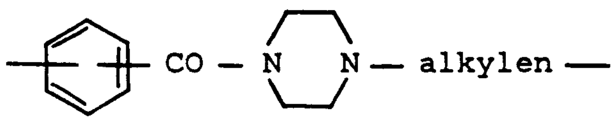 (2b)

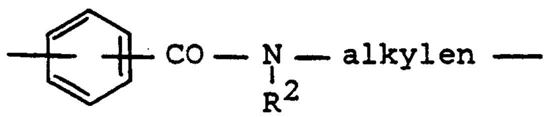 (2c)

— arylen — alkylen — (2d)

— alkylen — arylen — (2e)

— arylen — alkylen — arylen — (2f)

— alkylen — arylen — alkylen — (2g)

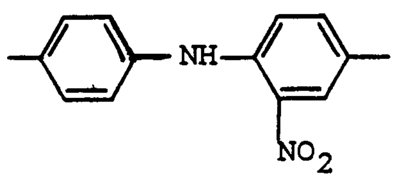 (2h)

in welchen

$R^1$ Wasserstoff oder Alkyl von 1 bis 4 C-Atomen ist,

$R^2$ Wasserstoff oder Alkyl von 1 bis 4 C-Atomen ist, das durch eine Gruppe der allgemeinen Formel $-SO_2-Y$ mit Y der nachstehend angegebenen Bedeutung oder Carboxy, Sulfato, Methoxy, Ethoxy oder Chlor substituiert sein kann, oder ist Phenyl, das durch 1 oder 2 Substituenten aus der Gruppe Methyl, Methoxy, Ethoxy, Sulfo, Carboxy und Chlor substituiert sein kann,

G ein Phenylrest ist, der durch 1 oder 2 Substituenten aus der Gruppe Chlor, Alkyl von 1 bis 4 C-Atomen, Alkoxy von 1 bis 4 C-Atomen, Hydroxy, Sulfo und Carboxy substituiert sein kann,

arylen ein Phenylenrest ist, der durch 1 oder 2 Substituenten aus der Gruppe Chlor, Brom, Nitro, Alkoxy von 1 bis 4 C-Atomen, Alkyl von 1 bis 4 C-Atomen, Carboxy und Sulfo substituiert sein kann, oder ein Naphthylenrest ist, der durch 1 oder 2 Sulfogruppen substituiert sein kann,

alkylen ein Alkylenrest von 1 bis 8 C-Atomen oder ein Alkylenrest von 2 bis 8 C-Atomen ist, der durch 1 oder mehrere Heterogruppen unterbrochen ist und/oder durch 1 oder 2 Substituenten aus der Gruppe Hydroxy, Sulfo, Carboxy, Sulfato, Phosphato und Alkanoyloxy von 2 bis 5 C-Atomen substituiert ist, und

die Alkylen- und Arylen-Anteile in den Resten der allgemeinen Formeln (2d) bis (2g) jeweils durch eine der obengenannten Heterogruppen voneinander getrennt sein können;

Y ist die Vinylgruppe oder eine Ethylgruppe, die in β-Stellung durch einen alkalisch eliminierbaren Substituenten substituiert ist;

M ist ein Wasserstoffatom oder ein Alkalimetall oder das Äquivalent eines Erdalkalimetalls.

**2.** Verbindung nach Anspruch 1, dadurch gekennzeichnet, daß A ein Benzolring ist.

**3.** Verbindung nach Anspruch 1 oder 2, dadurch gekennzeichnet, daß B ein Phenylenrest ist.

**4.** Verbindung nach mindestens einem der Ansprüche 1 bis 3, dadurch gekennzeichnet, daß D ein Phenylenrest ist, der unsubstituiert oder durch Substituenten aus der Gruppe Hydroxy, Nitro, Chlor, Brom, Fluor, Alkoxy von 1 bis 4 C-Atomen, Alkyl von 1 bis 4 C-Atomen, Sulfo, Carboxy, β-Sulfatoethylthio, Alkylamino und Dialkylamino mit jeweils 1 bis 4 C-Atomen im Alkylrest substituiert ist, wobei eine oder beide der Alkylgruppen von Alkylamino und Dialkylamino durch Hydroxy, Sulfo, Carboxy, Sulfato, Phosphato, Alkoxy von 1 bis 4 C-Atomen, Alkoxyalkoxy mit jeweils 1 bis 4 C-Atomen im Alkyl- bzw. Alkylenrest, Hydroxyalkoxy mit 1 bis 4 C-Atomen im Alkylenrest, Sulfatoalkoxy mit 1 bis 4 C-Atomen im Alkylenrest und Succinylamido substituiert sein können.

**5.** Verbindung nach mindestens einem der Ansprüche 1 bis 4, dadurch gekennzeichnet, daß Y die Vinylgruppe oder eine β-Chlorethyl- oder β-Bromethyl-Gruppe oder eine β-Alkanoyloxy-ethyl-Gruppe mit einem Alkanoylrest von 2 bis 5 C-Atomen oder eine β-Benzoyloxy-ethyl- oder β-Sulfobenzoyloxyethyl- oder β-(p-Methyl-phenylsulfonyloxy)-ethyl- oder eine β-Dialkylamino-ethyl-Gruppe mit Alkylresten von 1 bis 4 C-Atomen oder eine β-Phosphatoethyl- oder β-Thiosulfotoethyl- oder β-Sulfatoethyl-Gruppe ist.

**6.** Verbindung nach Anspruch 1 entsprechend der allgemeinen Formel (1a)

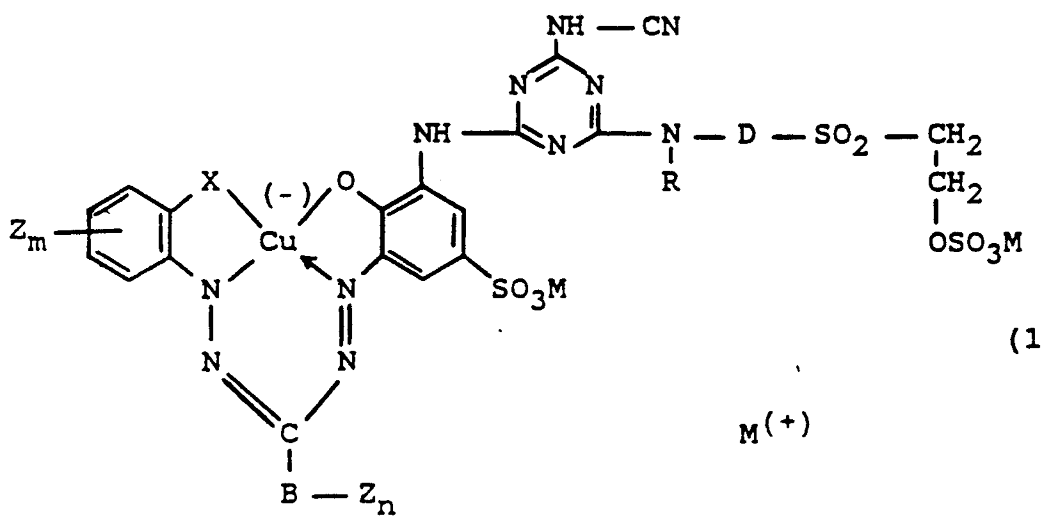

(1a)

in welcher bedeuten:

X ist ein Sauerstoffatom oder die Carbonyloxygruppe;

B ist ein Benzolring, der durch Chlor, Methyl, Methoxy oder Ethoxy substituiert sein kann;

Z ist eine Sulfogruppe;

m ist die Zahl 1 oder 2, bevorzugt 1;

n ist die Zahl Null oder 1, bevorzugt Null;

die Summe von (m + n) ist 1 oder 2, bevorzugt 1;

R ist ein Waserstoffatom oder eine Alkylgruppe von 1 bis 4 C-Atomen;

D ist der meta- oder para-Phenylenrest;

M ist ein Wasserstoffatom oder ein Alkalimetall.

7. Verbindung nach Anspruch 1 der allgemeinen Formel (1b)

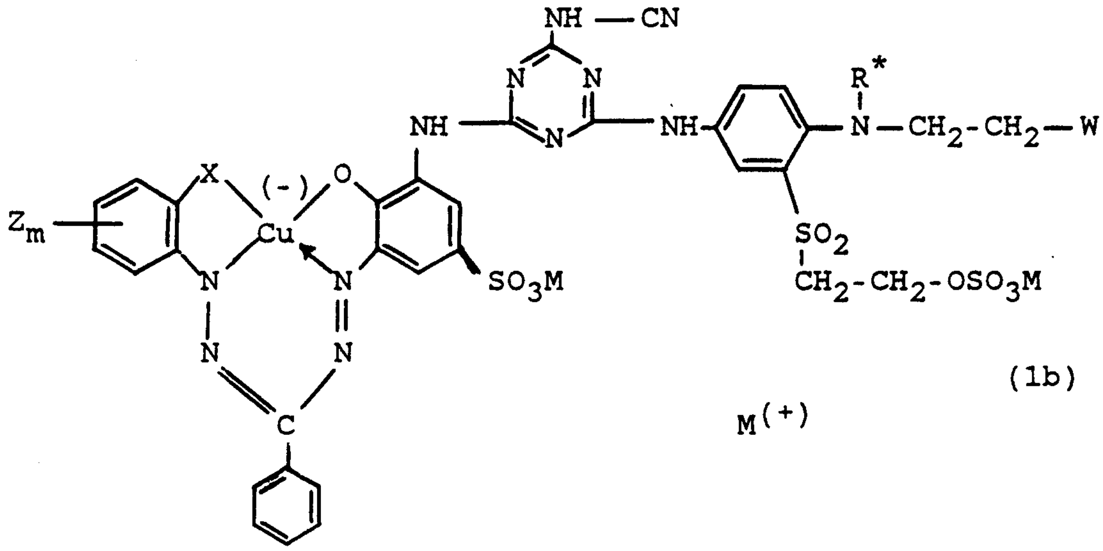

(1b)

$M^{(+)}$

in welcher bedeuten:

- X ist ein Sauerstoffatom oder die Carbonyloxygruppe;
- Z ist eine Sulfogruppe;
- m ist die Zahl 1 oder 2, bevorzugt 1;
- R* ist ein Wasserstoffatom oder die Methylgruppe;
- W ist die Sulfato- oder Sulfogruppe oder die β-Sulfatoethoxy-Gruppe oder die Succinylamido-Gruppe;
- M ist ein Wasserstoffatom oder ein Alkalimetall.

8. Verbindung nach mindestens einem der Ansprüche 1 bis 7, dadurch gekennzeichnet, daß X die Carbonyloxygruppe ist.

9. Verbindung nach mindestens einem der Ansprüche 1 bis 6 und 8, dadurch gekennzeichnet, daß D der meta-Phenylenrest ist.

10. Verbindung nach Anspruch 1 entsprechend der allgemeinen Formel (1c)

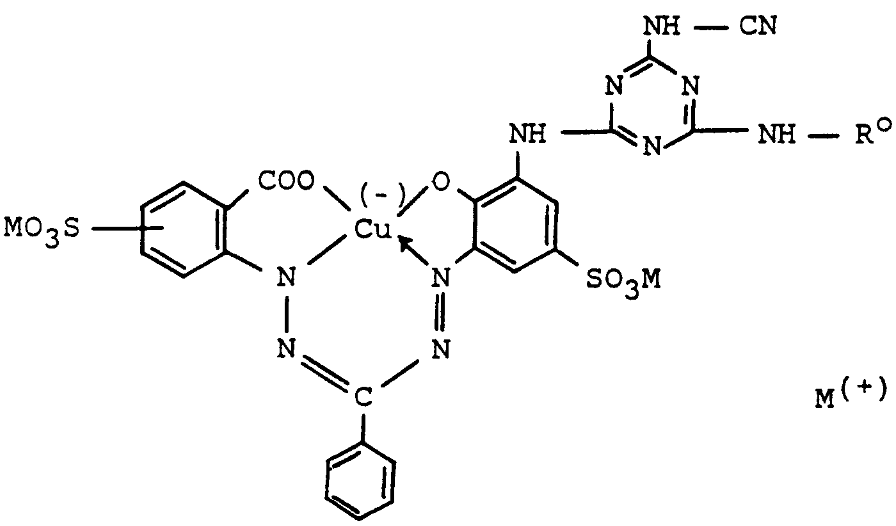

(1c)

$M^{(+)}$

in welcher bedeuten:

- M ist ein Wasserstoffatom oder ein Alkalimetall;
- R° ist die 4-(β-Sulfatoethylsulfonyl)-phenyl-, die 2-Chlor-5-(β-sulfatoethylsulfonyl)-phenyl-, die 2-Methoxy-5-(β-sulfatoethylsulfonyl)-phenyl-, die 4-Chlor-3-(β-sulfatoethylsulfonyl)-phenyl-, die 4-Methoxy-3-(β-sulfatoethylsulfonyl)-phenyl- oder bevorzugt die 3-(β-Sulfatoethylsulfonyl)-phenyl-Gruppe.

**11.** Verbindung nach Anspruch 10, dadurch gekennzeichnet, daß die Sulfogruppe $-SO_3M$ in para-Stellung zur Carbonyloxygruppe steht.

**12.** Verfahren zur Herstellung einer Kupferkomplex-Formazan-Verbindung von Anspruch 1, in welcher D ein gegebenenfalls substituierter Phenylen- oder Naphthylenrest oder ein Rest der allgemeinen Formel (2a), (2b), (2c), (2d), (2f) oder (2h) ist, dadurch gekennzeichnet, daß man eine Dihalogen-triazinylamino-Kupferformazanverbindung der allgemeinen Formel (3)

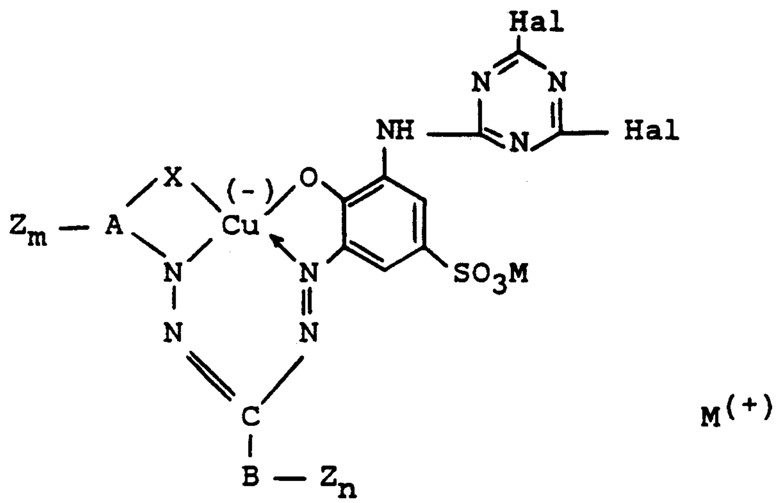

(3)

in welcher Z, m, n, A, B, X und M die in Anspruch 1 genannten Bedeutungen haben und Hal für ein Halogenatom, bevorzugt Chloratom, steht, mit Cyanamid oder dessen Alkalimetallsalz und mit einer aromatischen Aminoverbindung der allgemeinen Formel (4)

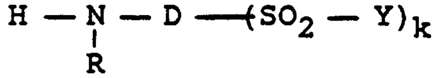

(4)

in welcher R, k und Y die in Anspruch 1 genannten Bedeutungen haben und D die eben genannte Bedeutung besitzt, umsetzt, oder daß man eine Verbindung der allgemeinen Formel (5)

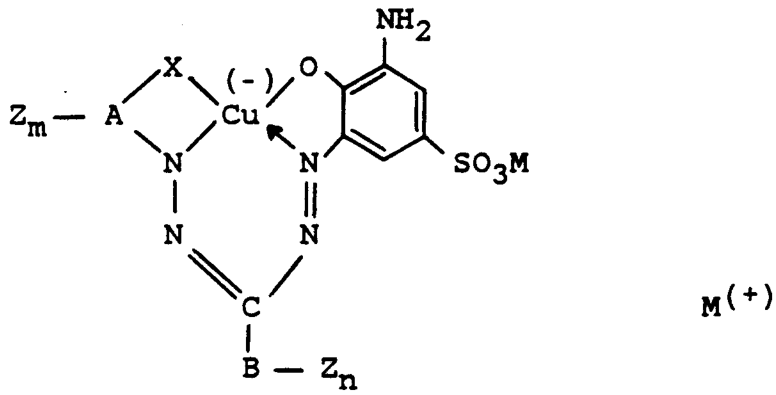

(5)

in welcher Z, m, n, A, B, X und M die in Anspruch 1 genannten Bedeutungen haben, mit einer Dihalogen-triazinylamino-Verbindung der allgemeinen Formel (6)

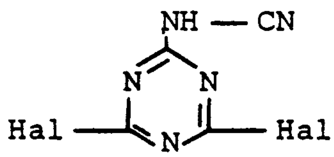

(6)

in welcher Hal die obengenannte Bedeutung besitzt, umsetzt und die so erhaltene Kupferformazanverbindung der allgemeinen Formel (7)

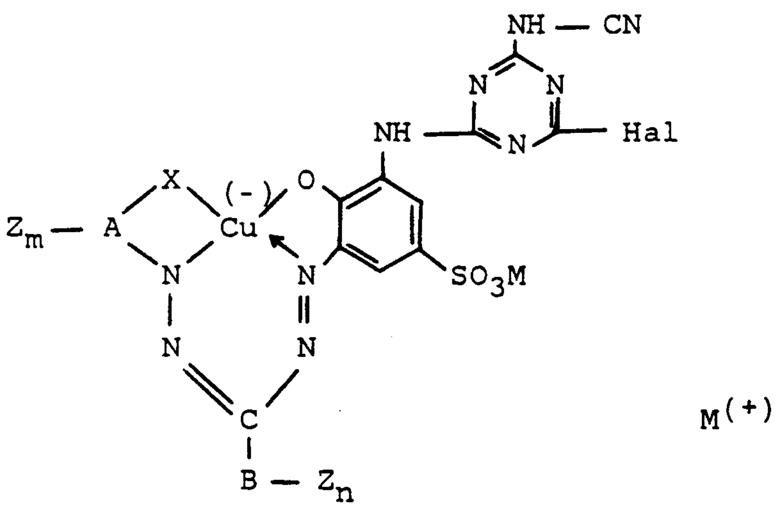

(7)

in welcher Z, m, n, A, B, X, M und Hal die in Anspruch 1 genannten bzw. obengenannten Bedeutungen haben, mit einer Aminoverbindung der allgemeinen Formel (4) mit D der eben genannten Bedeutung umsetzt, oder daß man zur Herstellung einer Verbindung der allgemeinen Formel (1) mit D der in Anspruch 1 genannten Bedeutung eine Verbindung der allgemeinen Formel (5) mit einer Verbindung der allgemeinen Formel (6A)

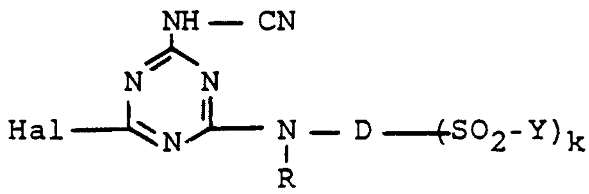

(6A)

in welcher Hal, R, D, Y und k die in Anspruch 1 genannten Bedeutungen haben, umsetzt.

**13.** Verwendung einer Verbindung entsprechend der allgemeinen Formel (1) von Anspruch 1 zum Färben (einschließlich Bedrucken) von hydroxy- und/oder carbonamidgruppenhaltigem Material, insbesondere Fasermaterial.

**14.** Verfahren zum Färben (einschließlich Bedrucken) von hydroxy- und/oder carbonamidgruppenhaltigem Material, insbesondere Fasermaterial, bei welchem man einen Farbstoff auf das Material aufbringt oder darin einbringt und ihn mittels Wärme und/oder mit Hilfe eines alkalisch wirkenden Mittels fixiert, dadurch gekennzeichnet, daß man als Farbstoff eine Verbindung entsprechend der allgemeinen Formel (1) von Anspruch 1 einsetzt.

**Patentansprüche für folgenden Vertragsstaat : ES**

**1.** Verfahren zur Herstellung einer Kupferkomplex-Formazanverbindung entsprechend der allgemeinen Formel (1)

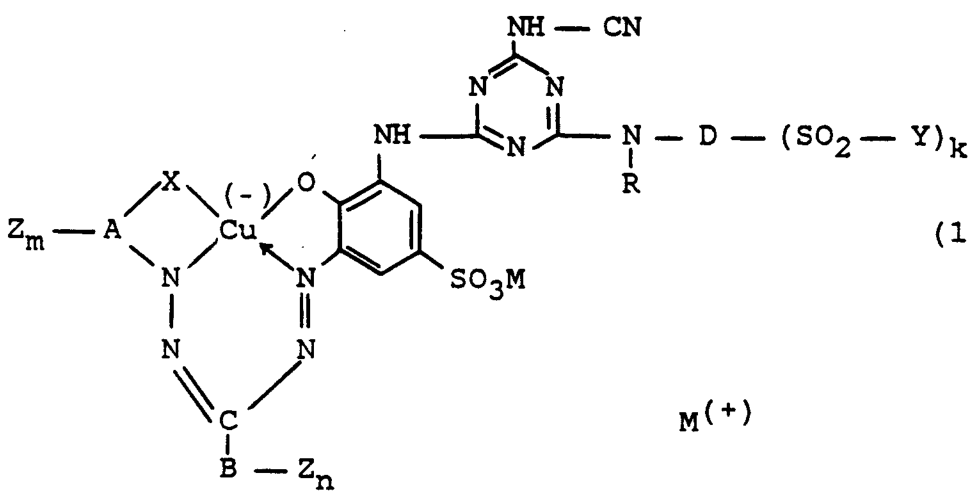

(1)

in welcher bedeuten:

A ist ein Benzol- oder Naphthalinring, die beide durch Substituenten aus der Gruppe Halogen, Nitro, Alkyl von 1 bis 5 C-Atomen, Alkoxy von 1 bis 4 C-Atomen, Alkylsulfonyl von 1 bis 4 C-Atomen, Phenylsulfonyl, Sulfamoyl, N-Monoalkyl- und N,N-Dialkylsulfamoyl mit jeweils 1 bis 4 C-Atomen im Alkyl substituiert sein können;

B ist eine geradkettige oder verzweigt-kettige Alkylengruppe von 1 bis 8 C-Atomen, bevorzugt von 1 bis 4 C-Atomen, oder eine geradkettige oder verzweigtkettige Alkenylengruppe von 2 bis 8 C-Atomen, bevorzugt von 2 bis 4 C-Atomen, wobei diese Alkylen- und Alkenylengruppen noch durch einen Phenylrest substituiert sein können und dieser Phenylrest durch Substituenten aus der Gruppe Methyl, Ethyl, Methoxy, Ethoxy, Fluor, Brom, Chlor und Sulfamoyl substituiert sein kann, oder ist ein Alkylenphenylen-Rest mit 1 bis 4 C-Atomen im Alkylenteil oder ein Alkenylen-phenylen-Rest mit 2 bis 4 C-Atomen; im Alkenylenteil, wobei der Phenylenrest durch Substituenten aus der Gruppe Methyl, Ethyl, Methoxy, Ethoxy, Fluor, Chlor, Brom und Sulfamoyl substituiert sein kann, oder ist ein Phenylen- oder

Naphthylenrest, bevorzugt ein Phenylenrest, die beide durch Substituenten aus der Gruppe Hydroxy, Nitro, Halogen, Alkyl von 1 bis 5 C-Atomen, Alkoxy von 1 bis 4 C-Atomen und Carbalkoxy mit 1 bis 4 C-Atomen im Alkylrest substituiert sein können, oder ist der bivalente Rest des Furans, Thiophens, Pyrrols, Imidazols, Indols, Pyrazols, Pyridins, Pyrimidins, Chinolins und Benzimidazols, oder

-B-Z bedeuten zusammen ein Wasserstoffatom;

Z ist eine wasserlöslich machende Gruppe, vorzugsweise eine Sulfogruppe, als ein zu den obengenannten Substituenten von A und B zusätzlicher Substituent an A und B, der an ein aromatisches Kohlenstoffatom oder ein aliphatisches Kohlenstoffatom von A oder B oder an ein aliphatisches Kohlenstoffatom eines Substituenten von A gebunden ist;

k ist die Zahl 1 oder 2, vorzugsweise 1;

m ist die Zahl Null, 1 oder 2 (wobei im Falle m gleich Null die Gruppe Z ein Wasserstoffatom bedeutet);

n ist die Zahl Null, 1 oder 2 (wobei im Falle n gleich Null die Gruppe Z ein Wasserstoffatom bedeutet);

die Summe von $(m + n)$ ist gleich 1 bis 4;

sofern Z im Molekül zwei- oder dreimal enthalten ist, kann es innerhalb der angegebenen Bedeutung verschiedene Bedeutungen besitzen;

X ist ein Sauerstoffatom oder die Carbonyloxygruppe der Formel -CO-O- , wobei die Gruppe X und das N-Atom in ortho-Stellung zueinander an den aromatischen Kern von A gebunden sind;

R ist ein Wasserstoffatom oder eine unsubstituierte oder substituierte Alkylgruppe von 1 bis 4 C-Atomen;

D ist ein Phenylenrest, der substituiert sein kann, oder ein Naphthylenrest, der substituiert sein kann, oder ist ein Alkylenrest von 1 bis 8 C-Atomen oder ein Alkylenrest von 2 bis 8 C-Atomen, der durch 1 oder mehrere Heterogruppen unterbrochen und/oder durch 1 oder 2 Substituenten aus der Gruppe Hydroxy, Sulfo, Carboxy, Sulfato, Phosphato und Alkanoyloxy von 2 bis 5 C-Atomen ist, oder ist ein Rest der allgemeinen Formel (2a), (2b), (2c), (2d), (2e), (2f), (2g) oder (2h)

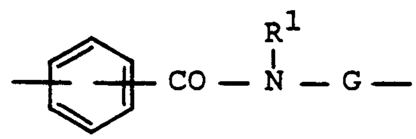

(2a)

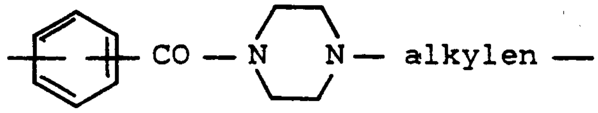

(2b)

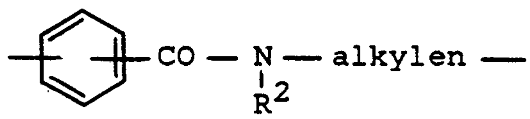

(2c)

— arylen — alkylen — (2d)

— alkylen — arylen — (2e)

— arylen — alkylen — arylen — (2f)

— alkylen — arylen — alkylen — (2g)

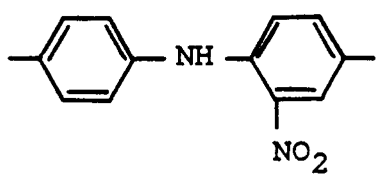

(2h)

in welchen

- $R^1$ Wasserstoff oder Alkyl von 1 bis 4 C-Atomen ist,
- $R^2$ Wasserstoff oder Alkyl von 1 bis 4 C-Atomen ist, das durch eine Gruppe der allgemeinen Formel $-SO_2-Y$ mit Y der nachstehend angegebenen Bedeutung oder Carboxy, Sulfato, Methoxy, Ethoxy oder Chlor substituiert sein kann, oder ist Phenyl, das durch 1 oder 2 Substituenten aus der Gruppe Methyl, Methoxy, Ethoxy, Sulfo, Carboxy und Chlor substituiert sein kann,
- G ein Phenylrest ist, der durch 1 oder 2 Substituenten aus der Gruppe Chlor, Alkyl von 1 bis 4 C-Atomen, Alkoxy von 1 bis 4 C-Atomen, Hydroxy, Sulfo und Carboxy substituiert sein kann,

arylen ein Phenylenrest ist, der durch 1 oder 2 Substituenten aus der Gruppe Chlor, Brom, Nitro, Alkoxy von 1 bis 4 C-Atomen, Alkyl von 1 bis 4 C-Atomen, Carboxy und Sulfo substituiert sein kann, oder ein Naphthylenrest ist, der durch 1 oder 2 Sulfogruppen substituiert sein kann,

alkylen ein Alkylenrest von 1 bis 8 C-Atomen oder ein Alkylenrest von 2 bis 8 C-Atomen ist, der durch 1 oder mehrere Heterogruppen unterbrochen ist und/oder durch 1 oder 2 Substituenten aus der Gruppe Hydroxy, Sulfo, Carboxy, Sulfato, Phosphato und Alkanoyloxy von 2 bis 5 C-Atomen substituiert ist, und

die Alkylen- und Arylen-Anteile in den Resten der allgemeinen Formeln (2d) bis (2g) jeweils durch eine der obengenannten Heterogruppen voneinander getrennt sein können;

- Y ist die Vinylgruppe oder eine Ethylgruppe, die in β-Stellung durch einen alkalisch eliminierbaren Substituenten substituiert ist;
- M ist ein Wasserstoffatom oder ein Alkalimetall oder das Äquivalent eines Erdalkalimetalls;

dadurch gekennzeichnet, daß man zur Herstellung einer Kupferkomplex-Formazan-Verbindung, in welcher D ein gegebenenfalls substituierter Phenylen- oder Naphthylenrest oder ein Rest der allgemeinen Formel (2a), (2b), (2c), (2d), (2f) oder (2h) ist, eine Dihalogen-triazinylamino-Kupferformazanverbindung der allgemeinen Formel (3)

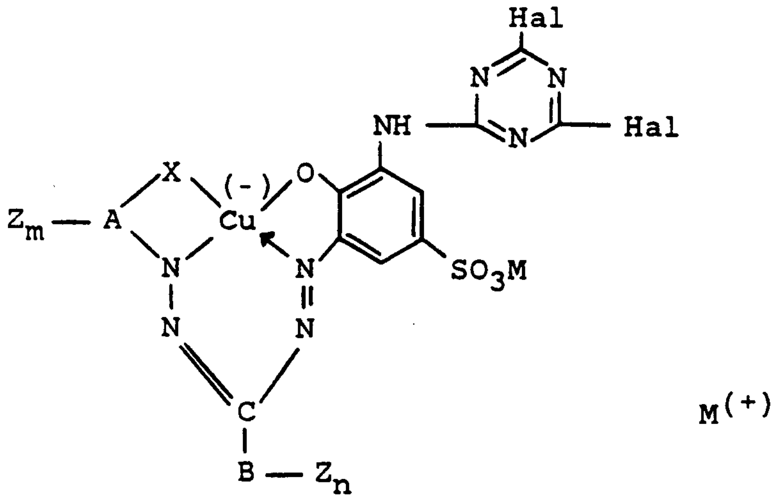

(3)

in welcher Z, m, n, A, B, X und M die oben genannten Bedeutungen haben und Hal für ein Halogenatom, bevorzugt Chloratom, steht, mit Cyanamid oder dessen Alkalimetallsalz und mit einer aromatischen Aminoverbindung der allgemeinen Formel (4)

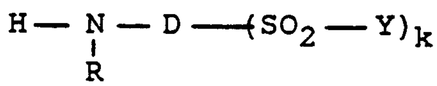

(4)

in welcher R, k und Y die oben genannten Bedeutungen haben und D die eben genannte Bedeutung besitzt, umsetzt, oder daß man eine Verbindung der allgemeinen Formel (5)

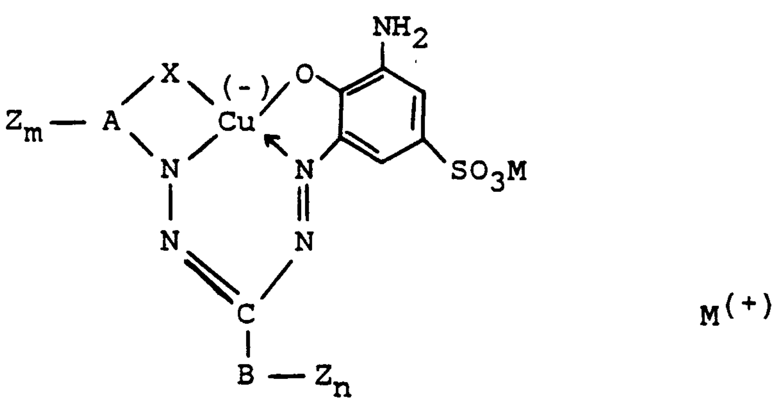

(5)

in welcher Z, m, n, A, B, X und M die oben genannten Bedeutungen haben, mit einer Dihalogentriazinylamino-Verbindung der allgemeinen Formel (6)

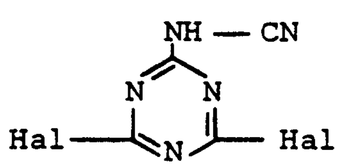

(6)

in welcher Hal die obengenannte Bedeutung besitzt, umsetzt und die so erhaltene Kupferformazanverbindung der allgemeinen Formel (7)

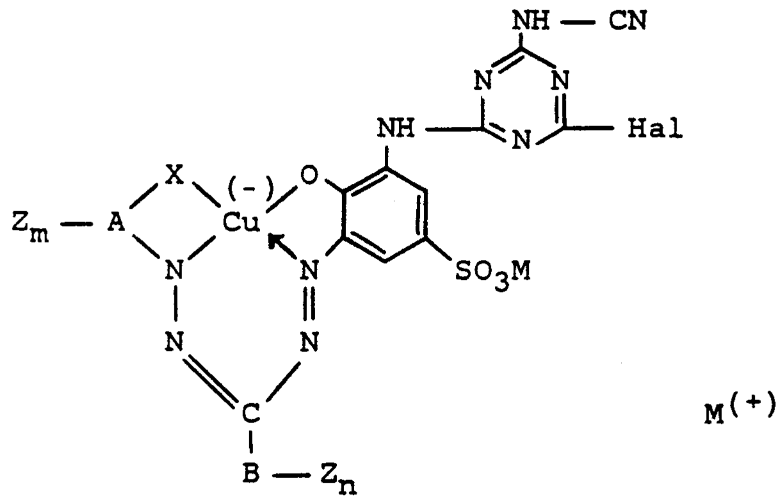

(7)

in welcher Z, m, n, A, B, X, M und Hal die obengenannten Bedeutungen haben, mit einer Aminoverbindung der allgemeinen Formel (4) mit D der eben genannten Bedeutung umsetzt, oder daß man zur Herstellung einer Verbindung der allgemeinen Formel (1) mit D der für Formel (1) genannten Bedeutung eine Verbindung der allgemeinen Formel (5) mit einer Verbindung der allgemeinen Formel (6A)

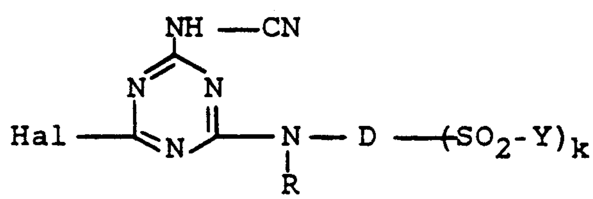

(6A)

in welcher Hal, R, D, Y und k die oben genannten Bedeutungen haben, umsetzt.

2. Verfahren nach Anspruch 1, dadurch gekennzeichnet, daß A ein Benzolring ist.

3. Verfahren nach Anspruch 1 oder 2, dadurch gekennzeichnet, daß B ein Phenylenrest ist.

4. Verfahren nach mindestens einem der Ansprüche 1 bis 3, dadurch gekennzeichnet, daß D ein Phenylenrest ist, der unsubstituiert oder durch Substituenten aus der Gruppe Hydroxy, Nitro, Chlor, Brom, Fluor, Alkoxy von 1 bis 4 C-Atomen, Alkyl von 1 bis 4 C-Atomen, Sulfo, Carboxy, β-Sulfatoethylthio, Alkylamino und Dialkylamino mit jeweils 1 bis 4 C-Atomen im Alkylrest substituiert ist, wobei eine oder beide der Alkylgruppen von Alkylamino und Dialkylamino durch Hydroxy, Sulfo, Carboxy, Sulfato, Phosphato, Alkoxy von 1 bis 4 C-Atomen, Alkoxyalkoxy mit jeweils 1 bis 4 C-Atomen im Alkyl- bzw. Alkylenrest, Hydroxyalkoxy mit 1 bis 4 C-Atomen im Alkylenrest, Sulfatoalkoxy mit 1 bis 4 C-Atomen im Alkylenrest und Succinylamido substituiert sein können.

5. Verfahren nach mindestens einem der Ansprüche 1 bis 4, dadurch gekennzeichnet, daß Y die Vinylgruppe oder eine β-Chlorethyl- oder β-Bromethyl-Gruppe oder eine β-Alkanoyloxy-ethyl-Gruppe mit einem Alkanoylrest von 2 bis 5 C-Atomen oder eine β-Benzoyloxy-ethyl- oder β-Sulfobenzoyloxyethyl- oder β-(p-Methyl-phenylsulfonyloxy)-ethyl- oder eine β-Dialkylamino-ethyl-Gruppe mit Alkylresten von 1 bis 4 C-Atomen oder eine β-Phosphatoethyl- oder β-Thiosulfotoethyl- oder β-Sulfatoethyl-Gruppe ist.

6. Verfahren nach Anspruch 1, dadurch gekennzeichnet, daß die Verbindung der Formel (1) eine Verbindung entsprechend der allgemeinen Formel (1a)

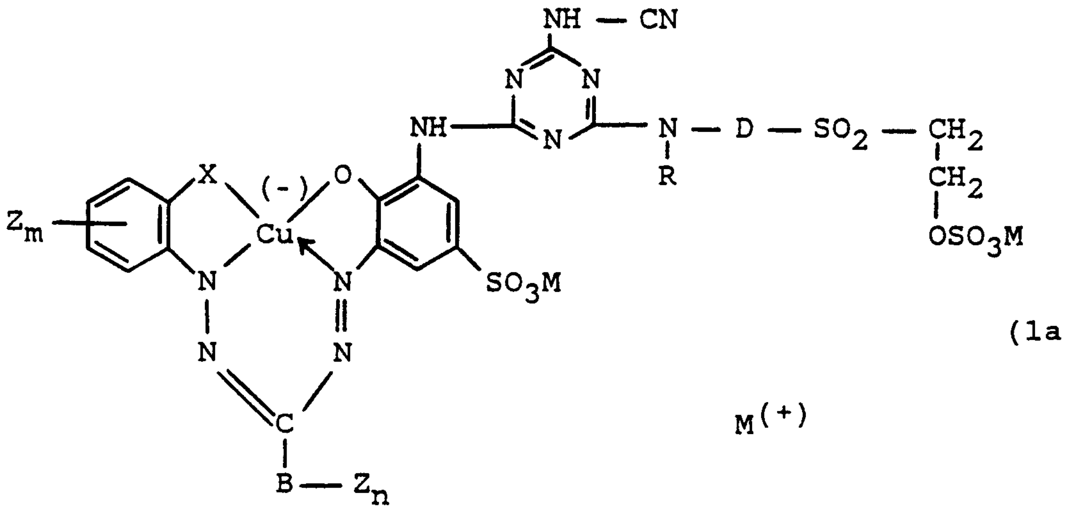

(1a)

ist, in welcher bedeuten:

X ist ein Sauerstoffatom oder die Carbonyloxygruppe;
B ist ein Benzolring, der durch Chlor, Methyl, Methoxy oder Ethoxy substituiert sein kann;
Z ist eine Sulfogruppe;
m ist die Zahl 1 oder 2, bevorzugt 1;
n ist die Zahl Null oder 1, bevorzugt Null;
die Summe von (m + n) ist 1 oder 2, bevorzugt 1;
R ist ein Waserstoffatom oder eine Alkylgruppe von 1 bis 4 C-Atomen;
D ist der meta- oder para-Phenylenrest;
M ist ein Wasserstoffatom oder ein Alkalimetall.

7. Verfahren nach Anspruch 1, dadurch gekennzeichnet, daß die Verbindung der Formel (1) eine Verbindung der allgemeinen Formel (1b)

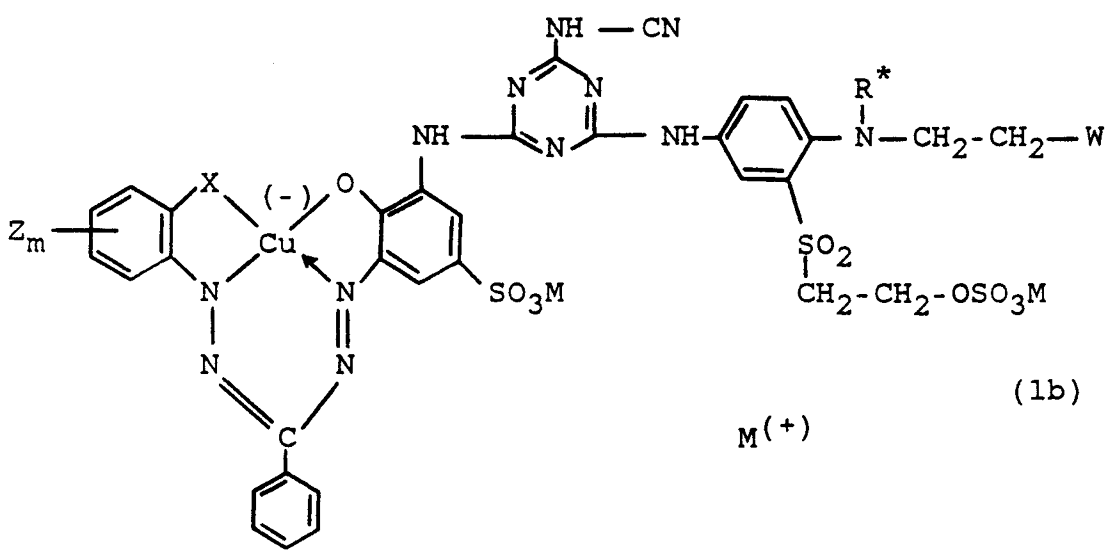

(1b)

ist, in welcher bedeuten:

X ist ein Sauerstoffatom oder die Carbonyloxygruppe;
Z ist eine Sulfogruppe;

- m ist die Zahl 1 oder 2, bevorzugt 1;
- R* ist ein Wasserstoffatom oder die Methylgruppe;
- W ist die Sulfato- oder Sulfogruppe oder die β-Sulfatoethoxy-Gruppe oder die Succinylamido-Gruppe;
- M ist ein Wasserstoffatom oder ein Alkalimetall.

**8.** Verfahren nach mindestens einem der Ansprüche 1 bis 7, dadurch gekennzeichnet, daß X die Carbonyloxygruppe ist.

**9.** Verfahren nach mindestens einem der Ansprüche 1 bis 6 und 8, dadurch gekennzeichnet, daß D der meta-Phenylenrest ist.

**10.** Verfahren nach Anspruch 1, dadurch gekennzeichnet, daß die Verbindung der Formel (1) eine Verbindung entsprechend der allgemeinen Formel (1c)

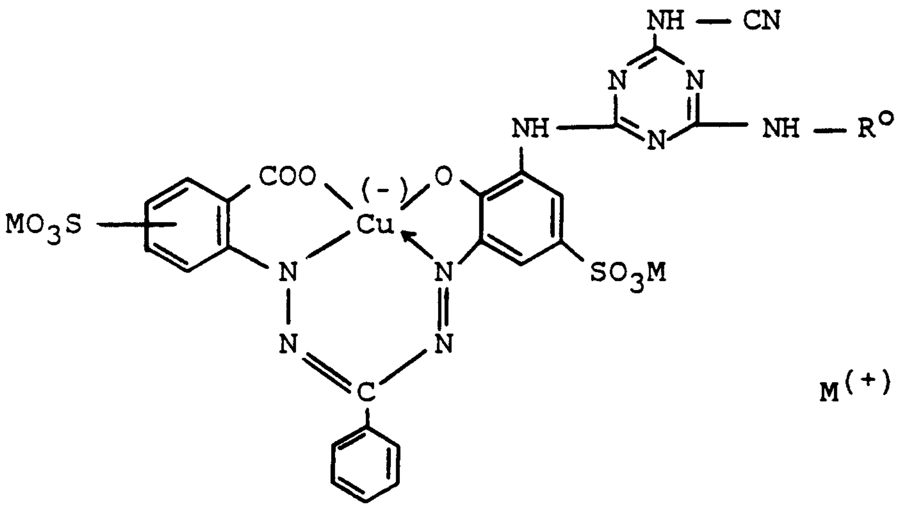

(1c)

ist, in welcher bedeuten:

- M ist ein Wasserstoffatom oder ein Alkalimetall;
- R° ist die 4-(β-Sulfatoethylsulfonyl)-phenyl-, die 2-Chlor-5-(β-sulfatoethylsulfonyl)-phenyl-, die 2-Methoxy-5-(β-sulfatoethylsulfonyl)-phenyl-, die 4-Chlor-3-(β-sulfatoethylsulfonyl)-phenyl-, die 4-Methoxy-3-(β-sulfatoethylsulfonyl)-phenyl- oder bevorzugt die 3-(β-Sulfatoethylsulfonyl)-phenyl-Gruppe.

**11.** Verfahren nach Anspruch 10, dadurch gekennzeichnet, daß die Sulfogruppe $-SO_3M$ in para-Stellung zur Carbonyloxygruppe steht.

**12.** Verwendung einer Verbindung entsprechend der allgemeinen Formel (1) von Anspruch 1 zum Färben (einschließlich Bedrucken) von hydroxy- und/oder carbonamidgruppenhaltigem Material, insbesondere Fasermaterial.

**13.** Verfahren zum Färben (einschließlich Bedrucken) von hydroxy- und/oder carbonamidgruppenhaltigem Material, insbesondere Fasermaterial, bei welchem man einen Farbstoff auf das Material aufbringt oder darin einbringt und ihn mittels Wärme und/oder mit Hilfe eines alkalisch wirkenden Mittels fixiert, dadurch gekennzeichnet, daß man als Farbstoff eine Verbindung entsprechend der allgemeinen Formel (1) von Anspruch 1 einsetzt.

## Claims

### Claims for the following Contracting States : DE, GB, FR, IT, NL, CH, LI, BE, AT

1. A copper complex formazan compound conforming to the general formula (1)

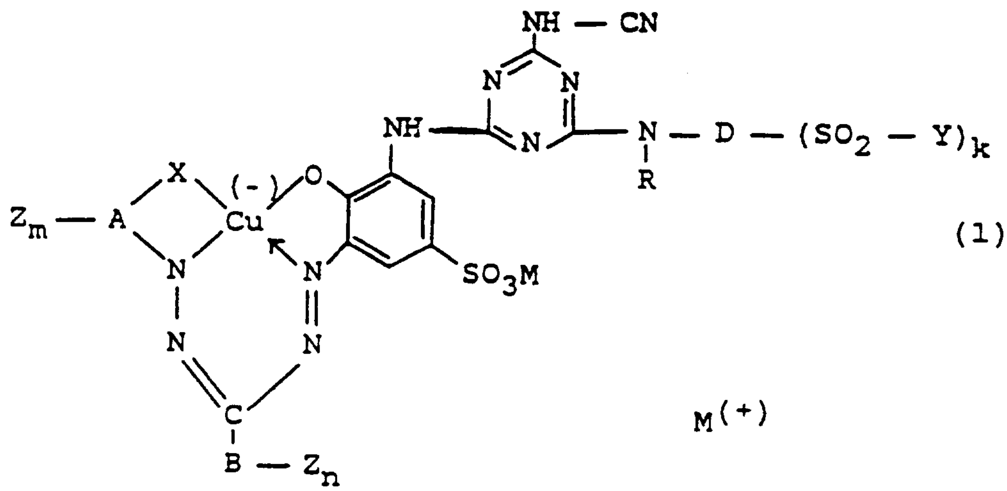

(1)

$M^{(+)}$

where

A is a benzene or naphthalene ring, which may each be substituted by substituents selected from the group consisting of halogen, nitro, alkyl of 1 to 5 carbon atoms, alkoxy of 1 to 4 carbon atoms, alkylsulfonyl of 1 to 4 carbon atoms, phenylsulfonyl, sulfamoyl and N-monoalkyl- and N,N-dialkylsulfamoyl each of 1 to 4 carbon atoms in the alkyl;

B is a straight-chain or branched-chain alkylene group of 1 to 8 carbon atoms, preferably of 1 to 4 carbon atoms, or a straight-chain or branched-chain alkenylene group of 2 to 8 carbon atoms, preferably of 2 to 4 carbon atoms, which may each be substituted by a phenyl radical which in turn may be substituted by substituents selected from the group consisting of methyl, ethyl, methoxy, ethoxy, fluorine, bromine, chlorine and sulfamoyl, or is alkylenephenylene having 1 to 4 carbon atoms in the alkylene moiety or alkenylenephenylene having 2 to 4 carbon atoms in the alkenylene moiety, in each of which the phenylene may be substituted by substituents selected from the group consisting of methyl, ethyl, methoxy, ethoxy, fluorine, chlorine, bromine and sulfamoyl, or is phenylene or naphthylene, preferably phenylene, which may each be substituted by substituents from the group consisting of hydroxyl, nitro, halogen, alkyl of 1 to 5 carbon atoms, alkoxy of 1 to 4 carbon atoms, and carbalkoxy having 1 to 4 carbon atoms in the alkyl moiety, or is the bivalent radical of furan, thiophene, pyrrole, imidazole, indole, pyrazole, pyridine, pyrimidine, quinoline or benzimidazole, or

-B-Z is together hydrogen;

Z is a water-solubilizing group, preferably a sulfo group, attached as additional substituent on A and B to an aromatic or aliphatic carbon atom of A and B or to an aliphatic carbon atom of a substitutent of A;

k is 1 or 2, preferably 1;

m is zero, 1 or 2 (if zero, Z being hydrogen);

n is zero, 1 or 2 (if zero, Z being hydrogen);

the sum (m + n) is from 1 to 4;

if Z is present two or three times in the molecule, it may have different meanings within the stated meanings;

X is oxygen or carbonyloxy of the formula -CO-O-, the group X and the N atom being bonded ortho to each other to the aromatic nucleus of A;

R is hydrogen or substituted or unsubstituted alkyl of 1 to 4 carbon atoms;

D is phenylene which may be substituted, naphthylene which may be substituted, alkylene of 1 to 8 carbon atoms, alkylene of 2 to 8 carbon atoms which is interrupted by 1 or more hetero groups and/or substituted by 1 or 2 substituents from the group consisting of hydroxyl, sulfo,

carboxyl, sulfato, phosphato and alkanoyloxy of 2 to 5 carbon atoms, or a radical of the general formula (2a), (2b), (2c), (2d), (2e), (2f), (2g) or (2h)

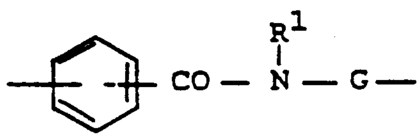 (2a)

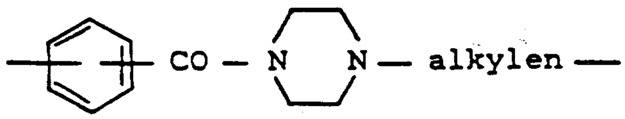 (2b)

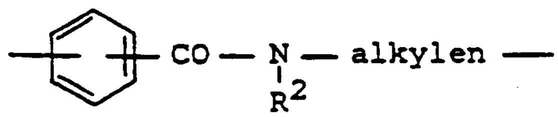 (2c)

— arylen — alkylen — (2d)

— alkylen — arylen — (2e)

— arylen — alkylen — arylen — (2f)

— alkylen — arylen — alkylen — (2g)

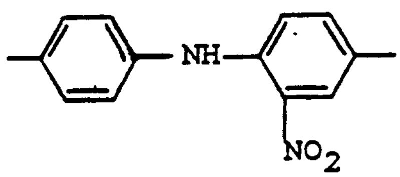 (2h)

in which

- $R^1$ is hydrogen or alkyl of 1 to 4 carbon atoms,
- $R^2$ is hydrogen, alkyl of 1 to 4 carbon atoms, which may be substituted by a group of the general formula $-SO_2-Y$, where Y is as defined hereinafter, or by carboxyl, sulfato, methoxy, ethoxy or chlorine, or phenyl which may be substituted by 1 or 2 substituents from the group consisting of methyl, methoxy, ethoxy, sulfo, carboxyl and chlorine,
- G is phenyl which may be substituted by 1 or 2 substituents from the group consisting of chlorine, alkyl of 1 to 4 carbon atoms, alkoxy of 1 to 4 carbon atoms, hydroxyl, sulfo and carboxyl,

arylen is phenylene which may be substituted by 1 or 2 substituents from the group consisting of chlorine, bromine, nitro, alkoxy of 1 to 4 carbon atoms, alkyl of 1 to 4 carbon atoms, carboxyl and sulfo, or is naphthylene which may be substituted by 1 or 2 sulfo groups,

alkylen is alkylene of 1 to 8 carbon atoms, or alkylene of 2 to 8 carbon atoms which is interrupted by 1 or more hetero groups, and/or may be substituted by 1 or 2 substituents from the group consisting of hydroxyl, sulfo, carboxyl, sulfato, phosphato and alkanoyloxy of 2 to 5 carbon atoms, and

the alkylene and arylene moieties in the radicals of the general formulae (2d) to (2g) may in each case be separated from each other by one of the abovementioned hetero groups;

- Y is vinyl or an ethyl group which is substituted in the $\beta$-position by a substituent which can be eliminated under alkaline conditions; and
- M is hydrogen, an alkali metal, or one equivalent of an alkaline earth metal.

**2.** A compound as claimed in claim 1, wherein A is a benzene ring.

3. A compound as claimed in claim 1 or 2, wherein B is a phenylene radical.

4. A compound as claimed in at least one of claims 1 to 3, wherein D is a phenylene radical which is unsubstituted or substituted by substituents selected from the group consisting of hydroxyl, nitro, chlorine, bromine, fluorine, alkoxy of 1 to 4 carbon atoms, alkyl of 1 to 4 carbon atoms, sulfo, carboxyl, β-sulfatoethylthio, alkylamino and dialkylamino each of 1 to 4 carbon atoms in the alkyl radical, either or both of the alkyl groups in alkylamino and dialkylamino being unsubstituted or substituted by hydroxyl, sulfo, carboxyl, sulfato, phosphato, alkoxy of 1 to 4 carbon atoms, alkoxyalkoxy having 1 to 4 carbon atoms in each alkyl or alkylene radical, hydroxyalkoxy having 1 to 4 carbon atoms in the alkylene radical, sulfatoalkoxy having 1 to 4 carbon atoms in the alkylene radical and succinylamido.

5. A compound as claimed in at least one of claims 1 to 4, wherein Y is vinyl, β-chloroethyl, β-bromoethyl, β-alkanoyloxyethyl having an alkanoyl radical of 2 to 5 carbon atoms, β-benzoyloxyethyl, β-sulfobenzoyloxyethyl, β-(p-methylphenylsulfonyloxy)ethyl, β-dialkylaminoethyl having alkyl radicals of 1 to 4 carbon atoms, β-phosphatoethyl, β-thiosulfatoethyl or β-sulfatoethyl.

6. A compound as claimed in claim 1 conforming to the general formula (1a)

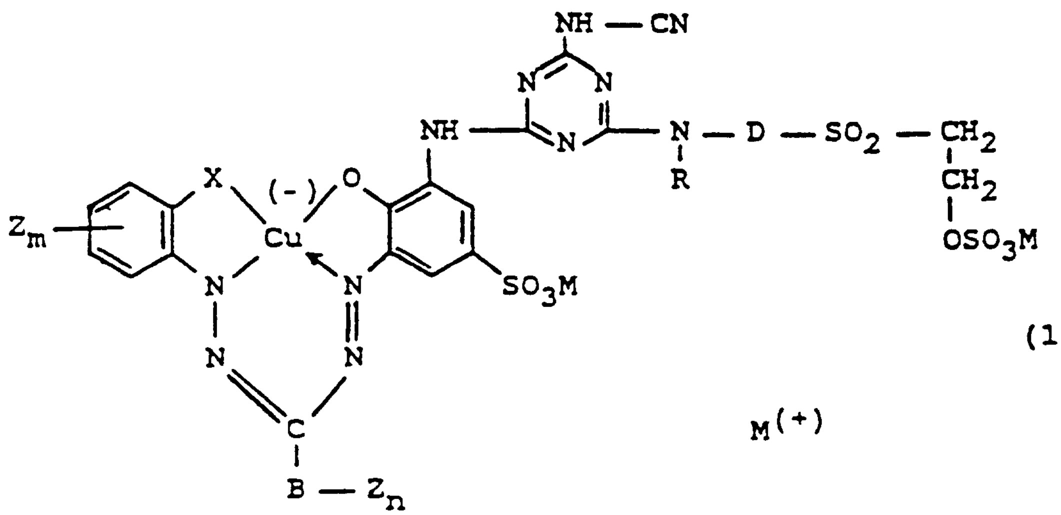

(1a)

where
- X is oxygen or carbonyloxy,
- B is a benzene ring which may be substituted by chlorine, methyl, methoxy or ethoxy,
- Z is sulfo,
- m is 1 or 2, preferably 1,
- n is zero or 1, preferably zero,
- the sum (m + n) is 1 or 2, preferably 1,
- R is hydrogen or alkyl of 1 to 4 carbon atoms,
- D is meta- or para-phenylene, and
- M is hydrogen or an alkali metal.

7. A compound as claimed in claim 1 of the general formula (1b)

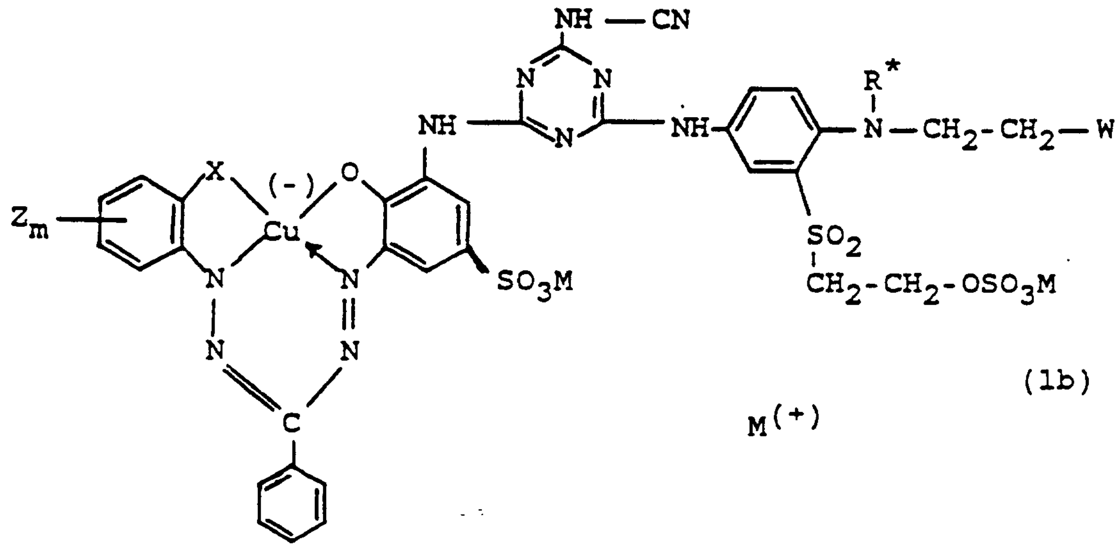

(1b)

where

- X is oxygen or carbonyloxy,
- Z is sulfo,
- m is 1 or 2, preferably 1,
- R* is hydrogen or methyl,
- W is sulfato, sulfo, β-sulfatoethoxy or succinylamido, and
- M is hydrogen or an alkali metal.

8. A compound as claimed in at least one of claims 1 to 7, wherein X is carbonyloxy.

9. A compound as claimed in at least one of claims 1 to 6 and 8, wherein D is meta-phenylene.

10. A compound as claimed in claim 1 conforming to the general formula (1c)

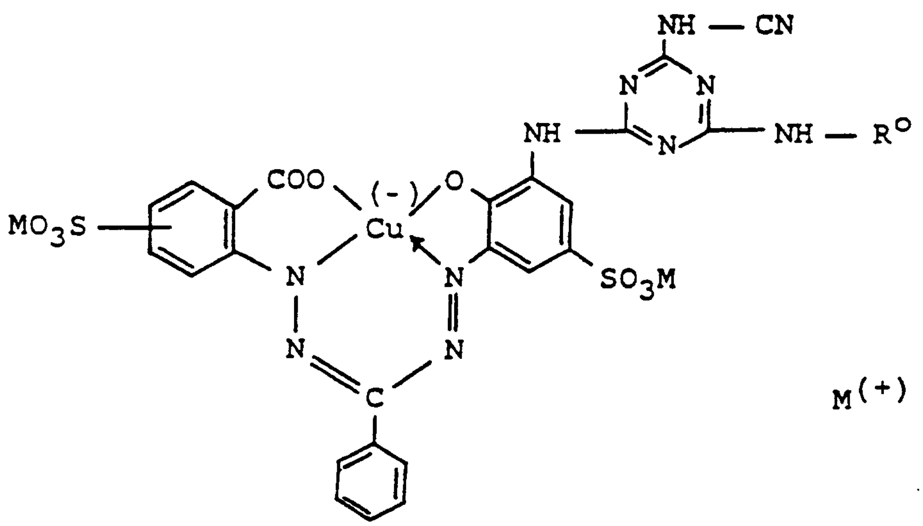

(1c)

where

- M is hydrogen or an alkali metal, and
- R° is 4-(β-sulfatoethylsulfonyl)phenyl, 2-chloro-5-(β-sulfatoethylsulfonyl)phenyl, 2-methoxy-5-(β-sulfatoethylsulfonyl)phenyl, 4-chloro-3-(β-sulfatoethylsulfonyl)phenyl, 4-methoxy-3-(β-sulfatoethylsulfonyl)phenyl or preferably 3-(β-sulfatoethylsulfonyl)phenyl.

**11.** A compound as claimed in claim 10, wherein the sulfo group $-SO_3M$ is para to the carbonyloxy group.

**12.** A process for preparing a copper complex formazan compound of claim 1 where D is substituted or unsubstituted phenylene or naphthylene or a radical of the general formula (2a), (2b), (2c), (2d), (2f) or (2h), which comprises reacting a dihalotriazinylamino copper formazan compound of the general formula (3)

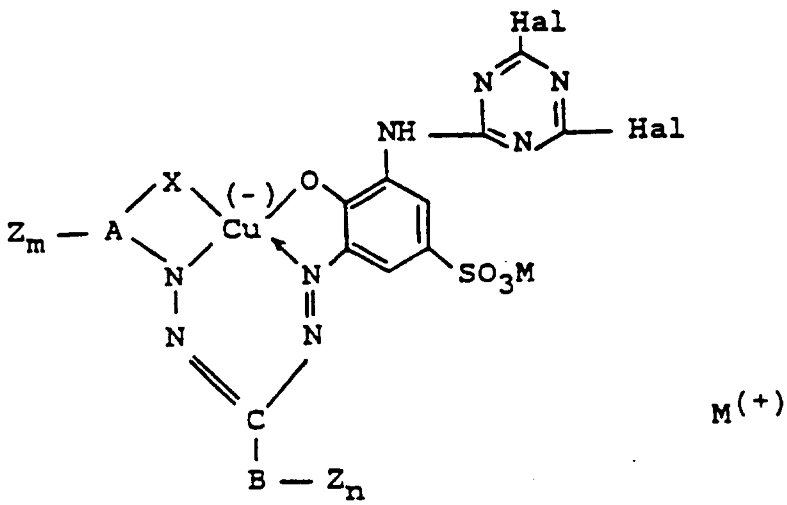

(3)

where Z, m, n, A, B, X and M are each as defined in claim 1 and Hal is halogen, preferably chlorine, with cyanamide or an alkali metal salt thereof and with an aromatic amino compound of the general formula (4)

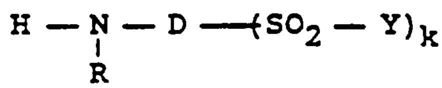

(4)

where R, k and Y are each as defined in claim 1 and D is as just defined, or reacting a compound of the general formula (5)

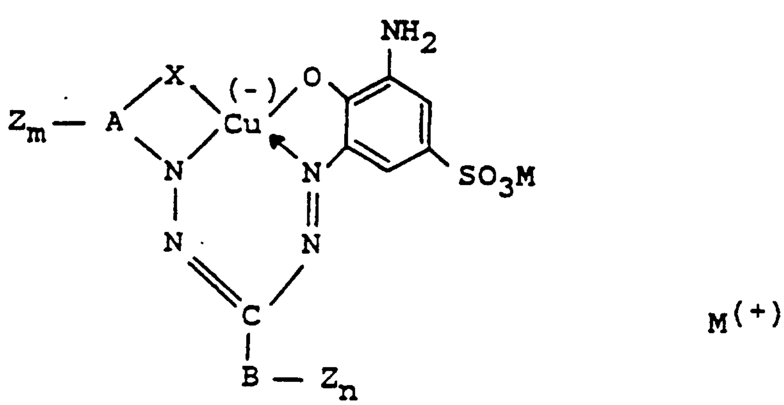

(5)

where Z, m, n, A, B, X and M are each as defined in claim 1, with a dihalotriazinylamino compound of the general formula (6)

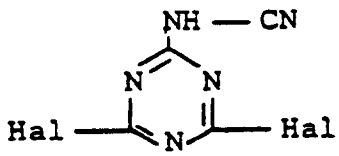

(6)

where Hal is as defined above, and reacting the resulting copper formazan compound of the general formula (7)

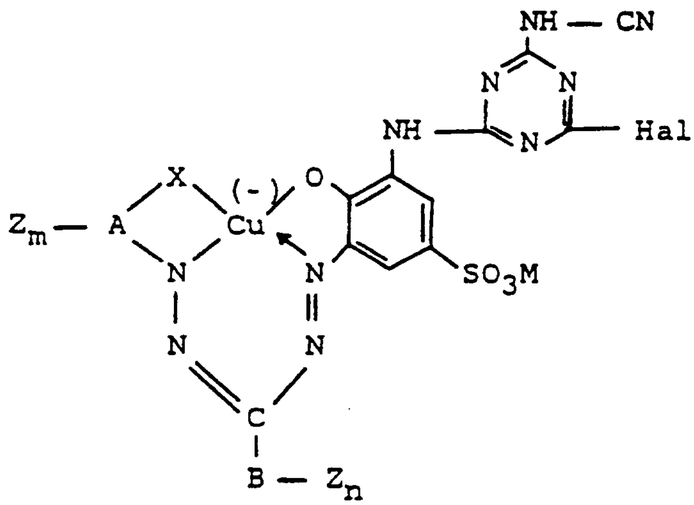

(7)

where Z, m, n, A, B, X, M and Hal are each as defined in claim 1 or above, with an amino compound of the general formula (4), where D is as just defined, or, to prepare a compound of the general formula (1) where D is as defined in claim 1, reacting a compound of the general formula (5) with a compound of the general formula (6A)

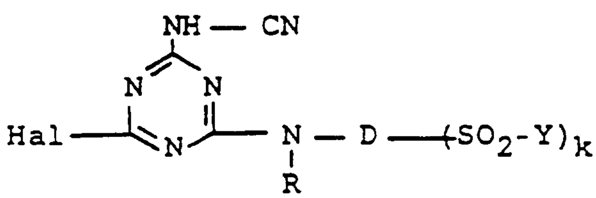

(6A)

where Hal, R, D, Y and k are each as defined in claim 1.

**13.** The use of a compound conforming to the general formula (1) of claim 1 for dyeing (including printing) hydroxyl- and/or carboxamido-containing material, in particular fiber material.

**14.** A process for dyeing (including printing) hydroxyl- and/or carboxamido-containing material, in particular fiber material, in which a dye is applied to or introduced into the material and fixed by means of heat and/or with the aid of an alkaline agent, which comprises using as the dye a compound conforming to the general formula (1) of claim 1.

**Claims for the following Contracting State : ES**

1. A process for preparing a copper complex formazan compound conforming to the general formula (1)

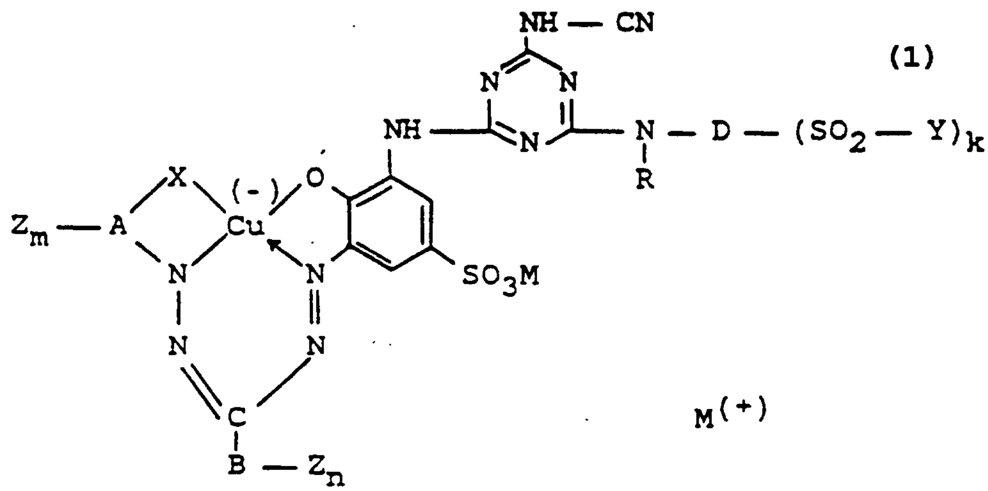

(1)

where

A is a benzene or naphthalene ring, which may each be substituted by substituents selected from the group consisting of halogen, nitro, alkyl of 1 to 5 carbon atoms, alkoxy of 1 to 4 carbon atoms, alkylsulfonyl of 1 to 4 carbon atoms such as phenylsulfonyl, sulfamoyl and N-monoalkyl- and N,N-dialkylsulfamoyl each of 1 to 4 carbon atoms in the alkyl;

B is a straight-chain or branched-chain alkylene group of 1 to 8 carbon atoms, preferably of 1 to 4 carbon atoms, or a straight-chain or branched-chain alkenylene group of 2 to 8 carbon atoms, preferably of 2 to 4 carbon atoms, which may each be substituted by a phenyl radical which in turn may be substituted by substituents selected from the group consisting of methyl, ethyl, methoxy, ethoxy, fluorine, bromine, chlorine and sulfamoyl, or is alkylene phenylene having 1 to 4 carbon atoms in the alkylene moiety or alkenylene phenylene having 2 to 4 carbon atoms in the alkenylene moiety, in each of which the phenylene may be substituted by substituents selected from the group consisting of methyl, ethyl, methoxy, ethoxy, fluorine, chlorine, bromine and sulfamoyl, or is phenylene or naphthylene, preferably phenylene, which may each be substituted by substituents from the group consisting of hydroxyl, nitro, halogen, alkyl of 1 to 5 carbon atoms, alkoxy of 1 to 4 carbon atoms, and carbalkoxy having 1 to 4 carbon atoms in the alkyl moiety, or is the bivalent radical of furan, thiophene, pyrrole, imidazole, indole, pyrazole, pyridine, pyrimidine, quinoline or benzimidazole, or

-B-Z is together hydrogen;

Z is a water-solubilizing group, preferably a sulfo group, attached as additional substituent on A and B to an aromatic or aliphatic carbon atom of A and B or to an aliphatic carbon atom of a substitutent of A;

k is 1 or 2, preferably 1;

m is zero, 1 or 2 (if zero, Z being hydrogen);

n is zero, 1 or 2 (if zero, Z being hydrogen);

the sum (m + n) is from 1 to 4;

if Z is present two or three times in the molecule, it may have different meanings within the stated meanings;

X is oxygen or carbonyloxy of the formula -CO-O-, the group X and the N atom being bonded ortho to each other to the aromatic nucleus of A;

R is hydrogen or substituted or unsubstituted alkyl of 1 to 4 carbon atoms;

D is phenylene which may be substituted, naphthylene which may be substituted, alkylene of 1 to 8 carbon atoms, alkylene of 2 to 8 carbon atoms which is interrupted by 1 or more hetero groups and/or substituted by 1 or 2 substituents from the group consisting of hydroxyl, sulfo, carboxyl, sulfato, phosphato and alkanoyloxy of 2 to 5 carbon atoms, or a radical of the

general formula (2a), (2b), (2c), (2d), (2e), (2f), (2g) or (2h)

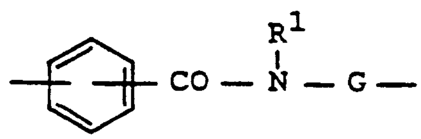 (2a)

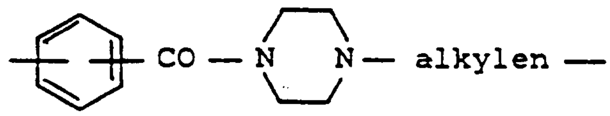 (2b)

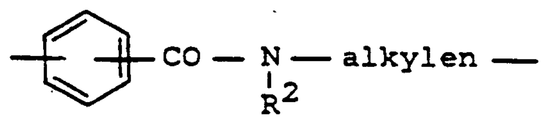 (2c)

— arylen — alkylen — (2d)

— alkylen — arylen — (2e)

— arylen — alkylen — arylen — (2f)

— alkylen — arylen — alkylen — (2g)

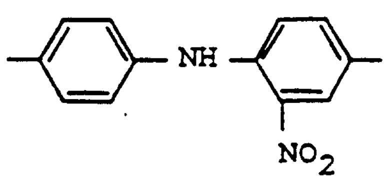 (2h)

in which

$R^1$ is hydrogen or alkyl of 1 to 4 carbon atoms,

$R^2$ is hydrogen, alkyl of 1 to 4 carbon atoms, which may be substituted by a group of the general formula $-SO_2-Y$, where Y is as defined hereinafter, or by carboxyl, sulfato, methoxy, ethoxy or chlorine, or phenyl which may be substituted by 1 or 2 substituents from the group consisting of methyl, methoxy, ethoxy, sulfo, carboxyl and chlorine,

G is phenyl which may be substituted by 1 or 2 substituents from the group consisting of chlorine, alkyl of 1 to 4 carbon atoms, alkoxy of 1 to 4 carbon atoms, hydroxyl, sulfo and carboxyl,

arylen is phenylene which may be substituted by 1 or 2 substituents from the group consisting of chlorine, bromine, nitro, alkoxy of 1 to 4 carbon atoms, alkyl of 1 to 4 carbon atoms, carboxyl and sulfo, or is naphthylene which may be substituted by 1 or 2 sulfo groups,

alkylen is alkylene of 1 to 8 carbon atoms, or alkylene of 2 to 8 carbon atoms which is interrupted by 1 or more hetero groups, and/or may be substituted by 1 or 2 substituents from the group consisting of hydroxyl, sulfo, carboxyl, sulfato, phosphato and alkanoyloxy of 2 to 5 carbon atoms, and

the alkylene and arylene moieties in the radicals of the general formulae (2d) to (2g) may in each case be separated from each other by one of the abovementioned hetero groups;

Y is vinyl or an ethyl group which is substituted in the $\beta$-position by a substituent which can be eliminated under alkaline conditions; and

M is hydrogen, an alkali metal, or one equivalent of an alkaline earth metal,

which comprises, to prepare a copper complex formazan compound where D is substituted or unsubstituted phenylene or naphthylene or a radical of the general formula (2a), (2b), (2c), (2d), (2f) or

(2h), reacting a dihalotriazinylamino copper formazan compound of the general formula (3)

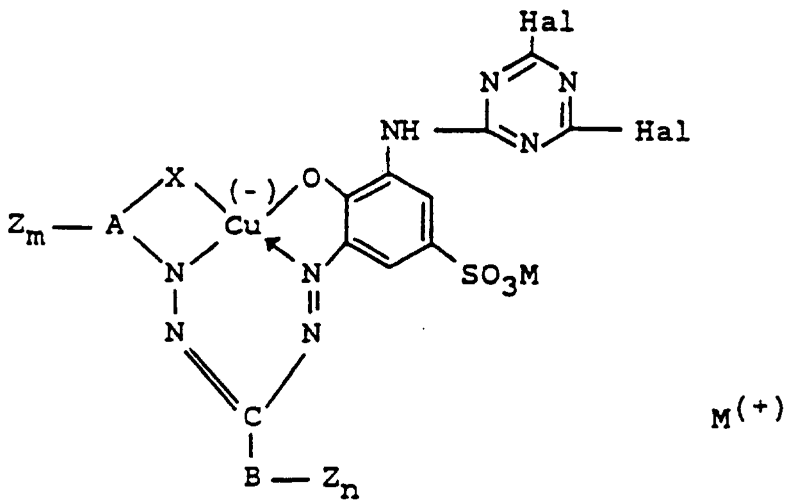

(3)

where Z, m, n, A, B, X and M are each as defined above and Hal is halogen, preferably chlorine, with cyanamide or an alkali metal salt thereof and with an aromatic amino compound of the general formula (4)

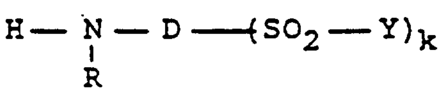

(4)

where R, k and Y are each as defined above and D is as just defined, or reacting a compound of the general formula (5)

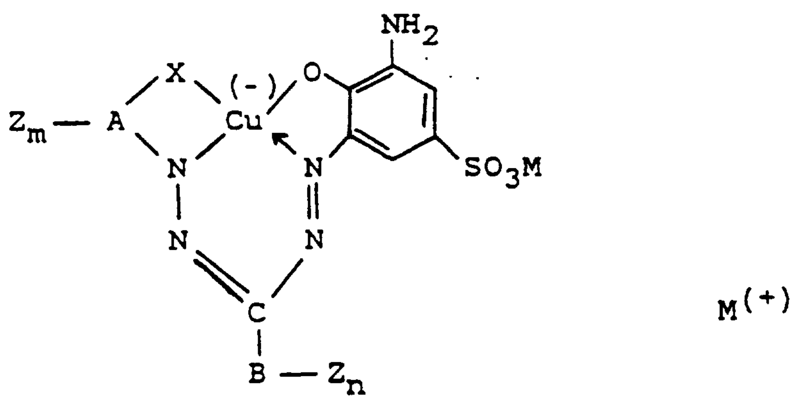

(5)

where Z, m, n, A, B, X and M are each as defined above, with a dihalotriazinylamino compound of the general formula (6)

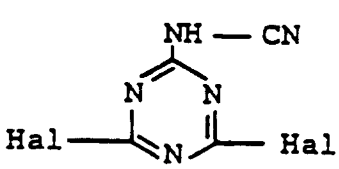

(6)

where Hal is as defined above, and reacting the resulting copper formazan compound of the general

formula (7)

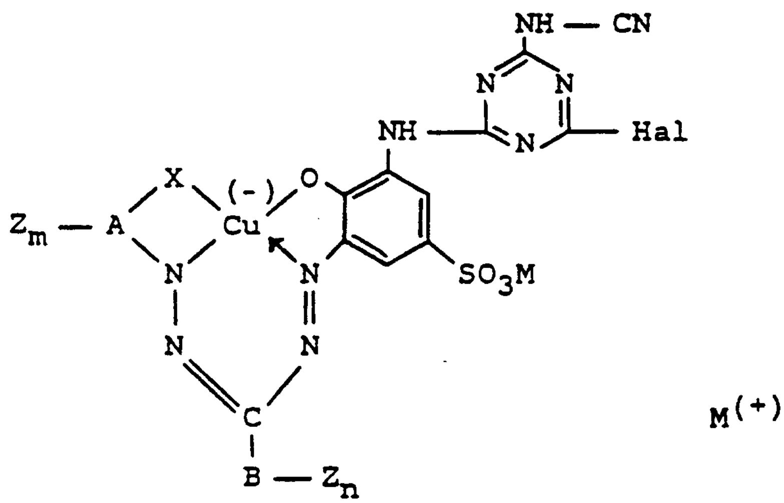

(7)

where Z, m, n, A, B, X, M and Hal are each as defined above, with an amino compound of the general formula (4), where D is as just defined, or, to prepare a compound of the general formula (1) where D is as defined for formula 1, reacting a compound of the general formula (5) with a compound of the general formula (6A)

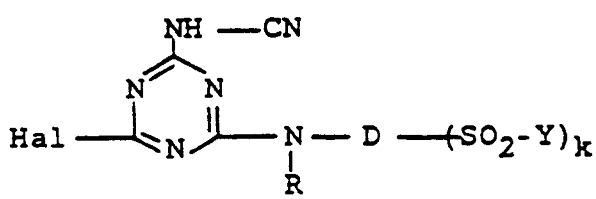

(6A)

where Hal, R, D, Y and k are each as defined above.

2. The process as claimed in claim 1, wherein A is a benzene ring.

3. The process as claimed in claim 1 or 2, wherein B is a phenylene radical.

4. The process as claimed in at least one of claims 1 to 3, wherein D is a phenylene radical which is unsubstituted or substituted by substituents selected from the group consisting of hydroxyl, nitro, chlorine, bromine, fluorine, alkoxy of 1 to 4 carbon atoms, alkyl of 1 to 4 carbon atoms, sulfo, carboxyl, β-sulfatoethylthio, alkylamino and dialkylamino each of 1 to 4 carbon atoms in the alkyl radical, either or both of the alkyl groups in alkylamino and dialkylamino being unsubstituted or substituted by hydroxyl, sulfo, carboxyl, sulfato, phosphato, alkoxy of 1 to 4 carbon atoms, alkoxyalkoxy having 1 to 4 carbon atoms in each alkyl or alkylene radical, hydroxyalkoxy having 1 to 4 carbon atoms in the alkylene radical, sulfatoalkoxy having 1 to 4 carbon atoms in the alkylene radical and succinylamido.

5. The process as claimed in at least one of claims 1 to 4, wherein Y is vinyl, β-chloroethyl, β-bromoethyl, β-alkanoyloxyethyl having an alkanoyl radical of 2 to 5 carbon atoms, β-benzoyloxyethyl, β-sulfobenzoyloxyethyl, β-(p-methylphenylsulfonyloxy)ethyl, β-dialkylaminoethyl having alkyl radicals of 1 to 4 carbon atoms, β-phosphatoethyl, β-thiosulfatoethyl or β-sulfatoethyl.

6. The process as claimed in claim 1, wherein the compound of the formula (1) is a compound conforming to the general formula (1a)

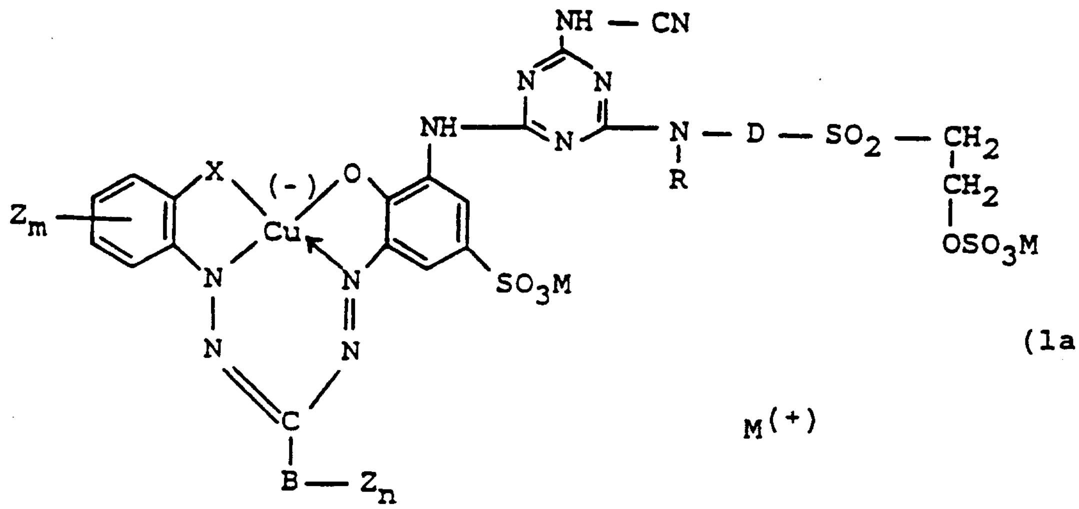

(1a)

where
X is oxygen or carbonyloxy,
B is a benzene ring which may be substituted by chlorine, methyl, methoxy or ethoxy,
Z is sulfo,
m is 1 or 2, preferably 1,
n is zero or 1, preferably zero,
the sum (m + n) is 1 or 2, preferably 1,
R is hydrogen or alkyl of 1 to 4 carbon atoms,
D is meta- or para-phenylene, and
M is hydrogen or an alkali metal.

**7.** The process as claimed in claim 1, wherein the compound of the formula (1) is a compound of the general formula (1b)

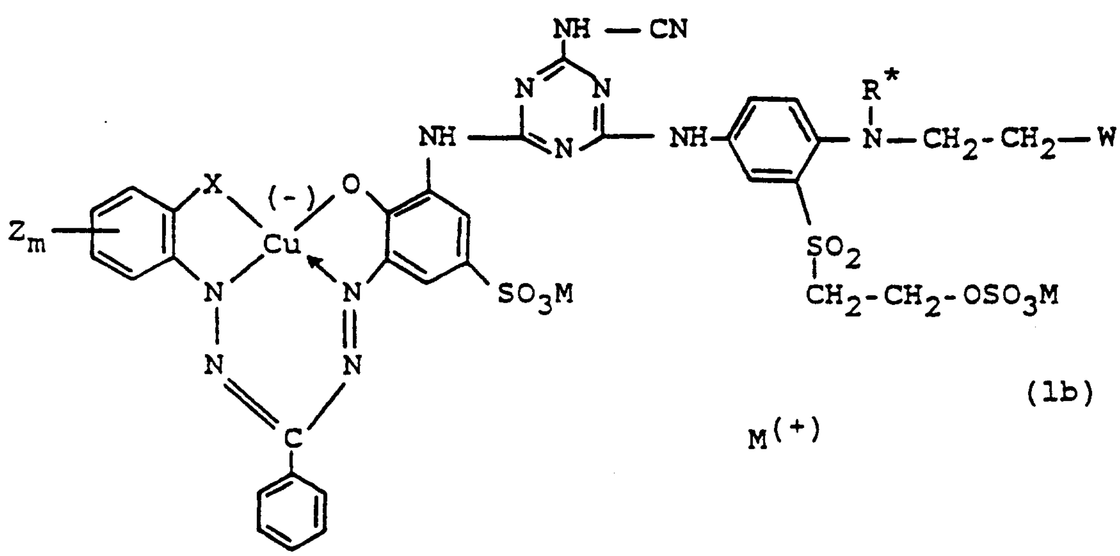

(1b)

where
X is oxygen or carbonyloxy,
Z is sulfo,
m is 1 or 2, preferably 1,
$R^*$ is hydrogen or methyl,

W is sulfato, sulfo, β-sulfatoethoxy or succinylamido, and
M is hydrogen or an alkali metal.

**8.** The process as claimed in at least one of claims 1 to 7, wherein X is carbonyloxy.

**9.** The process as claimed in at least one of claims 1 to 6 and 8, wherein D is meta-phenylene.

**10.** The process as claimed in claim 1, wherein the compound of formula (1) is a compound conforming to the general formula (1c)

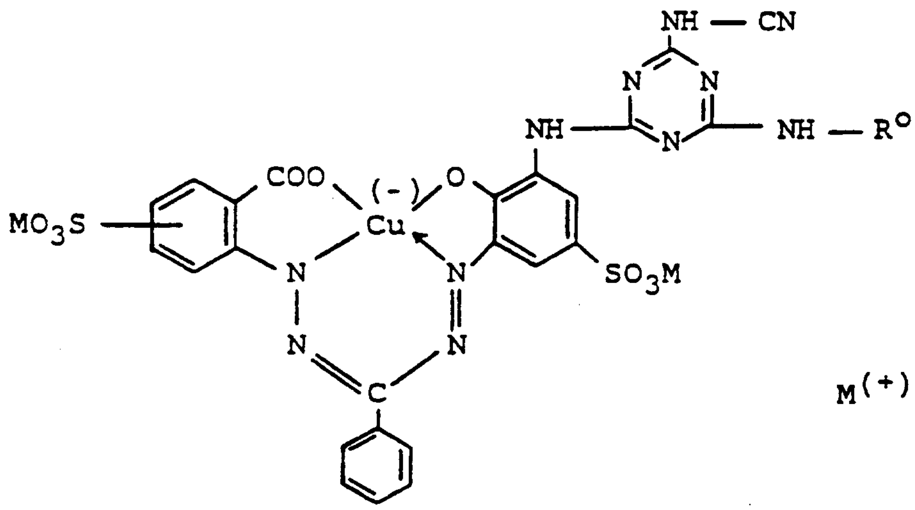

(1c)

where
M is hydrogen or an alkali metal, and
$R^o$ is 4-(β-sulfatoethylsulfonyl)phenyl, 2-chloro-5-(β-sulfatoethylsulfonyl)phenyl, 2-methoxy-5-(β-sulfatoethylsulfonyl)phenyl, 4-chloro-3-(β-sulfatoethylsulfonyl)phenyl, 4-methoxy-3-(β-sulfatoethylsulfonyl)phenyl or preferably 3-(β-sulfatoethylsulfonyl)phenyl.

**11.** The process as claimed in claim 10, wherein the sulfo group $-SO_3M$ is para to the carbonyloxy group.

**12.** The use of a compound conforming to the general formula (1) of claim 1 for dyeing (including printing) hydroxyl- and/or carboxamido-containing material, in particular fiber material.

**13.** A process for dyeing (including printing) hydroxyl- and/or carboxamido-containing material, in particular fiber material, in which a dye is applied to or introduced into the material and fixed by means of heat and/or with the aid of an alkaline agent, which comprises using as the dye a compound conforming to the general formula (1) of claim 1.

## Revendications

**Revendications pour les Etats contractants suivants : DE, GB, FR, IT, NL, CH, LI, BE, AT**

**1.** Composé de type complexe de cuivre-formazane répondant à la formule générale (1)

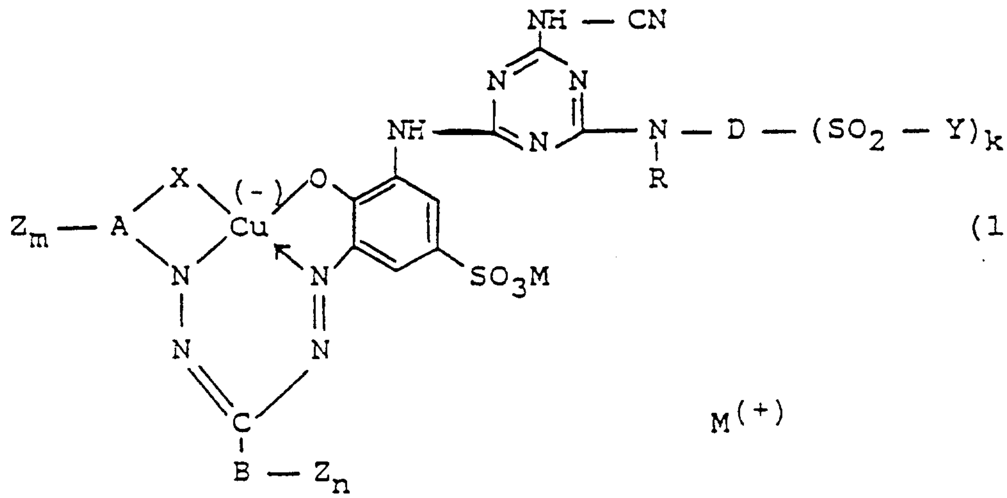

(1)

dans laquelle :

A est un cycle de benzène ou de naphtalène, les deux cycles pouvant être substitués par des substituants pris dans le groupe comprenant les halogène, nitro, alkyle comportant de 1 à 5 atomes de carbone, alcoxy comportant de 1 à 4 atomes de carbone, alkylsulfonyle comportant de 1 à 4 atomes de carbone, phénylsulfonyle, sulfamoyle, N-monoalkyl- et N,N-dialkyl-sulfamoyle comportant chaque fois de 1 à 4 atomes de carbone dans l'alkyle ;

B est un groupe alcényle linéaire ou ramifié comportant de 1 à 8 atomes de carbone, de préférence de 1 à 4 atomes de carbone, ou un groupe alcénylène linéaire ou ramifié comportant de 2 à 8 atomes de carbone, de préférence de 2 à 4 atomes de carbone, ces groupes alkylène et alcénylène pouvant encore être substitués par un radical phényle et ce radical phényle pouvant encore être substitué par des substituants pris dans le groupe des radicaux méthyle, éthyle, méthoxy, éthoxy, fluor, brome, chlore et sulfamoyle, ou est un radical alkylène-phénylène comportant de 1 à 4 atomes de carbone dans la partie alkylène ou est un radical alcénylène-phénylène comportant de 2 à 4 atomes de carbone dans la partie alcénylène, le radical phénylène pouvant être substitué par des substituants pris dans le groupe des radicaux méthyle, éthyle, méthoxy, éthoxy, fluor, chlore, brome et sulfamoyle, ou est un radical phénylène ou naphtylène, de préférence un radical phénylène, les deux radicaux pouvant être substitués par des substituants pris dans le groupe des radicaux hydroxy, nitro, halogène, alkyle comportant de 1 à 5 atomes de carbone, alcoxy comportant de 1 à 4 atomes de carbone et carbalcoxy comportant de 1 à 4 atomes de carbone dans le radical alkyle, ou est un radical bivalent du furanne, du thiophène, du pyrrole, de l'imidazole, de l'indole, du pyrazole, de la pyridine, de la pyrimidine, de la quinoléine et du benzimidazole ou

-B-Z signifient ensemble un atome d'hydrogène ;

Z est un groupe hydrosolubilisant, de préférence un groupe sulfo, en tant qu'un substituant supplémentaires sur A et B aux substituants de A et B mentionnés ci-dessus, qui est lié sur un atome de carbone aromatique ou sur un atome de carbone aliphatique de A ou B ou sur un atome de carbone aliphatique d'un substituant de A ;

k est le nombre 1 ou 2, de préférence 1 ;

m est le nombre zéro, 1 ou 2 (dans le cas de m étant zéro, le groupe Z signifie un atome d'hydrogène) ;

n est le nombre zéro, 1 ou 2 (dans le cas n étant zéro, le groupe Z signifie un atome d'hydrogène) ;

la somme de (m + n) est égale à 1 à 4 ;

dans la mesure où Z est contenu dans la molécule 2 ou 3 fois, il peut avoir des significations

différentes dans le cadre de la signification donnée ;

X est un atome d'oxygène ou un groupe carbonyloxy de formule -CO-O-, le groupe X et l'atome de N pouvant être liés sur le noyau aromatique de A en position ortho l'un par rapport à l'autre ;

R est un atome d'hydrogène ou un groupe alkyle non substitué ou substitué, comportant de 1 à 4 atomes de carbone ;

D est un radical phénylène, qui peut être substitué, ou un radical naphtylène, qui peut être substitué, ou est un radical alkylène comportant de 1 à 8 atomes de carbone, ou un radical alkylène comportant de 2 à 8 atomes de carbone, qui peut être interrompu par un ou plusieurs groupes hétéro et/ou par 1 ou 2 substituants pris dans le groupe comprenant les hydroxy, sulfo, carboxy, sulfato, phosphato et alcanoyloxy comportant de 2 à 5 atomes de carbone, ou est un radical de formule générale (2a), (2b), (2c), (2d), (2e), (2f), (2g) ou (2h).

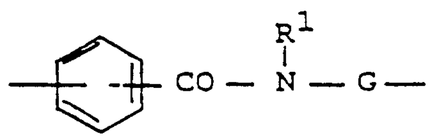 (2a)

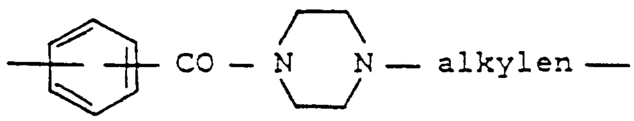 (2b)

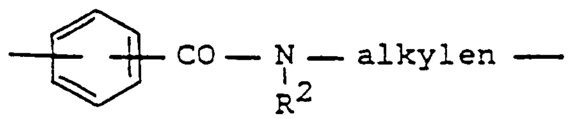 (2c)

— arylen — alkylen — (2d)

— alkylen — arylen — (2e)

— arylen — alkylen — arylen — (2f)

— alkylen — arylen — alkylen — (2g)

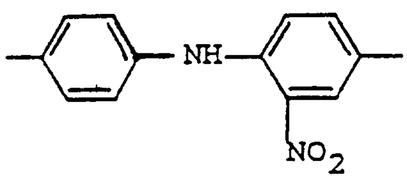 (2h)

dans lesquelles

$R^1$ est l'hydrogène ou un alkyle comportant de 1 à 4 atomes,

$R^2$ est l'hydrogène ou un alkyle comportant de 1 à 4 atomes de carbone, qui peut être substitué par un groupe de formule générale $-SO_2-Y$ avec Y ayant la signification donnée ci-après ou par un carboxy, un sulfato, un méthoxy, un éthoxy ou un chlore, ou est un phényle qui peut être substitué par 1 ou 2 substituants pris dans le groupe comprenant les méthyle, méthoxy, éthoxy, sulfo, carboxy et chlore,

G est un radical phényle qui peut être substitué par 1 ou 2 substituants pris dans le groupe comprenant les chlore, alkyle comportant de 1 à 4 atomes de carbone, alcoxy comportant de 1 à 4 atomes de carbone, hydroxy, sulfo et carboxy,

arylen est un radical phénylène, qui peut être substitué par 1 ou 2 substituants pris dans le groupe comprenant les chlore, brome, nitro, alcoxy comportant de 1 à 4 atomes de carbone, alkyle comportant de 1 à 4 atomes de carbone, carboxy et sulfo, ou est un radical naphtylène qui peut être substitué par 1 ou 2 groupes sulfo,

alkylen est un radical alkylène comportant de 1 à 8 atomes de carbone, ou est un radical alkylène comportant de 2 à 8 atomes de carbone qui est interrompu par un ou plusieurs groupes hétéro et/ou est substitué par 1 ou 2 substituants pris dans le groupe comprenant les hydroxy, sulfo, carboxy, sulfato, phosphato et alcanoyloxy comportant de 2 à 5 atomes de carbone, et

les parties alkylène et arylène dans les radicaux de formules générales de (2d) à (2g) peuvent chaque fois être séparés l'un de l'autre par un des groupes hétéro cités ci-dessus ;

Y est le groupe vinyle ou un groupe éthyle, qui est substitué dans la position $\beta$ par un substituant éliminable par des alcalis ;

M est un atome d'hydrogène ou un métal alcalin ou l'équivalent d'un métal alcalino-terreux.

2. Composé selon la revendication 1, caractérisé en ce que A est un cycle de benzène.

3. Composé selon la revendication 1 ou 2, caractérisé en ce que B est un radical phénylène.

4. Composé selon au moins une des revendications 1 à 3, caractérisé en ce que D est un radical phénylène non substitué ou substitué par des substituants pris dans le groupe comprenant les hydroxy, nitro, chlore, brome, fluor, alcoxy comportant de 1 à 4 atomes de carbone, alkyle comportant de 1 à 4 atomes de carbone, sulfo, carboxy, $\beta$-sulfato-éthyl-thio, alkylamino et dialkylamino comportant chaque fois de 1 à 4 atomes de carbone dans le radical alkyle, un ou les deux groupes alkyle de l'alkylamino et du dialkylamino pouvant être substitués par des hydroxy, sulfo, carboxy, sulfato, phosphato, alcoxy comportant de 1 à 4 atomes, alcoxy-alcoxy comportant chaque fois de 1 à 4 atomes de carbone dans le radical alkyle ou alkylène, hydroxy-alcoxy comportant de 1 à 4 atomes de carbone dans le radical alkylène, sulfato-alcoxy comportant de 1 à 4 atomes de carbone dans le radical alkylène et succinylamido.

5. Composé selon au moins une des revendications 1 à 4, caractérisé en ce Y est le groupe vinyle ou un groupe $\beta$-chloro-éthyle ou $\beta$-bromo-éthyle ou un groupe $\beta$-alcanoyloxy-éthyle avec un radical alcanoyle comportant de 2 à 5 atomes de carbone ou un groupe $\beta$-benzoyloxy-éthyle ou $\beta$-sulfobenzoyloxy-éthyle ou $\beta$-(p-méthyl-phénylsulfonyloxy)-éthyle ou un groupe $\beta$-dialkylamino-éthyle contenant des radicaux alkyle comportant de 1 à 4 atomes de carbone, ou un groupe $\beta$-phosphato-éthyle ou $\beta$-thiosulfato-éthyle ou $\beta$-sulfato-éthyle.

6. Composé selon la revendication 1 répondant à la formule générale (1a) :

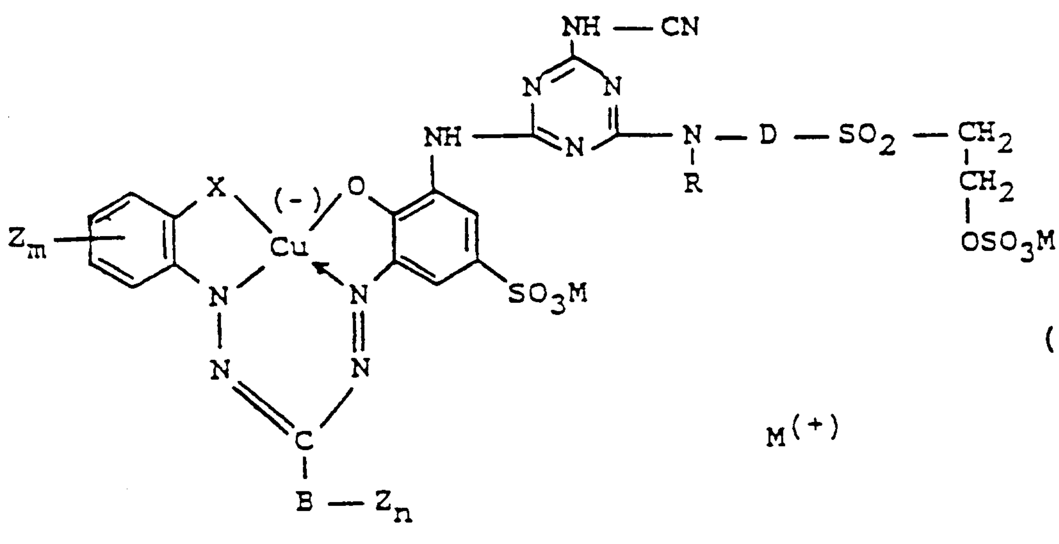

(1a)

dans laquelle :

X est un atome d'oxygène ou un groupe carbonyloxy ;

B est un cycle de benzène qui peut être substitué par le chlore, le méthyle, le méthoxy ou l'éthoxy ;
Z est un groupe sulfo ;
m est le nombre 1 ou 2, de préférence 1 ;
n est le nombre zéro ou 1, de préférence zéro ;
la somme de (m + n) est 1 ou 2, de préférence 1 ;
R est un atome d'hydrogène ou un groupe alkyle comportant de 1 à 4 atomes de carbone, ;
D est le radical méta- ou para-phénylène ;
M est un atome d'hydrogène ou un métal alcalin.

**7.** Composé selon la revendication 1 répondant à la formule générale (1b) :

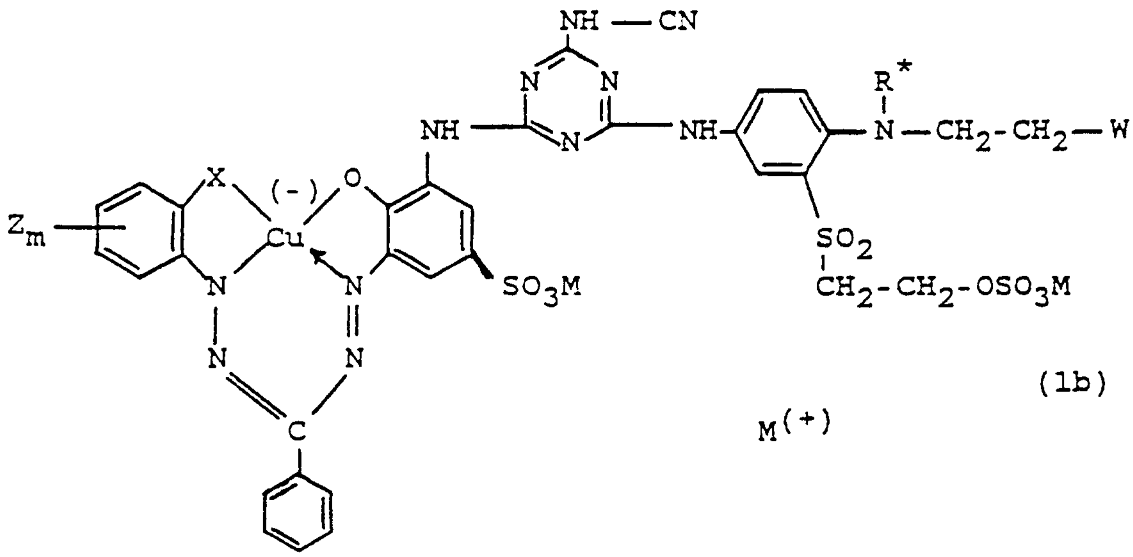

(1b)

dans laquelle :
X est un atome d'oxygène ou un groupe carbonyloxy ;
Z est un groupe sulfo ;
m est le nombre 1 ou 2, de préférence 1 ;
R* est un atome d'hydrogène ou le groupe méthyle ;
W est le groupe sulfato ou sulfo ou le groupe $\beta$-sulfato-éthoxy ou le groupe succinylamido ;
M est un atome d'hydrogène ou un métal alcalin.

**8.** Composé selon au moins une des revendications 1 à 7, caractérisé en ce que X est le groupe carbonyloxy.

**9.** Composé selon au moins une des revendications 1 à 6 et 8, caractérisé en ce que D est le radical m-phénylène.

**10.** Composé selon la revendication 1 répondant à la formule générale (1c) :

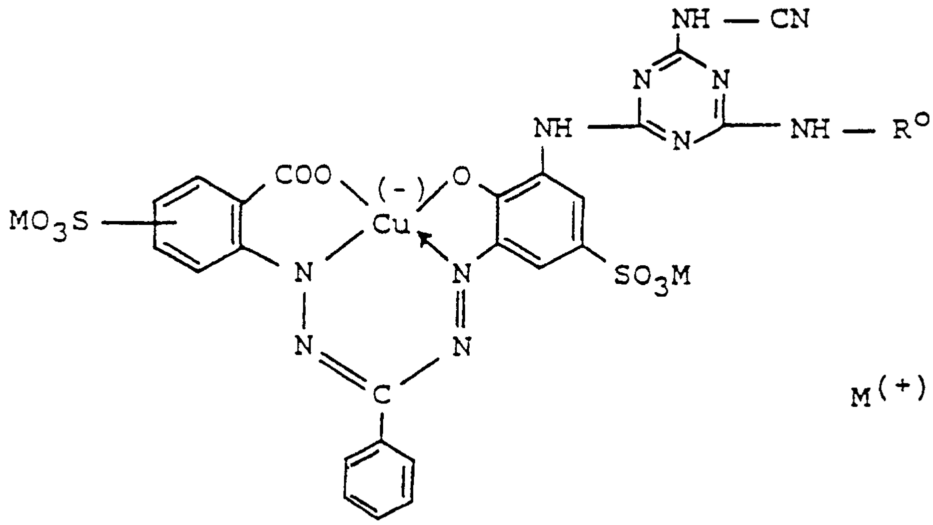

(1c)

dans laquelle

M  est un atome d'hydrogène ou un métal alcalin,

R° est le groupe 4-(β-sulfato-éthylsulfonyl)-phényle, 2-chloro-5-(β-sulfato-éthylsulfonyl)-phényle, 2-méthoxy-5-(β-sulfato-éthylsulfonyl)-phényle, 4-chloro-3-(β-sulfato-éthylsulfonyl)-phényle, 4-méthoxy-3-(β-sulfato-éthylsulfonyl)-phényle, ou de préférence le groupe 3-(β-sulfato-éthylsulfonyl)-phényle.

**11.** Composé selon la revendication 10 caractérisé en ce que le groupe sulfo $-SO_3M$ est en position para par rapport au groupe carbonyloxy.

**12.** Procédé pour la préparation d'un composé de type complexe de cuivre-formazane selon la revendication 1, dans lequel D est un radical phénylène ou naphtylène éventuellement substitué, ou un radical de formule générale (2a), (2b), (2c), (2d), (2f), ou (2h), caractérisé en ce qu'on fait réagir un composé dihalogénotriazinylamino-formazane de cuivre de formule générale (3) :

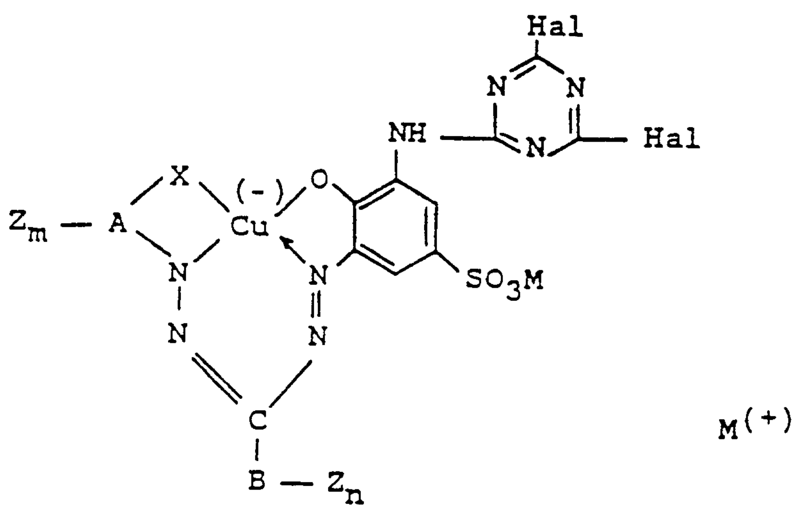

(3)

dans laquelle Z, m, n, A, B, X et M ont les significations données dans la revendication 1 et Hal représente un atome d'halogène, de préférence l'atome de chlore, avec le cyanamide ou son sel de métal alcalin et avec un composé amino aromatique de formule générale (4)

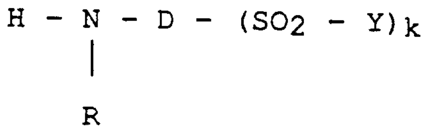

(4)

dans laquelle R, k et Y ont les significations données dans la revendication 1 et D a la signification ci-dessus, ou en ce qu'on fait réagir un composé de formule générale (5)

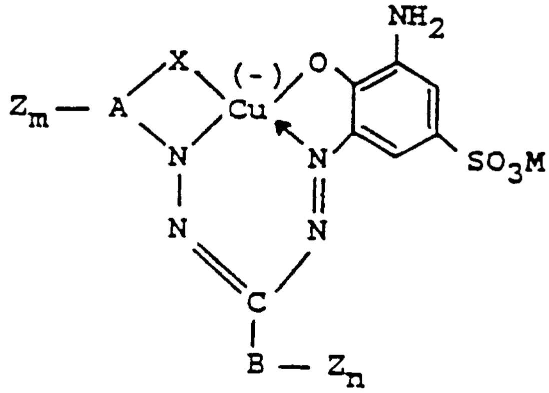

(5)

$M^{(+)}$

dans laquelle Z, m, n, A, B, X et M ont les significations données dans la revendication 1, avec un composé dihalogénotriazinylamino de formule générale (6) :

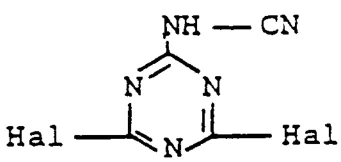

(6)

dans laquelle Hal a la signification donnée ci-dessus, et en ce qu'on fait réagir le composé de cuivre-formazane de formule générale (7) :

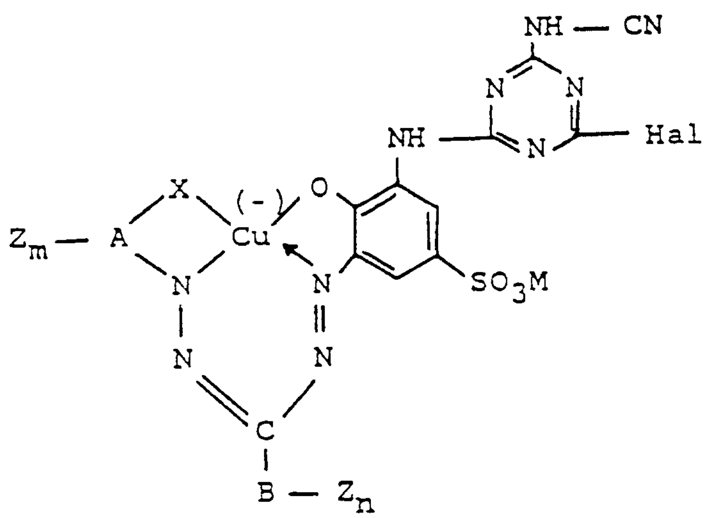

(7)

$M^{(+)}$

dans laquelle Z, m, n, A, B, X, M et Hal ont les significations données dans la revendication 1 ou ci-dessus, avec un composé amino de formule générale (4) avec D ayant la définition que l'on vient de

mentionner, ou en ce que, pour la préparation d'un composé de formule générale (1) avec D ayant la signification donnée dans la revendication 1, on fait réagir un composé de formule générale (5) avec un composé de formule générale (6A) :

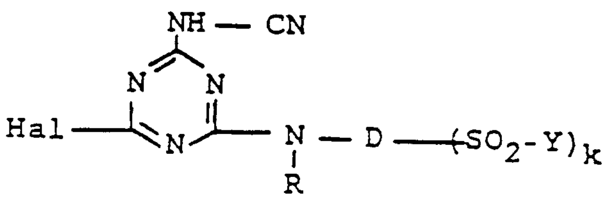

(6A)

dans laquelle Hal, R, D, Y et k ont les significations données dans la revendication 1.

**13.** Utilisation d'un composé répondant à la formule générale (1) de la revendication 1 pour la teinture (y compris l'impression) de matières contenant des groupes hydroxy et/ou carboxamido, plus particulièrement des matières fibreuses.

**14.** Procédé pour la teinture (y compris l'impression) de matières contenant des groupes hydroxy ou carboxamido, plus particulièrement des matières fibreuses, selon lequel on dépose un colorant sur la matière ou on l'introduit dans la matière et on le fixe au moyen de la chaleur et/ou à l'aide d'un agent à action alcaline, caractérisé en ce qu'on utilise en tant que colorant un composé répondant à la formule générale (1) de la revendication 1.

**Revendications pour l'Etat contractant suivant : ES**

**1.** Procédé pour la préparation d'un composé de type complexe de cuivre-formazane répondant à la formule générale (1) :

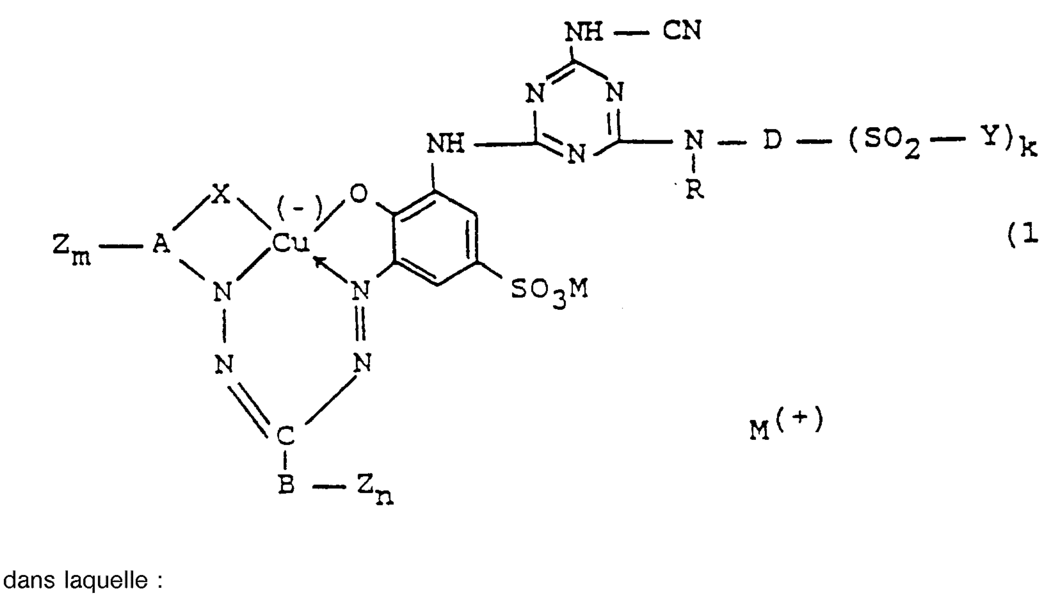

(1)

dans laquelle :

A est un cycle de benzène ou de naphtalène, les deux cycles pouvant être substitués par des substituants pris dans le groupe comprenant les halogène, nitro, alkyle comportant de 1 à 5 atomes de carbone, alcoxy comportant de 1 à 4 atomes de carbone, alkylsulfonyle comportant de 1 à 4 atomes de carbone, phénylsulfonyle, sulfamoyle, N-monoalkyl- et N,N-dialkyl-sulfamoyle comportant chaque fois de 1 à 4 atomes de carbone dans l'alkyle ;

B est un groupe alkyléne linéaire ou ramifié comportant de 1 à 8 atomes de carbone, de préférence de 1 à 4 atomes de carbone, ou un groupe alcénylène linéaire ou ramifié comportant de 2 à 8 atomes de carbone, de préférence de 2 à 4 atomes de carbone, ces groupes alkylène et alcénylène pouvant encore être substitués par un radical phényle et ce

radical phényle pouvant encore être substitué par des substituants pris dans le groupe des radicaux méthyle, éthyle, méthoxy, éthoxy, fluor, brome, chlore et sulfamoyle, ou est un radical alkylène-phénylène comportant de 1 à 4 atomes de carbone dans la partie alkylène ou un radical alcénylène-phénylène comportant de 2 à 4 atomes de carbone dans la partie alcénylène, le radical phénylène pouvant être substitué par des substituants pris dans le groupe des radicaux méthyle, éthyle, méthoxy, éthoxy, fluor, chlore, brome et sulfamoyle, ou est un radical phénylène ou naphtylène, de préférence un radical phénylène, les deux radicaux pouvant être substitués par des substituants pris dans le groupe des radicaux hydroxy, nitro, halogène, alkyle comportant de 1 à 5 atomes de carbone, alcoxy comportant de 1 à 4 atomes de carbone et carbalcoxy comportant de 1 à 4 atomes de carbone dans le radical alkyle, ou est le radical bivalent du furanne, du thiophène, du pyrrole, de l'imidazole, de l'indole, du pyrazole, de la pyridine, de la pyrimidine, de la quinoléine et du benzimidazole, ou

-B-Z signifient ensemble un atome d'hydrogène ;

Z est un groupe hydrosolubilisant, de préférence un groupe sulfo, en tant qu'un substituant supplémentaire sur A et B aux substituants de A et B mentionnés ci-dessus, qui est lié sur un atome de carbone aromatique ou sur un atome de carbone aliphatique de A ou B ou sur un atome de carbone aliphatique d'un substituant de A ;

k est le nombre 1 ou 2, de préférence 1 ;

m est le nombre zéro, 1 ou 2 (dans le cas de m étant zéro, le groupe Z signifie un atome d'hydrogène) ;

n est le nombre zéro, 1 ou 2 (dans le cas n étant zéro, le groupe Z signifie un atome d'hydrogène) ;

la somme de (m + n) est égale à 1 à 4 ;

dans la mesure où Z est contenu dans la molécule 2 ou 3 fois, il peut avoir des significations différentes dans le cadre de la signification donnée ;

X est un atome d'oxygène ou un groupe carbonyloxy de formule -CO-O-, le groupe X et l'atome de N pouvant être liés sur le noyau aromatique de A en position ortho l'un par rapport à l'autre ;

R est un atome d'hydrogène ou un groupe alkyle non substitué ou substitué comportant de 1 à 4 atomes de carbone ;

D est un radical phénylène qui peut être substitué, ou un radical naphtylène, qui peut être substitué, ou est un radical alkylène comportant de 1 à 8 atomes de carbone, ou est un radical alkylène comportant de 2 à 8 atomes de carbone, ou un radical alkylène comportant de 2 à 8 atomes de carbone, qui peut être interrompu par un ou plusieurs groupes hétéro et/ou par 1 ou 2 substituants pris dans le groupe comprenant les hydroxy, sulfo, carboxy, sulfato, phosphato et alcanoyloxy comportant de 2 à 5 atomes de carbone, ou est un radical de formule générale (2a), (2b), (2c), (2d), (2e), (2f), (2g) ou (2h).

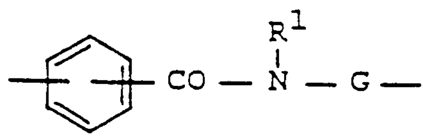

(2a)

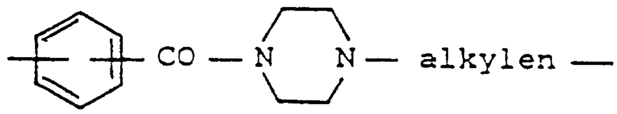

(2b)

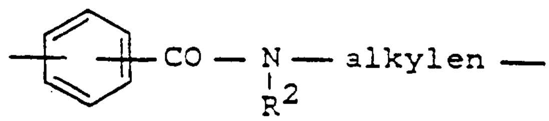

(2c)

— arylen — alkylen — (2d)

— alkylen — arylen — (2e)

— arylen — alkylen — arylen — (2f)

— alkylen — arylen — alkylen — (2g)

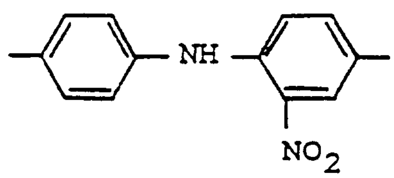

(2h)

dans lesquelles

- $R^1$ est l'hydrogène ou un alkyle comportant de 1 à 4 atomes de carbone,
- $R^2$ est l'hydrogène ou un alkyle comportant de 1 à 4 atomes de carbone, qui peut être substitué par un groupe de formule générale $-SO_2-Y-$ avec Y ayant la signification donnée ci-après, ou par des carboxy; sulfato, méthoxy, éthoxy ou chlore, ou est un phényle qui peut être substitué par 1 ou 2 substituants pris dans le groupe comprenant les méthyle, méthoxy, éthoxy, sulfo, carboxy et chlore,
- G est un radical phényle qui peut être substitué par 1 ou 2 substituants pris dans le groupe comprenant les chlore, alkyle comportant de 1 à 4 atomes de carbone, alcoxy comportant de 1 à 4 atomes de carbone, hydroxy, sulfo et carboxy,

arylen est un radical phénylène, qui peut être substitué par 1 ou 2 substituants pris dans le groupe comprenant les chlore, brome, nitro, alcoxy comportant de 1 à 4 atomes de carbone, alkyle comportant de 1 à 4 atomes de carbone, carboxy et sulfo, ou est un radical naphtylène qui peut être substitué par 1 ou 2 groupes sulfo,

alkylen est un radical alkylène comportant de 1 à 8 atomes de carbone ou un radical alkylène comportant de 2 à 8 atomes de carbone, qui est interrompu par un ou plusieurs groupes hétéro et/ou substitué par 1 ou 2 substituants pris dans le groupe comprenant les hydroxy, sulfo, carboxy, sulfato, phosphato et alcanoyloxy comportant de 2 à 5 atomes de carbone, et

les parties alkylène et arylène dans les radicaux de formules générales de (2d) à (2g) peuvent chaque fois être séparés l'un de l'autre par un des groupes hétéro cités ci-dessus ;

- Y est le groupe vinyle ou un groupe éthyle, qui est substitué dans la position $\beta$ par un substituant éliminable par des alcalis ;
- M est un atome d'hydrogène ou un métal alcalin ou l'équivalent d'un métal alcalino-terreux :

caractérisé en ce que pour la préparation d'un composé de type complexe de cuivre-formazane dans lequel D est un radical phénylène ou naphtylène éventuellement substitué ou un radical de formule générale (2a), (2b), (2c), (2d), (2f), ou (2h), on fait réagir un composé dihalogénotriazinylaminocuivre-formazane de formule générale (3) :

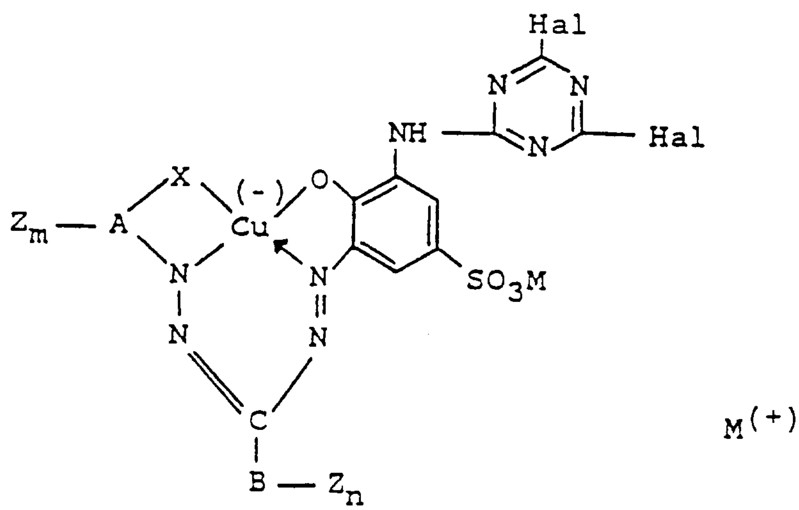

(3)

dans laquelle Z, m, n, A, B, X et M ont les significations données ci-dessus et Hal représente un atome d'halogène, de préférence un atome de chlore, avec un cyanamide ou son sel de métal alcalin et avec un composé amino aromatique de formule générale (4) :

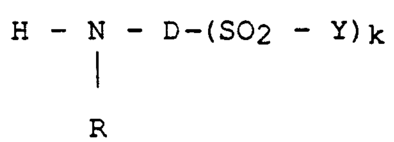

(4)

dans laquelle R, k et Y ont les significations données ci-dessus et D a la signification que l'on vient de donner, ou en ce qu'on fait réagir un composé de formule générale (5) :

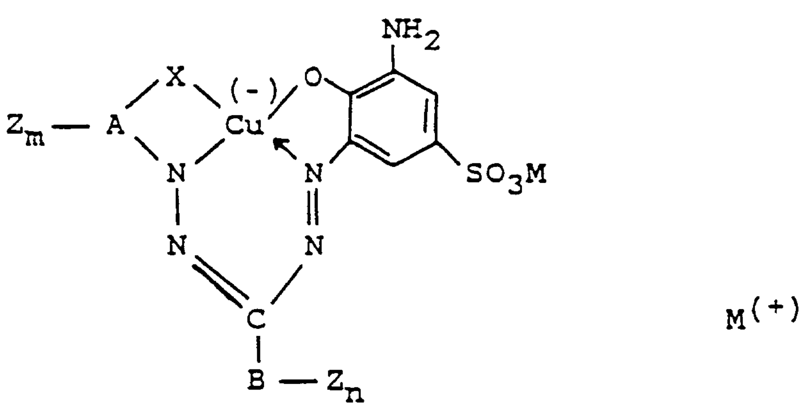

(5)

dans laquelle Z, m, n, A, B, X et M ont les significations données ci-dessus, avec un composé dihalogéno-triazinylamino de formule générale (6) :

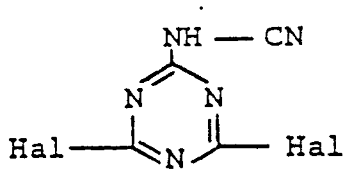

(6)

dans laquelle Hal a la signification donnée ci-dessus, et en ce qu'on fait réagir le composé de cuivre-formazane ainsi obtenu de formule générale (7) :

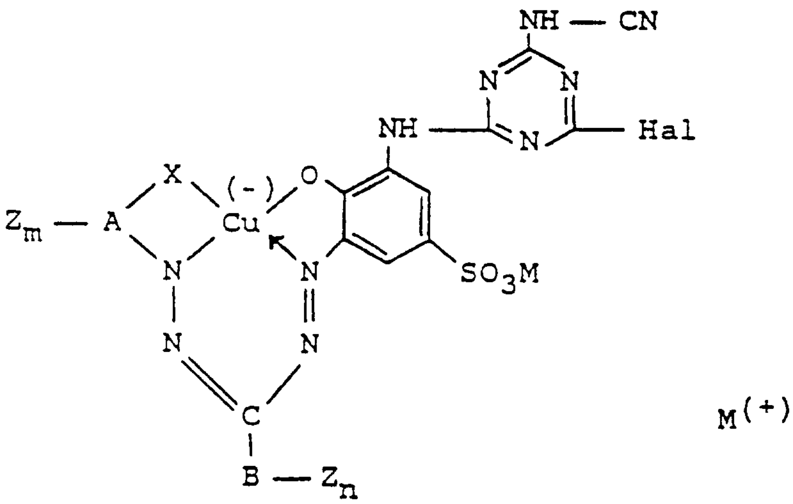

(7)

dans laquelle Z, m, n, A, B, X, M et Hal ont les significations données ci-dessus, avec un composé amino de formule générale (4) avec D ayant la signification que l'on vient de mentionner, ou en ce que, pour la préparation d'un composé de formule générale (1) avec D ayant la signification donnée dans la formule (1), on fait réagir un composé de formule générale (5) avec un composé de formule générale (6A) :

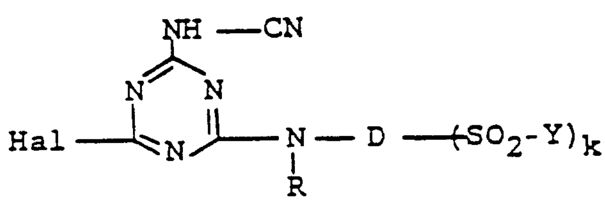

(6A)

dans laquelle Hal, R, D, Y et k ont les significations données ci-dessus.

2. Procédé selon la revendication 1 caractérisé en ce que A est un cycle de benzène.

3. Procédé selon la revendication 1 ou 2, caractérisé en ce que B est un radical phénylène.

4. Procédé selon au moins une des revendications 1 à 3, caractérisé en ce que D est un radical phénylène, qui est non substitué ou substitué par des substituants pris dans le groupe comprenant les hydroxy, nitro, chlore, brome, fluor, alcoxy comportant de 1 à 4 atomes de carbone, alkyle comportant de 1 à 4 atomes de carbone, sulfo, carboxy, $\beta$-sulfato-éthyl-thio, alkylamino et dialkylamino comportant chaque fois de 1 à 4 atomes de carbone dans le radical alkyle, un ou les deux groupes alkyle de l'alkylamino et du dialkylamino pouvant être substitués par des hydroxy, sulfo, carboxy, sulfato, phosphato, alcoxy comportant de 1 à 4 atomes de carbone, alcoxy-alcoxy comportant chaque fois de 1 à 4 atomes de carbone dans le radical alkyle ou alkylène, hydroxy-alcoxy comportant de 1 à 4 atomes de carbone dans le radical alkylène, sulfato-alcoxy comportant de 1 à 4 atomes de carbone dans le

radical alkylène, et succinylamido.

**5.** Procédé selon au moins une des revendications 1 à 4 caractérisé en ce que Y est le groupe vinyle ou un groupe β-chloro-éthyle ou β-bromo-éthyle, ou un groupe β-alcanoyloxy-éthyle avec un radical alcanoyle comportant de 2 à 5 atomes de carbone, ou un groupe β-benzoyloxy-éthyle ou β-sulfo-benzoyloxy-éthyle ou β-(p-méthyl-phénylsulfonyloxy)-éthyle, ou un groupe β-dialkylamino-éthyle avec des radicaux alkyle comportant de 1 à 4 atomes de carbone, ou un groupe β-phosphato-éthyle ou β-thiosulfato-éthyle ou β-sulfato-éthyle.

**6.** Procédé selon la revendication 1, caractérisé en ce que le composé de formule (1) est un composé répondant à la formule générale (1a) :

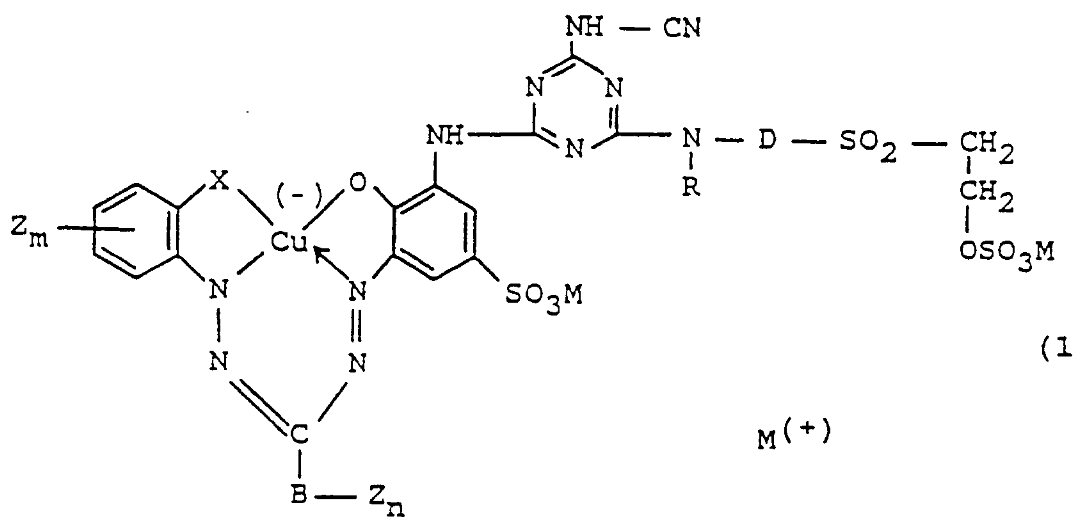

(1a)

dans laquelle :

X  est un atome d'oxygène ou un groupe carbonyloxy ;
B  est un cycle de benzène qui peut être substitué par les chlore, méthyle, méthoxy ou éthoxy ;
Z  est un groupe sulfo ;
m  est le nombre 1 ou 2, de préférence 1 ;
n  est le nombre zéro ou 1, de préférence zéro ;
la somme de (m + n) est 1 ou 2, de préférence 1 ;
R  est un atome d'hydrogène ou un groupe alkyle comportant de 1 à 4 atomes de carbone ;
D  est le radical méta- ou para-phénylène ;
M  est un atome d'hydrogène ou un métal alcalin.

**7.** Procédé selon la revendication 1, caractérisé en ce que le composé de formule (1) est un composé de formule générale (1b) :

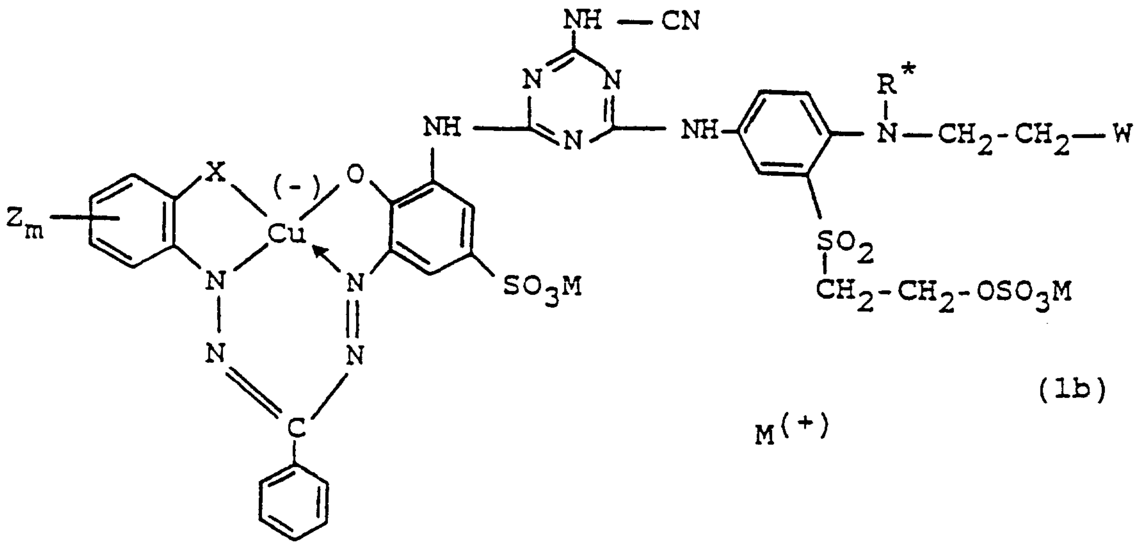

(1b)

dans laquelle :

X est un atome d'oxygène ou un groupe carbonyloxy ;

Z est un groupe sulfo ;

m est le nombre 1 ou 2, de préférence 1 ;

R* est un atome d'hydrogène ou le groupe méthyle ;

W est un groupe sulfato ou sulfo ou le groupe $\beta$-sulfato-éthoxy ou le groupe succinylamido ;

M est un atome d'hydrogène ou un métal alcalin.

**8.** Procédé selon au moins une des revendications 1 à 7, caractérisé en ce que X est le groupe carbonyloxy.

**9.** Procédé selon au moins une des revendications 1 à 6 et 8, caractérisé en ce que D est le radical m-phénylène.

**10.** Procédé selon la revendication 1, caractérisé en ce que le composé de formule (1) est un composé répondant à la formule générale (1c) :

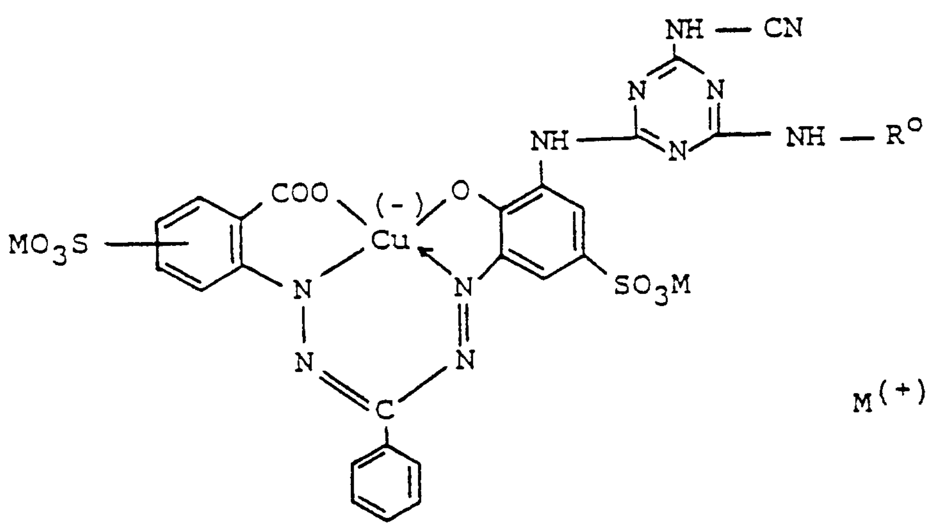

(1c)

dans laquelle

M est un atome d'hydrogène ou un métal alcalin,

R° représente les groupes 4-($\beta$-sulfato-éthylsulfonyl)-phényle, 2-chloro-5-($\beta$-sulfato-éthylsulfonyl)-phényle, 2-méthoxy-5-($\beta$-sulfato-éthylsulfonyl)-phényle, 4-chloro-3-($\beta$-sulfato-éthylsulfonyl)-

phényle, 4-méthoxy-3-(β-sulfato-éthylsulfonyl)-phényle, ou de préférence le groupe 3-(β-sulfato-éthylsulfonyl)-phényle.

**11.** Procédé selon la revendication 10, caractérisé en ce que le groupe sulfo $-SO_3M$ est en position para par rapport au groupe carbonyloxy.

**12.** Utilisation d'un composé répondant à la formule générale (1) de la revendication 1 pour la teinture (y compris l'impression) de matières contenant des groupes hydroxy et/ou carboxamido, plus particulièrement des matières fibreuses.

**13.** Procédé pour la teinture (y compris l'impression) de matières contenant des groupes hydroxy et/ou carboxamido, plus particulièrement des matières fibreuses, selon lequel on applique sur la matière un colorant ou on l'introduit dans la matière et on le fixe au moyen de la chaleur et/ou à l'aide d'un agent à action alcaline, caractérisé en ce qu'on utilise en tant que colorant un composé répondant à la formule générale (1) de la revendication 1.